(12) **EUROPEAN PATENT SPECIFICATION**

(45) Date of publication and mention
of the grant of the patent:
**22.05.2002 Bulletin 2002/21**

(51) Int Cl.⁷: **G05D 1/00**, G05D 1/02,
G01S 5/14, G01C 21/16

(21) Application number: **95110798.6**

(22) Date of filing: **10.12.1990**

(54) **Integrated vehicle positioning and navigation system, apparatus and method**

Integriertes Fahrzeugpositionier- und -navigationssystem; dessen Vorrichtung und Verfahren

Procédé, appareil et système de navigation et de positionnement intégrés pour véhicules

(84) Designated Contracting States:
**DE FR GB SE**

(30) Priority: **11.12.1989 WOPCT/US89/05580**

(43) Date of publication of application:
**02.11.1995 Bulletin 1995/44**

(60) Divisional application:
**99106271.2 / 0 936 517**
**99106272.0 / 0 936 518**
**99106273.8 / 0 936 519**
**99106274.6 / 0 936 520**
**99106275.3 / 0 936 521**
**00100132.0 / 0 996 047**

(62) Document number(s) of the earlier application(s) in
accordance with Art. 76 EPC:
**91902277.2 / 0 507 845**

(73) Proprietor: **CATERPILLAR INC.**
**Peoria Illinois 61629-6490 (US)**

(72) Inventors:
• **Kyrtsos, Christos T.**
**Southfield, Michigan 48076 (US)**
• **Gudat, Adam J.**
**Edelstein, Illinois 61516 (US)**
• **Christensen, Dana A.**
**Dunlap, Illinois 61525 (US)**
• **Friedrich, Douglas W.**
**Pekin, Illinois 61554 (US)**
• **Stafford, Darrell E.**
**Dunlap, Illinois 61525 (US)**
• **Sennott, James W.**
**Bloomington, Illinois 61701 (US)**
• **Bradbury, Walter J.**
**Ontario L4B 3G1 (CA)**

• **Clow, Richard G.**
**PMesa, Arizona 85202 (US)**
• **Devier, Lonnie J.**
**Dunlap, Illinois 61525 5213 (US)**
• **Kemner, Carl A.**
**Peoria Heights, Illinois 61614 (US)**
• **Kleimenhagen, Karl W.**
**Peoria, Illinois 61614 (US)**
• **Koehrsen, Craig L.**
**Peoria, Illinois 61604 (US)**
• **Lay, Norman K.**
**Peoria, Illinois 61615 (US)**
• **Peterson, Joel L.**
**East Peoria, Illinois 616115 (US)**
• **Rao, Prithvi N.**
**Pittsburgh, Pennsylvania 15202 (US)**
• **Schmidt, Larry E.**
**Chillicothe, Illinois 61523 (US)**
• **Shaffer, Gary K.**
**Butler, Pennsylvania 16001 (US)**
• **Shi, WenFan**
**Pittsburgh, Pennsylvania 15237 (US)**
• **Shin, Dong Hun**
**Guro-Gui, Guro 1, Dong S Seoul (KR)**
• **Singh, Sanjiv J.**
**Pittsburgh, Pennsylvania 15217 (US)**
• **Weinbeck, Louis J.**
**Livingston, Texas 77351 (US)**
• **West, Jay H.**
**Junction City, Kansas 66441 (US)**
• **Whittaker, William L.**
**Pittsburgh, Pennsylvania 15207 (US)**
• **Wu, BaoXin (NMI)**
**Pittsburgh, Pennsylvania 15217 (US)**

EP 0 679 974 B1

(74) Representative: **Brunner, Michael John**
**GILL JENNINGS & EVERY,**
**Broadgate House,**
**7 Eldon Street**
**London EC2M 7LH (GB)**

(56) References cited:
**EP-A- 0 181 012**          **EP-A- 0 309 293**
**EP-A- 0 341 889**          **WO-A-87/07056**
**DE-A- 3 912 353**          **FR-A- 2 554 612**
**US-A- 4 786 164**          **US-A- 4 809 178**

- **IEEE PLANS '86 POSITION LOCATION AND NAVIGATION SYMPOSIUM, 4-7 NOVEMBER 1986, LAS VEGAS, US, pages 496-504, S. BOSE 'GPS/PLRS aided inertial land navigation system performance'**
- **PROCEEDINGS OF THE IEEE, November 1989 NEW YORK, US, pages 1709-1727, L. SCHUMAN ET AL. 'Applicability of an Augmented GPS for Navigation in the International' Airspace System'**

- **PATENT ABSTRACTS OF JAPAN vol. 13 no. 306 (P-897) ,13 July 1989 & JP-A-01 079679 (TOYOTA) 24 March 1989,**
- **IEEE JOURNAL OF ROBOTICS AND AUTOMATION, vol. 4, no. 3, June 1988 NEW YORK US, pages 241-255, C. ISIK ET AL. 'pilot level of a hierarchical controller for an unmanned mobile robot'**
- **IEEE TRANSACTIONS ON PATTERN ANALYSIS AND MACHINE INTELLIGENCE, vol. 10, no. 5, September 1988 NEW YORK US, pages 648-658, XP 000105751 D. KUAN ET AL. 'Autonomous Robotic Vehicle Road Following'**
- **PROCEEDINGS 1987 IEEE INTERNATIONAL CONFERENCE ON ROBOTICS AND AUTOMATION, 31 MARCH-3 APRIL 1987, RALEIGH, US, SPONSORED BY IEEE COUNCIL ON ROBOTICS AND AUTOMATION; VOL. 2, pages 1121-1130, L. CONWAY ET AL. 'Tele-autonomous systems: methods ans architecture for intermingling autonomous and telerobotic technology'**

**Description**

Background of the Invention

1. Field of the Invention

The present invention relates to positioning systems, and more particularly, to a positioning system and method for determining the terrestrial position of an autonomous vehicle on or near the planet Earth's surface.

2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift. Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

DE-A-3912353 discloses a navigation system for use in autonomous operation of a surface based vehicle which comprises means for outputting driving set values for compensation of driving effects. FR-A-2554612 discloses a navigation method for a surface based vehicle which includes the steps of driving the vehicle over a route to collect data and smoothing the data for use in navigation.

According to the present invention, there is provided a method of navigation adapted for use with a surface based vehicle of the type having an instantaneous center to which all motions can be referenced, for example, conventionally steered, articulated, omni-directional, or skid-steered, exhibiting either oversteeror understeer characteristics, to follow a predetermined path, which method comprises the steps of:

retrieving from a table a given posture comprising a reference path curvature, a desired heading, and desired vehicle position coordinates of the predetermined path; determining a reference steering angle from the reference path curvature;
determining a posture error; characterised by the steps of:

retrieving a maximum velocity from the table; determining a desired steering angle from the reference steering angle and the posture error;
using the desired steering angle to direct the vehicle toward the predetermined path;
determining a commanded speed less than the maximum velocity independently of the preceding steps;
using the commanded speed to control the speed of the vehicle, including stopping the vehicle if necessary; and
safely controlling lateral acceleration during turning by modifying the maximum velocity by referring to the reciprocal of the desired steering angle.

According to the present invention, there is also provided a navigation system adapted for a surface based vehicle of the type having an instantaneous center to which all motions can be referenced, that is, conventionally steered, articulated, omni-directional, or skid-steered, exhibiting either oversteer or understeer characteristics, to follow a predetermined path, which system comprises:

means for retrieving from a table a given posture comprising reference path curvature, desired heading, and desired vehicle position coordinates of the predetermined path;

means for determining a reference steering angle from the reference path curvature;

means for determining a posture error; characterised by:

means for retrieving from a table a maximum velocity;
means for determining a desired steering angle from the reference steering angle and the posture error;
means for using the desired steering angle to direct the vehicle toward the predetermined path;
means for independently determining a commanded speed less than the maximum velocity; and
means for using the commanded speed to control the speed of the vehicle, including stopping the vehicle if necessary; and means for safely controlling lateral acceleration during turning by modifying the maximum velocity by referring to the reciprocal of the desired steering angle.

The present invention as defined in the claims can be better understood with reference to the text and to the following drawings.

Figure 1 illustrates a block diagram of the preferred embodiment of the present invention;
Figure 1A is a block diagram 100A of the operational GPS satellites in the NAVSTAR GPS;
Figure 2 illustrates four, simultaneous, navigation equations regarding four GPS satellites of the NAVSTAR GPS;
Figure 3 is a block diagram of a typical autonomous work site;
Figure 4 is a block diagram of the interrelationships between a navigator, a vehicle VPS architecture, and vehicle controls of the present invention;
Figure 5 is a block diagram illustrating elements in an autonomous control system;
Figure 6 is a block diagram of the operation of a GPS;
Figure 7 is a block diagram of a GPS processing system of the preferred embodiment;
Figure 8 is a flow diagram of the GPS processing system of Figure 7;
Figure 9 is a block diagram of an MPS, including an odometer 902 and an inertial reference unit (IRU) 904;
Figure 10 is a block diagram of the VPS;
Figure 11 is a block diagram of the VPS architecture of Figure 10;
Figure 12 is a diagram of vehicle route definitions;
Figure 13 is a diagram showing the replanning of a path;
Figure 14 is a diagram of an embodiment of the posture ring buffer;
Figure 15 is a block diagram of a path tracking control architecture/hardware;
Figure 16 is a diagram showing relevant postures in steering planning cycle;
Figure 17 is a diagram showing how an error vector including curvature is computed;
Figure 18 is a diagram showing an error vector including curvature is computed with the vehicle path included;
Figure 19 is a context diagram of the navigator of the present invention;
Figure 20 is a context diagram of a path tracking structure;
Figures 21A-21D are data flow summaries of the navigator 406;
Figure 22 is a diagram of selected scan lines in a laser scanner system;
Figure 23 is a diagram of an autonomous vehicle avoiding obstacles;
Figure 24 is a diagram of obstacle;
Figure 25 is a block diagram 4300 of a control system for an autonomous mining vehicle;
Figure 26 is a state diagram showing the transitions between modes of operation of the control system of Figure 25;
Figure 27 is a block diagram of a tele-line of sight remote control system of the preferred embodiment;
Figure 28 is a high level block diagram of a speed control;
Figure 29 is a high level block diagram of a service brakes control circuit of the speed control;
Figure 30 is a block diagram of governor control circuit of the speed control of the preferred embodiment;
Figure 31 is a block diagram of a steering control circuit;
Figure 32 is a block diagram of a park brake control circuit;
Figure 33 is a block diagram of a tricycle steering model used to develop a navigation system;
Figure 34 is a block diagram showing an embodiment of a shutdown circuit of the present invention;
Figure 35 is a communications diagram showing tasks of a navigator;
Figure 36 is a communications diagram showing an embodiment of navigator shared memory of a navigator;

I. Definitions

(1) "Absolute position" in the context of this document refers to a position relative to the center of the Earth. Generally, an absolute position will be in reference to a vehicle or the base station, both on or near the Earth's surface. First, second, and third position estimates are all absolute positions.

(2) "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or $2.9979245898 * 10^8$ m/s.

(3) "Anti-selective availability" refers to a method/technique/process for detecting and compensating for corrupted GPS data in the coarse/acquisition (C/A) mode of modulation.

(4) "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.

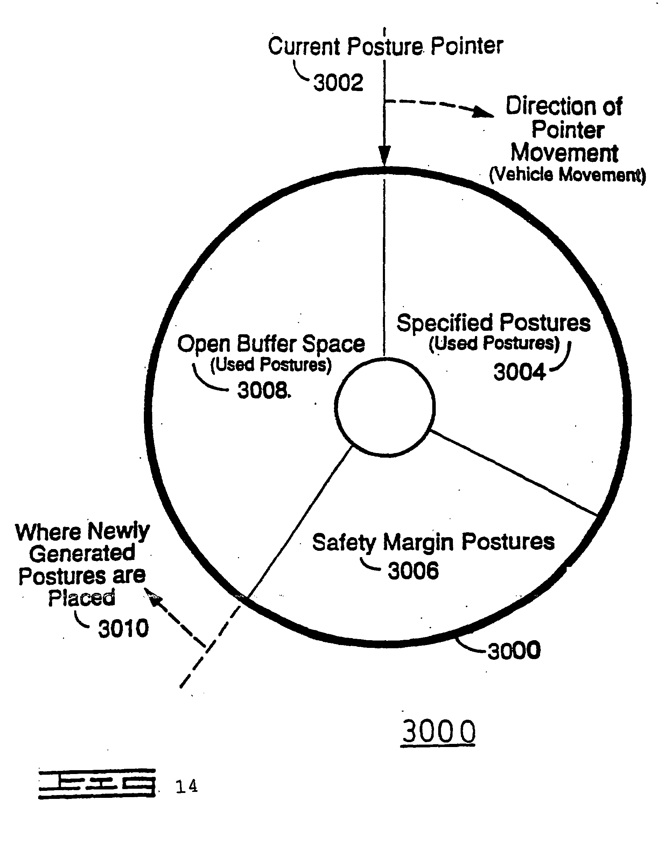

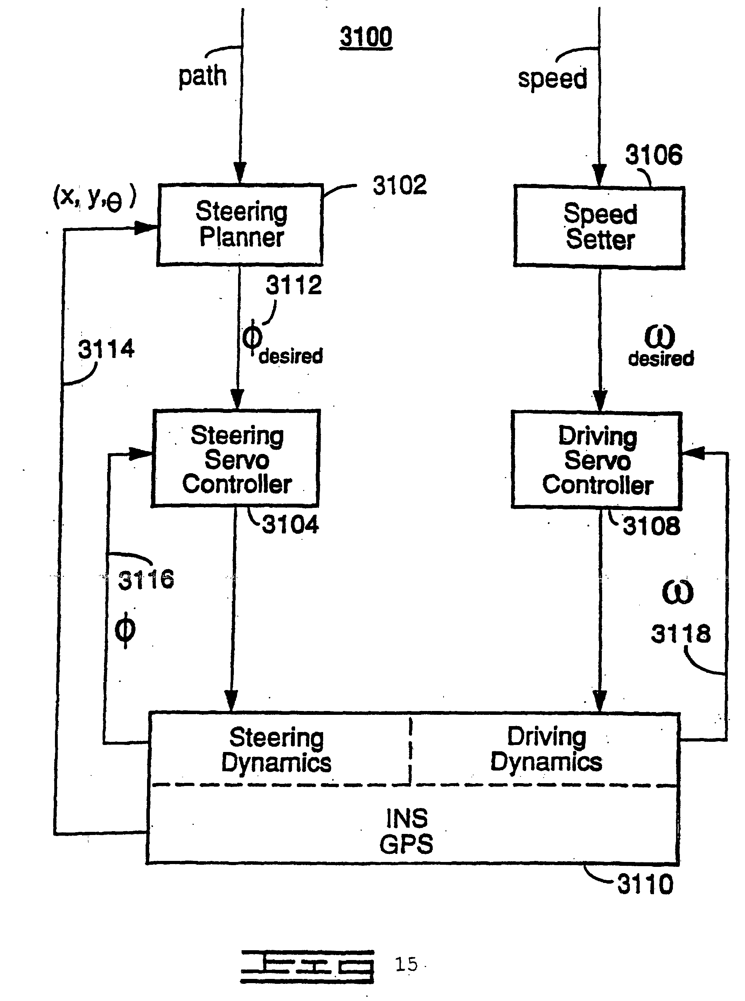

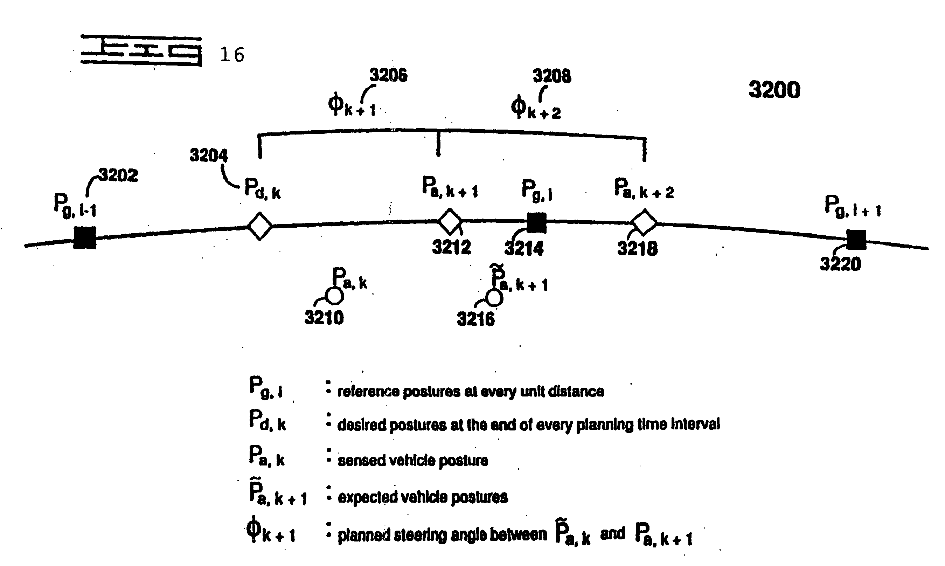

(5) "Base correlator bias" means a spatial bias derived in accord with the flowchart 1700A of Figure 17A.

(6) "Base correlator bias technique" means a method/process for computing base correlator biases.

(7) "Base estimated position" or "BEP" refers to the relative position of the base station with respect to a vehicle. The BEP is used in the base correlator bias technique.

(8) "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.

(9) "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique.

(10) "Base residuals bias" means a spatial bias which is the effective difference in the base known position (BKP) of the base station and the position estimate of the base station which is computed by the host processing system.

(11) "Base residuals bias technique" refers to a method for deriving base residuals biases.

(12) "Bias" refers to a differential between two measurements, usually position estimates (spatial bias) or clock rates (clock bias). Because one measurement is usually known to be more accurate than another, the bias is often times referred to as an "error."

(13) "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or $2.998 * 10^8$ meters per second. Consequently, the clock bias is transformed into units of length.

(14) "Constellation" refers to a group comprised of GPS satellites and/or pseudolites whose signals are utilized to derive an absolute position estimate of a point on or near the Earth's surface. See "optimal constellation" below.

(15) "Constellation effects method" means a technique or process by which an optimal constellation of GPS satellites is selected from a larger group of GPS satellites in view of a vehicle.

**(16)** "Data radio" refers to a transmitter, receiver, transceiver, or any combination thereof, for communicating data at radio frequencies (RF).

**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.

**(18)** "Estimated pseudorange" refers to an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.

**(19)** "First position estimate" or "FPE" or "FPE(i)" refers to an estimated absolute position of any vehicle which is outputted, in any form, from the GPS. The first position estimate and a second position estimate are independently derived in the present invention. Subsequently, these estimates are combined and filtered to derive a third position estimate. Consequently, the accuracy of the first position estimate affects the accuracy of the third position estimate.

**(20)** "GLONASS GPS" refers to the GPS which has been designed and which is currently being deployed by the U.S.S.R.

**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."

**(22)** "GPS data" means all data encoded on signals transmitted from GPS satellites of a GPS. GPS data includes, for example, ephemeris data and time data.

**(23)** "GPS processing system" refers to a system for receiving signals from a terrestrial position determination system and for deriving first position estimates of vehicles from the received signals. The GPS processing system may receive electromagnetic signals from GPS satellites of a GPS and/or from pseudolites.

**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates. The architecture/hardware of the host processing system is substantially similar to the architecture/hardware of the VPS.

**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. The IRU may be part of the MPS.

**(26)** "Kalman filter" is used in its conventional sense. It refers to a software program for filtering out noise or errors in data. A GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.

**(27)** "Motion positioning system" or "MPS" means a system comprising at least an IRU and a vehicle odometer. The MPS derives the second position estimate of any vehicle on or near the Earth's surface. Moreover, an MPS need not be present at the base station due to its stationary nature.

**(28)** "Optimal constellation" means a satellite constellation in which the relative positions of the GPS satellites in space affords superior triangulation capabilities in order to derive the most accurate estimate of a point on or near the Earth's surface.

**(29)** "Original bias" means a spatial bias calculated by subtracting both estimated pseudoranges and clock biases (in units of length) from actual pseudoranges. Clock biases are transformed into units of length by multiplying them by the speed of light, or $2.9979245898 * 10^8$ meters per second.

**(30)** "Original bias technique" is a method for computing original biases.

**(31)** "NAVSTAR GPS" means the GPS which has been designed and which is currently being deployed by the U.S. government.

**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.

**(33)** "Parabolic bias" is a spatial bias computed by constructing parabolic models for the actual pseudoranges of each observed GPS satellite and extrapolating values from the parabolic models. The parabolic biases are the actual pseudoranges minus the value extrapolated from the constructed parabolic models and minus the clock biases (in units of length, via multiplying by the speed of light).

**(34)** "Parabolic bias technique" is a method for computing parabolic biases for each of the GPS satellites that are utilized.

**(35)** "Preferred embodiment" refers to the best mode of implementing the present invention. The preferred embodiment is merely exemplary. The present invention should not be interpreted as being limited by the preferred embodiment.

**(36)** "Pseudolite" refers to a radiating system on or near the Earth's surface for emulating a GPS satellite. Electromagnetic signals, similar to those from GPS satellites, are transmitted from land-based pseudolites. One or more pseudolites can 92 be used to emulate GPS satellites to enhance the computation of first position estimates.

**(37)** "Pseudolite data" means all data encoded on signals received from pseudolites. Pseudolite data resembles GPS data in many respects and includes similar information.

**(38)** "Pseudorange" means the distance between a source of a terrestrial position determination system and a point on or near the Earth's surface. Sources can be GPS satellites and/or pseudolites. The terrestrial position determination system can be a GPS used with pseudolites, if any. Further, the point on or near the Earth's surface can be the base station and/or vehicles.

**(39)** "Satellite position predictor" is a method for determining the future positions of GPS satellites. The method allows for the selection of optimal constellations ahead of time.

**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.

**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias

| technique 1500, | a parabolic bias |
| technique 1600, | a base residuals bias |
| technique 1700, | and a base correlator bias technique 1700A. |

(42) "System" is used for shorthand purposes to mean apparatus, method, or a combination of both apparatus and method. Moreover, it could include software, hardware, or a combination of hardware and software.

(43) "Position determination system" means any system having sources which emanate signals which can be used by a receiver of the signals to estimate the relative distance between the sources and the receiver. The signals may be in the form of, for example, electromagnetic waves, percussion waves, and/or sound waves.

(44) "Terrestrial position determination system" means any position determination system which can be used to ultimately estimate the terrestrial position of an Earth receiver. The signals may be in the form of, for example, electromagnetic waves, percussion waves, and/or sound waves. The terrestrial position determination system is the NAVSTAR GPS.

(45) "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.

(46) "Vehicle" means any carrier for the transportation of physical things. Vehicles may take the form of mining trucks, construction trucks, farm tractors, automobiles, ships, boats, trains, balloons, missiles, or aircraft. In the preferred embodiment, a Caterpillar Inc. 785 off-highway truck is utilized.

(47) "Vehicle positioning system" or "VPS" refers to the system deriving position estimates of any vehicle. The position estimates from the VPS are extremely accurate and can be used by a navigation system on any vehicle to accurately guide the vehicle. Position estimates from the VPS are referred to as third position estimates.

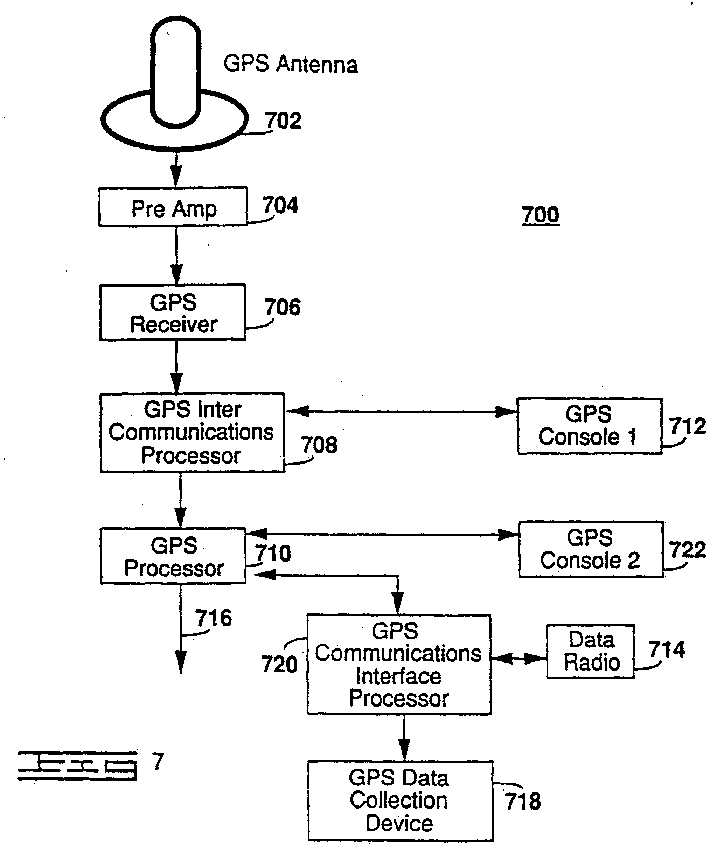

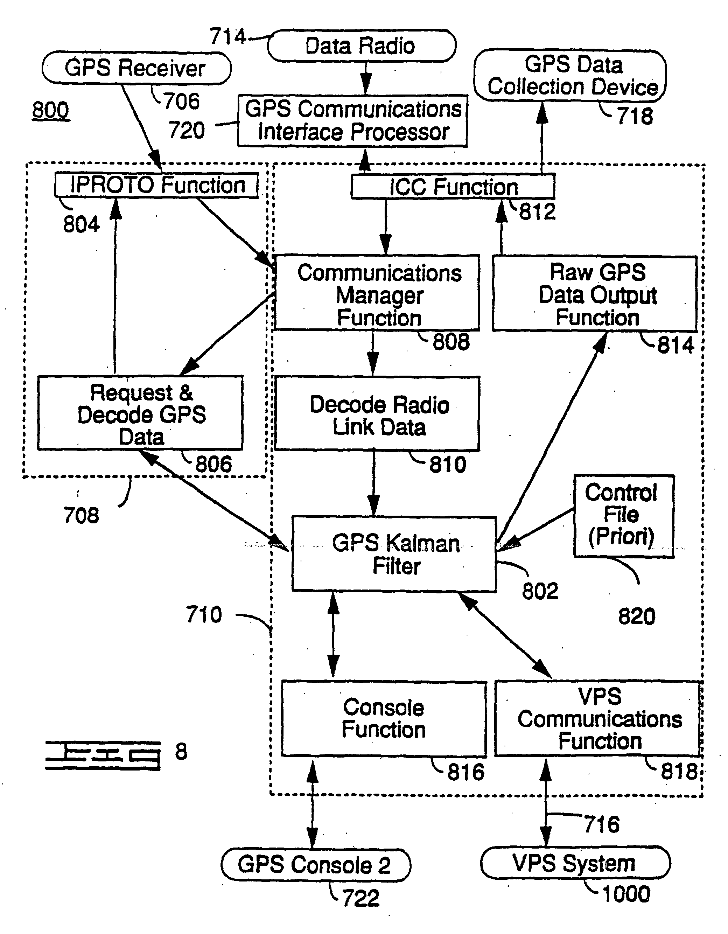

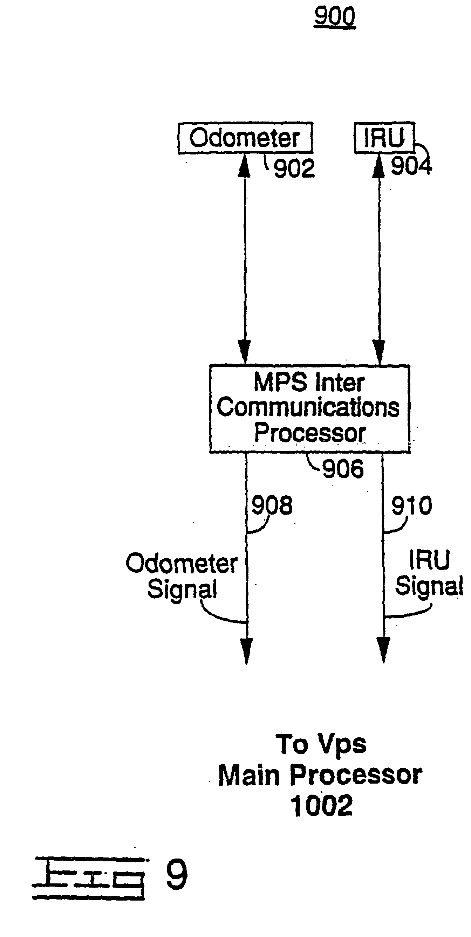

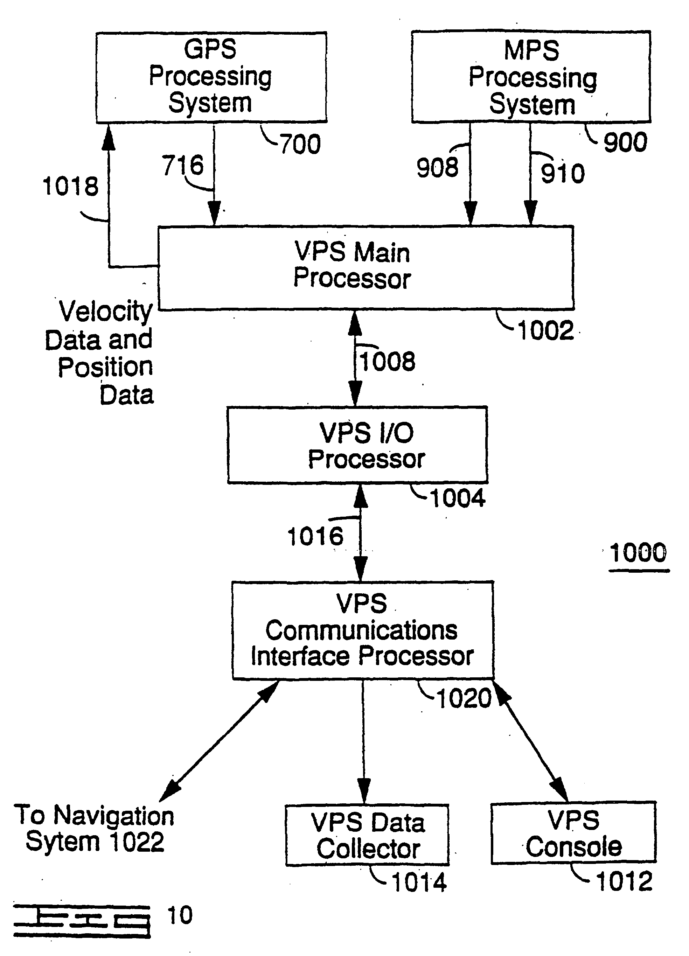

(48) "VPS processing system" means the processing system of the VPS. The VPS processing system derives third position estimates from the first and second position estimates. The architecture is depicted in Figures 10 and 11.

(49) "Weighted combiner" refers to a particular software program which processes data. Inputted data is assigned a predetermined weighing factor based on the estimated accuracy of the data and the technique used to gather the data. For example, the first position estimate of the GPS signal 716 is weighted heavier than the second position estimate of the IRU signal 910 because the former is inherently more accurate. Furthermore, the velocity measured by the IRU can be weighted heavier than the velocity measured by the GPS processing system because the former is more accurate. The velocity measured by the GPS processing system is not used at all, but could be used in other implementations.

(50) "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

II. General Overview

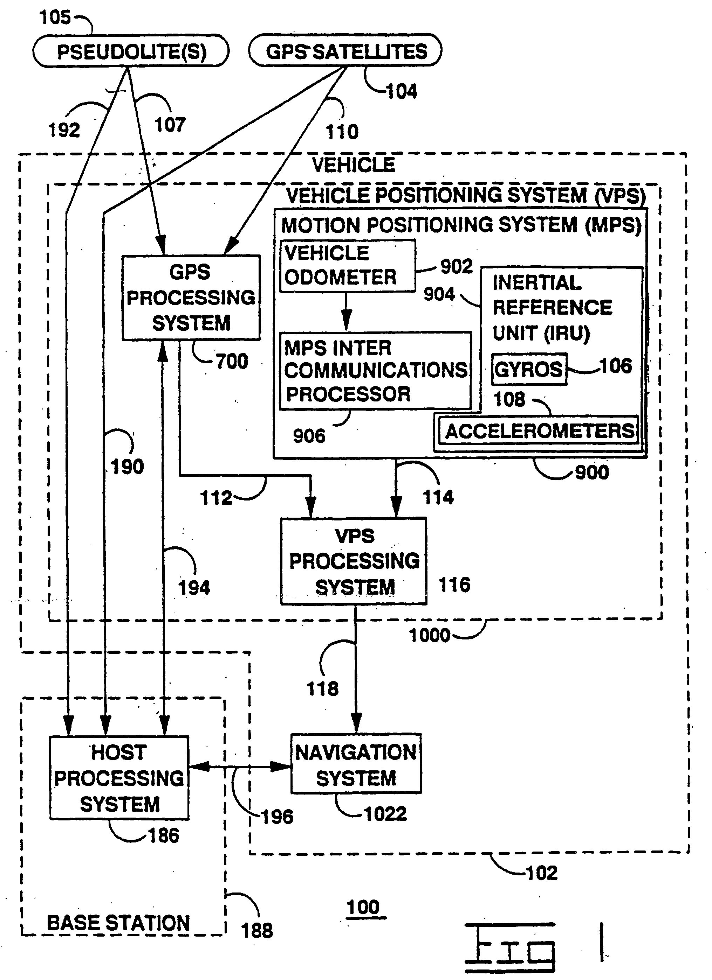

Figure 1 illustrates a high level block diagram 100 of an example positioning system. To provide for the accurate autonomous operation of a vehicle 102 on or near the Earth's surface, the example includes both a vehicle positioning system (VPS) 1000 and a navigation system 1022. Both of these systems include apparatus, methods, and techniques which, when integrated together, provide for highly accurate control of unmanned vehicles.

A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.
Using the VPS 1000 position estimates of the vehicle 102 can be determined with extreme preciseness. The VPS 1000 receives GPS data from GPS satellites 104 of a GPS, such as the NAVSTAR GPS or the GLONASS GPS.
The NAVSTAR GPS may be utilized. Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods to enhance the accuracy of vehicle position estimates.

More specifically, the VPS 1000 is a positioning system based on the incorporation of GPS data from the NAVSTAR GPS 104 and from a motion positioning system 900.

The motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To One of a number of methods may be implemented to increase the accuracy of the first position estimate.

In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

B. Navigation System

The navigation system 1022 receives the third position estimate from the VPS 1000. The navigation system 1022 uses the precise, third position estimate to accurately navigate the vehicle 102. A primary purpose of the navigation system 1022 is to guide the vehicle 102 between points along pre-established or dynamically-generated paths.

The navigation system 1022 is situated on the vehicle 102 itself. In other words, it is essentially an "on-board" system. Moreover, the navigation system 1022 may be designed to be retro-fitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

C. Base Station

The example can comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias

| technique 1500 | a parabolic bias |
| technique 1600 | a base residuals bias |
| technique 1700 | and a base correlator bias technique 1700A. |

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022.

The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

III Vehicle Positioning System

A. Overview

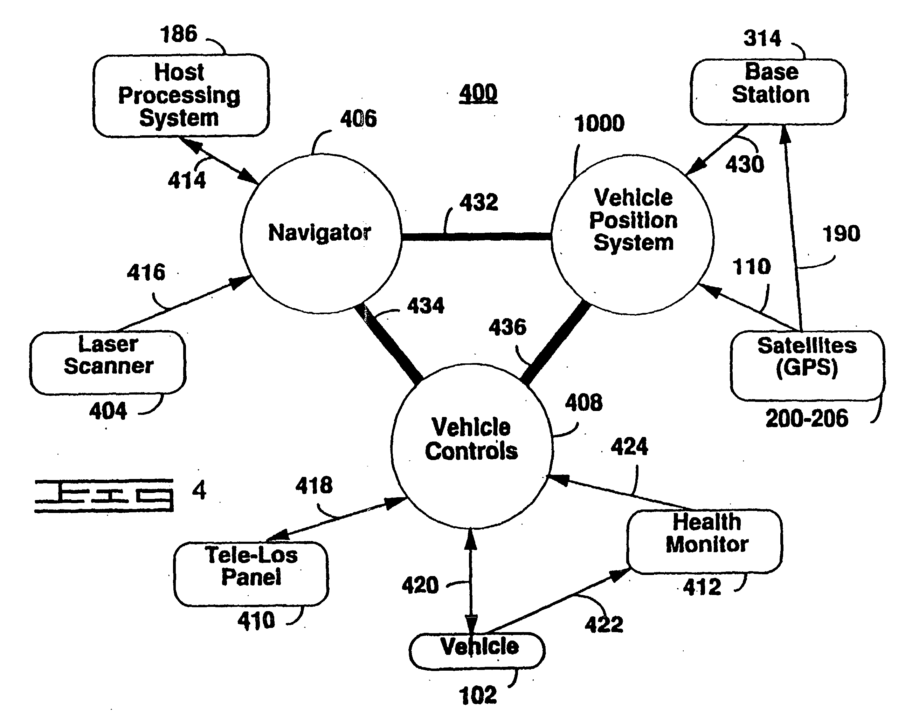

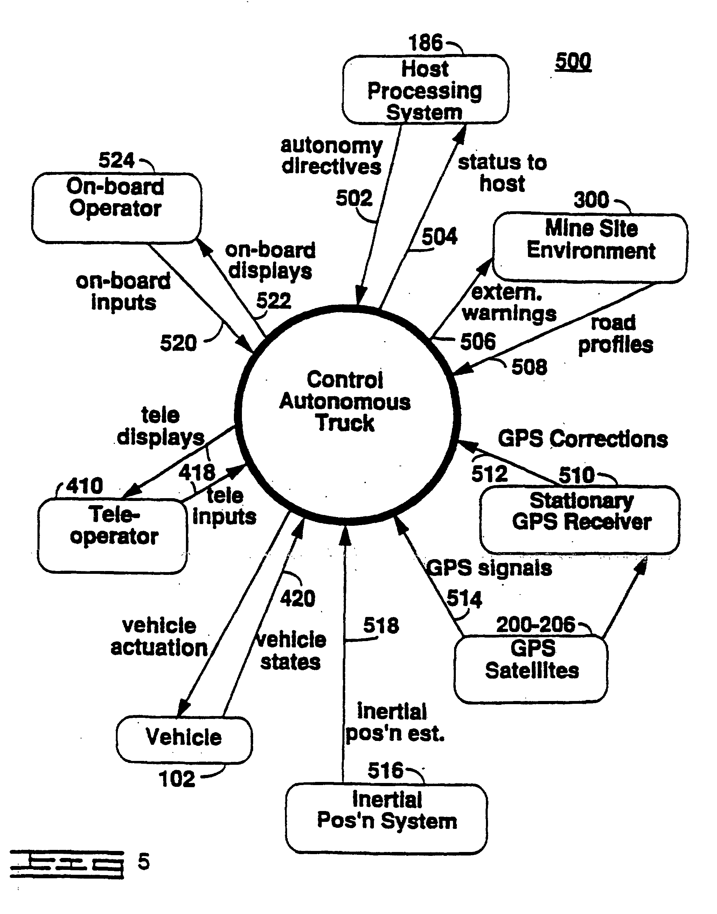

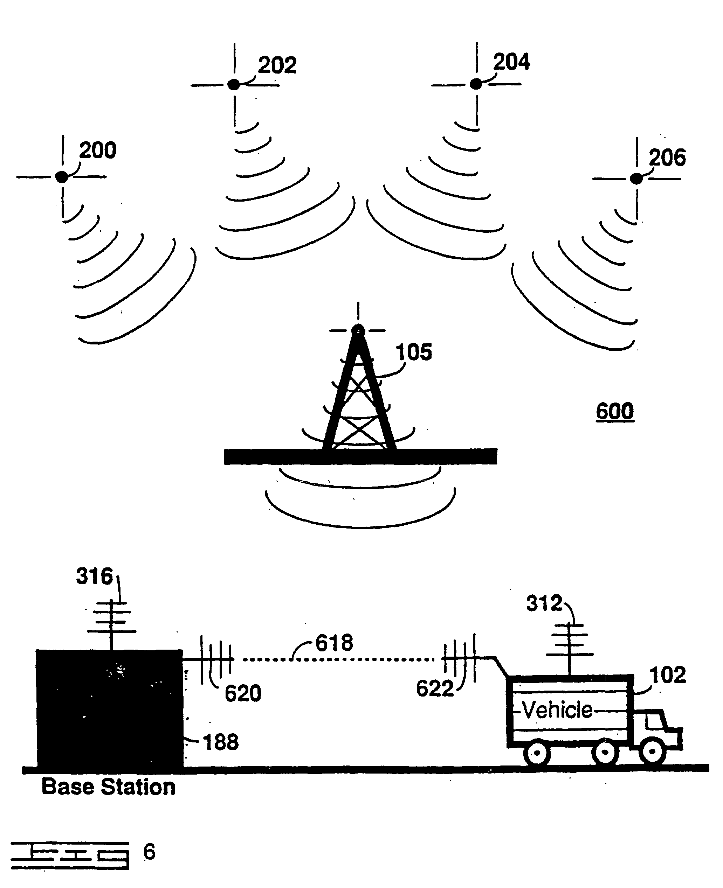

The following discussion relative to the VPS 1000 will make specific reference to Figures 7 through 10. Figure 10 shows the architecture/hardware of the VPS 1000. The VPS 1000 is a highly accurate position determination system for a moving or stationary vehicle 102 on or near the Earth's surface.

Recall that the VPS 1000 includes the GPS processing system 700 and the MPS 900, which are shown in respective Figures 7 and 9. Further recall that the MPS 900 includes the IRU 904 and the vehicle odometer 902, which are both shown in Figure 9. In effect, these systems have been enhanced and integrated to produce a highly effective position determining system.

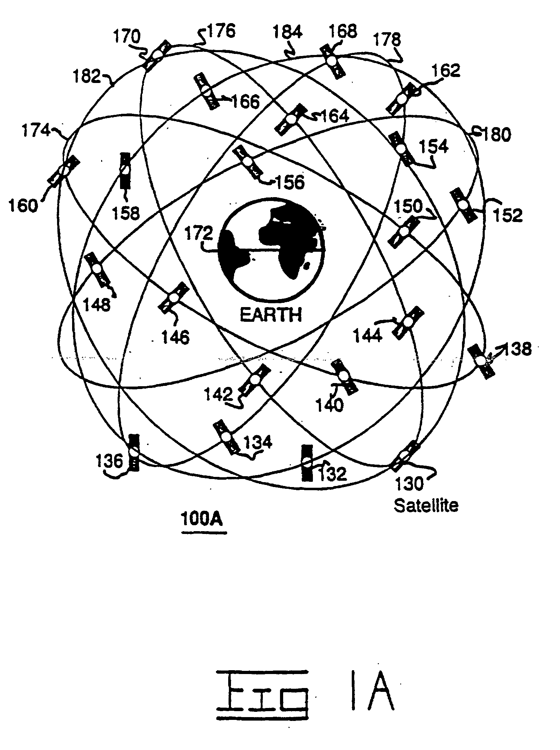

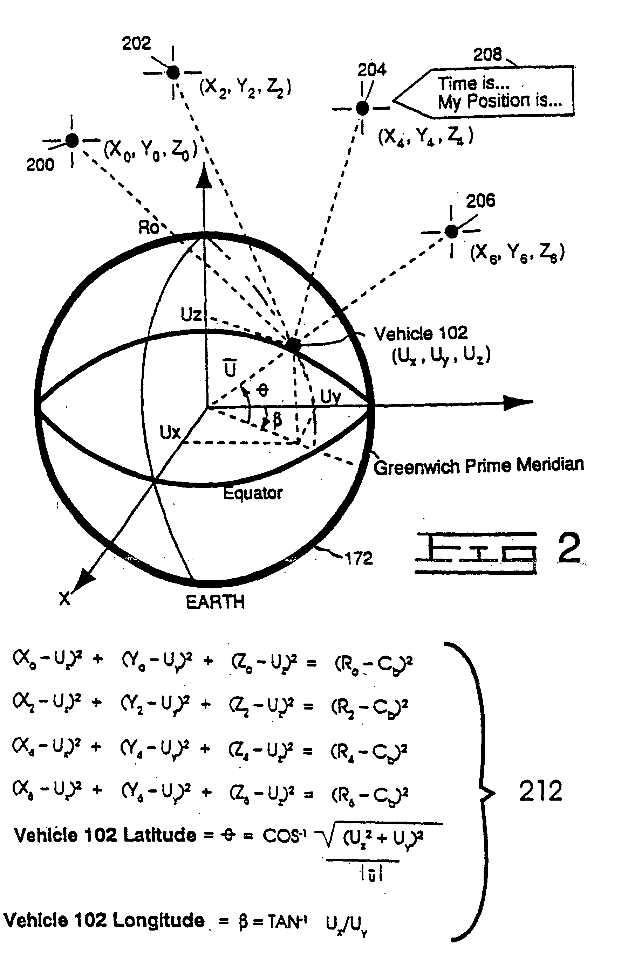

Referring to Figure 7, the GPS processing system 700 includes an antenna 702 connected to a GPS receiver 706. When the GPS satellites 104 in view of antenna 702 comprise multiple GPS satellites 200-206 as shown in Figures 2 and 3, the GPS receiver 706 reads each of their GPS data along with any pseudolite data from any pseudolite(s) 105 in view of antenna 702. The GPS receiver 706 is responsible for computing the first position estimate of the vehicle 102 from the GPS data and/or the pseudolite data.

To increase the accuracy of the first position method, a satellite position predictor method 1800 is implemented by a GPS processor 710 of the GPS processing system 700. The satellite position predictor method 1800 predicts the position of any GPS satellite at the current time or any future time.

Using the satellite position information, the GPS processing system 700 can determine the optimum GPS satellite constellation to recognize by using a constellation effects method 1300. The constellation effects method 1300 is also implemented by the GPS processor 710. Pursuant to the constellation effects method 1300, a best constellation is selected from the data sources comprising the GPS satellites 200-206 and pseudolite(s) 105.

The GPS processor 710 computes a first position estimate of the vehicle 102 based on the best constellation and geometry/triangulation methods. The accuracy of the first position estimate is, in part, dependent on the number of GPS satellites used in the computation. Each additional GPS satellite used can increase the accuracy of the first position estimate. After the computation, the first position estimate of the vehicle 102 is transmitted to a VPS main processor 1002 of Figure 10.

Referring to Figure 9, the IRU 904 comprises laser gyroscopes and accelerometers which produce position, velocity, roll, pitch, and yaw data. The IRU 904 combines this information into a second position estimate of the vehicle 102. The odometer 902 can be implemented to measure the distance travelled by the vehicle 102. The data from the IRU 904 and the odometer 902 is also transmitted via the MPS intercommunications processor 906 to the VPS main processor 1002, as shown in Figure 10.

The VPS main processor 1002 combines the second position estimate from the MPS 900 (the IRU 904 and perhaps the odometer 902) with the first position estimate from the GPS processing system 700 to produce a more accurate third position estimate.

The VPS 1000 further implements a method of eliminating erratic or spurious, third position estimates which can cause vehicle "wandering." This method is called the weighted path history method. Essentially, the path history of the vehicle 102 is used to statistically determine the accuracy of future estimates of the vehicle 102's position.

Referring now to Figures 1 and 3, a base station 188 provides a geographic proximate reference point for the VPS 1000. The base station 188 includes a host processing system 186. The host processing system 186 comprises a similar architecture and performs the same functions as the GPS processing system 700. However, the host processing system 108 performs additional functions for increasing the accuracy of first position estimates.

The satellite position predictor method 1800 is implemented by the host processing system 186, in addition to the GPS processing system 700 as discussed above. Accordingly, the host processing system 186 will recognize the same GPS satellite constellation that is observed by the vehicle 102 or include the same GPS satellite in a larger constellation.

Calculations are performed on the GPS data and/or pseudolite data to derive biases, including spatial biases and clock biases. To compute spatial biases, the host processing system 186 implements a number of methods.

### B. GPS Processing System

The GPS processing system 700 utilizes vehicle position data from a terrestrial position determination system to derive the first position estimate of the vehicle 102. The terrestrial position determination system comprises the NAVSTAR GPS, which is currently being developed by the U.S. government, and/or Earth- based pseudolites.

### 1. NAVSTAR GPS

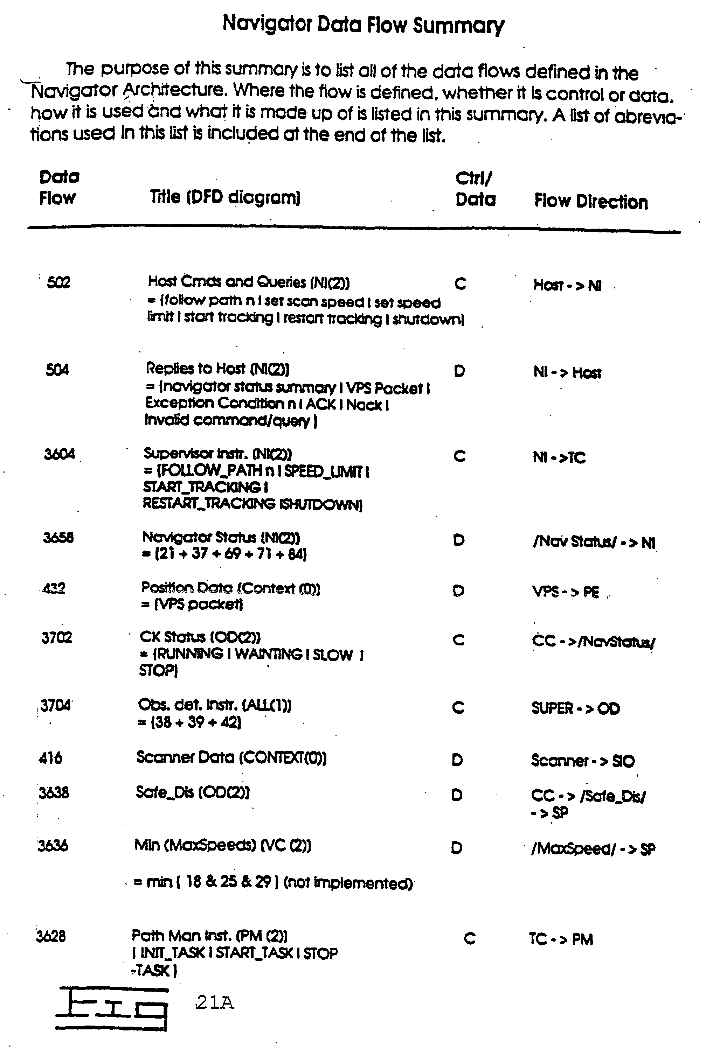

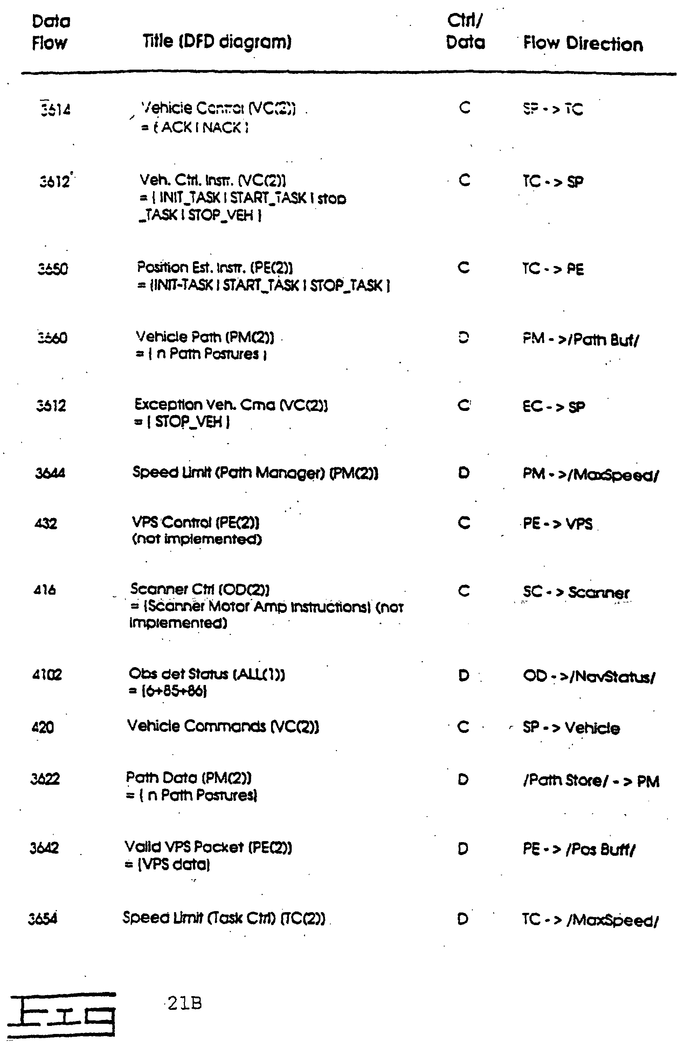

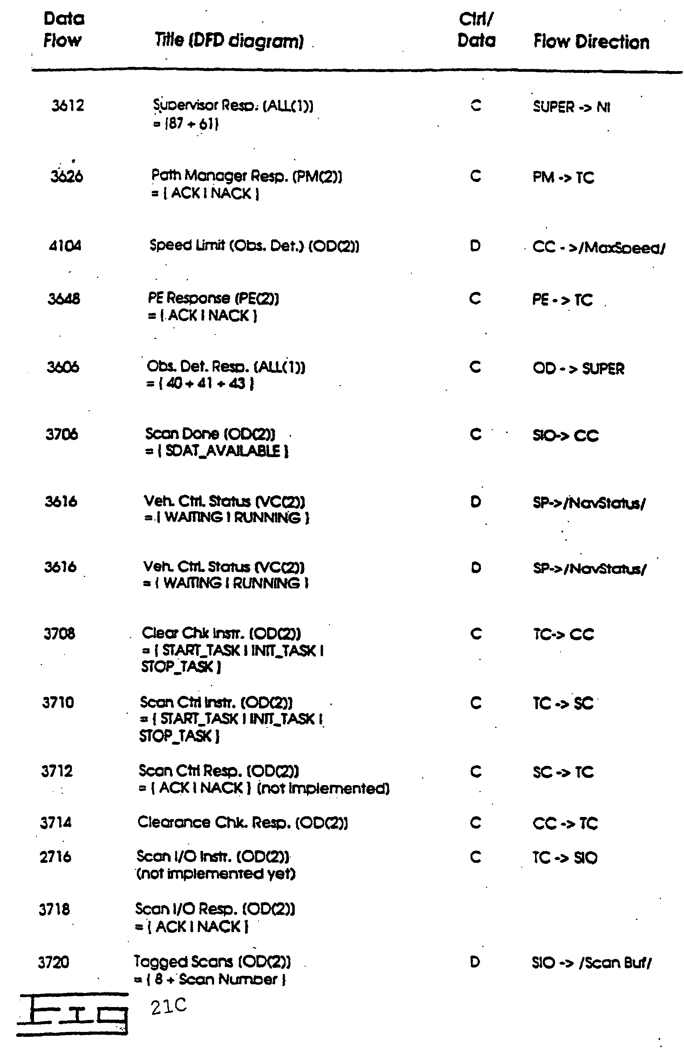

As shown in Figure 1A, 24 man-made electronic GPS satellites 132-170 in six orbits 174-184 are currently envisioned for the NAVSTAR GPS. They are planned for deployment by 1993. As currently envisioned, the GPS satellites 132-170 will orbit the Earth 172 at an altitude of approximately 14,000 miles and encircle the globe twice a day. Using the C mode of the NAVSTAR GPS, as will be discussed below, it will be possible to determine terrestrial positions within 15 meters in any weather, any time, and most areas of the Earth 172.

As of the date of the filing of this document, there are known to be six experimental and seven operational GPS satellites in orbit around the Earth 172. Further, several manufacturers are known to be designing and building GPS receivers, such as the GPS receiver 706 of Figure 7. As more and more GPS satellites are deployed and operational, the time periods increase when three or more of the experimental GPS satellites are available each day for position tracking.

Moreover, the location of the experimental GPS satellites (and all others once deployed) is very predictable. The relative position, or "pseudorange," of these GPS satellites with respect to the GPS receiver 706 on the vehicle 102 can be determined from the electromagnetic signals by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting GPS satellites. Almanac data relating to the GPS satellite position data of the NAVSTAR GPS is publicly available. Reference to this almanac data in regard to data encoded in the electromagnetic signals allows for an accurate derivation of pseudoranges if the receiver location is known. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Reference is again made to Figure 1A of the drawings wherein the configuration of the fully- operational NAVSTAR GPS is schematically illustrated. Each of the 24 GPS satellites 132-170 transmits electromagnetic signals which can be used to determine the absolute terrestrial position (that is, longitude, latitude, and altitude with respect to the Earth 172's center) of the vehicle 102.

Specifically, by knowing the relative position of at least three of the orbiting GPS satellites 132-170, the absolute terrestrial position of the vehicle 102 can be computed via simple geometric theory involving triangulation methods. The accuracy of the terrestrial position estimate depends in part on the number of orbiting GPS satellites 132-170 that are sampled by the vehicle 102. The sampling of more GPS satellites 132-170 in the computation increases the accuracy of the terrestrial position estimate. Conventionally, four GPS satellites, instead of three, are sampled to determine each terrestrial position estimate because of errors contributed by circuit clock differentials among the circuitry of the vehicle 102 and the various GPS satellites 132-170.

In the NAVSTAR GPS, electromagnetic signals are continuously transmitted from all of the GPS satellites 132-170 at a single carrier frequency. However, each of the GPS satellites 132-170 has a different modulation scheme, thereby allowing for differentiation of the electromagnetic signals. In the NAVSTAR GPS, the carrier frequency is modulated using a pseudorandom binary code signal (data bit stream) which is unique to each GPS satellite. The pseudorandom binary code signal is used to biphase modulate the carrier frequency. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of the vehicle 102 to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences that are extremely long, so that the sequences repeat no more than once per 276 days. As a result, the terrestrial position of the vehicle 102 can be determined to within an approximate accuracy of 16 to 30 meters.

However, the P mode sequences are classified and are not made publicly available by the United States government. In other words, the P mode is intended for use only by Earth receivers authorized by the United States government.

Figure 2 illustrates navigation equations 212 regarding four GPS satellites 200-206 of the NAVSTAR GPS. The four GPS satellites 200, 202, 204, and 206 have respective pseudoranges R0, R2, R4, and R6 and comprise the current constellation of GPS satellites 132-170 recognized by the vehicle 102.

The navigation equations 212 include the clock bias $C_b$ between the GPS satellites 200-206 and the vehicle 102. The navigation equations 212 are used to compute the longitude and latitude of the vehicle 102 using the pseudoranges R0, R2, R4, and R6.

As is shown in the description block 208, each of the GPS satellites 200, 202, 204, and 206 transmits GPS data that includes timing data (GPS time) and ephemeris data. Using the navigation equations 212, which are well-known in the conventional art and the foregoing timing data, the pseudoranges R0, R2, R4, and R6 can be estimated (called actual pseudoranges) by the GPS processing system 700. Furthermore, using the foregoing ephemeris data and almanac data on the Earth 172, the pseudoranges R0, R2, R4, and R6 can be estimated (called estimated pseudoranges) by the GPS processing system.

2. Operation

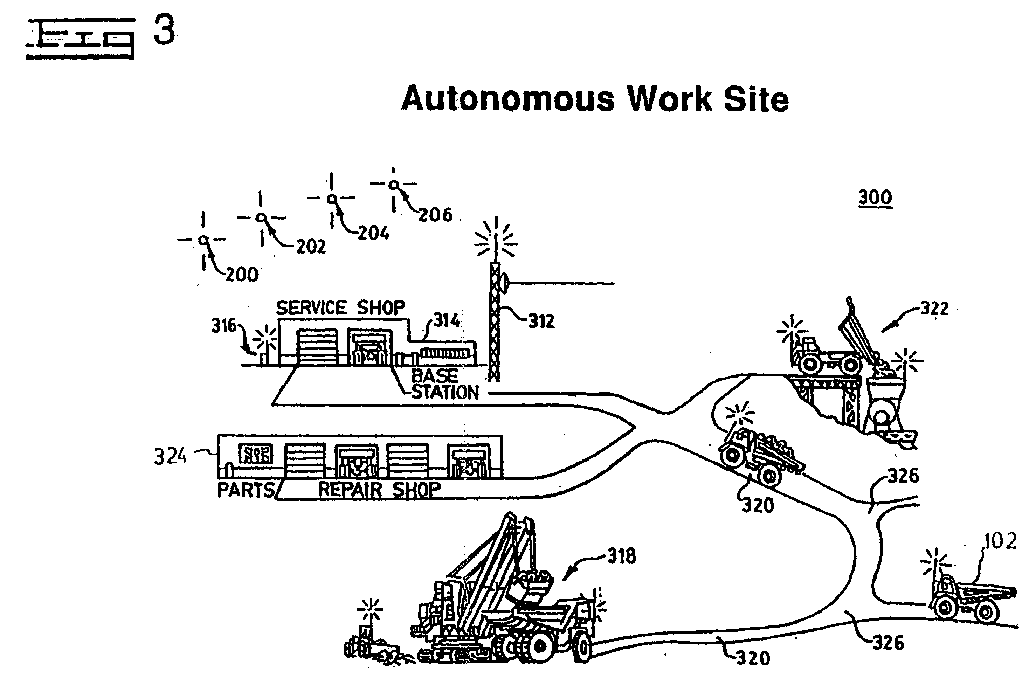

Turning now to Figure 6, a representative GPS constellation is shown in operation. Four GPS satellites 200, 202, 204 and 206 are transmitting GPS data. Both the vehicle 102 and the base station 188 are receiving 'these signals from each of these GPS satellites 200, 202, 204, and 206 on their respective GPS antennas 312 and 316. Both the C/A code and the carrier frequency are received at GPS antennas 312 and 316 for processing.

In addition to the four GPS satellites shown in the Figure 6 is the pseudolite 105. The pseudolite(s) 105 can be strategically placed around the perimeter of any mine pit and can emulate the GPS satellites 200, 202, 204, and 206 as shown in Figure 6. This arrangement can be extremely useful in situations such as a mine pit, cavity, or the like, in which mining vehicles may be out of view of one or more of the GPS satellites 200, 202, 204, and 206, because of topographic features such as high mine pit walls. The ground-based pseudolite(s) 105 provides additional ranging signals and can thus improve availability and accuracy of the positioning capability in the present invention.

The pseudolite(s) 105 is synchronized with the GPS satellites 200, 202, 204, and 206 and has a signal structure that, while different, is compatible with the GPS satellites 200, 202, 204, and 206. Moreover, the distance (range) between the vehicle 102 and the pseudolite(s) 105 is calculated similarly as the distance between the vehicle 102 and one of GPS satellites 200, 202, 204, and 206. With pseudolite(s) 105, the ranging error does not include selective availability nor ionospheric errors. However, other errors must be accounted for such as tropospheric, pseudolite clock error and multipath errors.

In a deep pit surface mining operation, the view of the sky from a vehicle 102 in the mine can be limited by the walls of the mine. Consequently, an adequate number of GPS satellites may not be in view for the GPS processing system 700 to properly derive a first position estimate. In such a case one or more pseudolites 105 can serve as secondary sources. The pseudolite(s) can be placed on the rim of the mine or elsewhere. The pseudolite(s) 105 can be used by the vehicle 102 in conjunction with any visible GPS satellites to obtain accurate first position estimates.

It is also envisioned that other forms of secondary sources could be implemented to aid GPS satellites or to completely eliminate the need to receive GPS data from the GPS satellites. Moreover, a laser scanning technique may utilized to give localized ranging data to the vehicle 102 from a secondary reference source.

Communication channel 618 represents the communications link between the base station 188 and the vehicle 102. The communication channel 618 comprises an electromagnetic link established by data-radios 620 and 622 which are transceivers. The communication channel 618 is used to transfer data between the base station 188 and the vehicle 102. It is envisioned that other forms of communication media may be utilized. For example, a laser scanning technique may utilized to convey information from the base station 108 to the vehicle 102.

The data radios 620 and 622 are located at the base station 188 and vehicle 102 respectively. The radios 620 and 622 are responsible for exchanging data between the base station 188 and the vehicle 102. The type of data exchanged will be discussed further below.

A radio transceiver which functions appropriately as the data radios 620 and 622 is commercially available from Dataradio Ltd. of Montreal, Canada, Model Number DR-4800BZ.

Turning now to Figure 7, a GPS processing system 700 is shown. The GPS processing system 700 on the vehicle 102 includes a GPS antenna 702.

The GPS antenna 702 is receptive to the radio spectrum of electromagnetic radiation. However, the example system contemplates reception of any signal by which GPS satellites 132-170 might encode data. The GPS antenna 702 is the commercially available antenna having Model No. CA3224 from Chu Associates Inc. of Littleton, Massachusetts.

The GPS antenna 702 is coupled to a preamplifier 704 so that the signals received at the GPS antenna 702 can be transmitted to the preamplifier 704. The term "couple" in the context of this document means any system and method for establishing communication. Coupling systems and methods may include, for example, electronics, optics, and/or sound techniques as well as any others not expressly described herein.

Coupling is commonly electronic and adheres to any one of numerous industry standard electronic interfaces.

The preamplifier 704 amplifies and down converts the GPS data received from the GPS antenna 702 so that the GPS data can be processed, or decoded. The example system contemplates any method by which the received signals can be amplified. The preamplifier 704 is the commercially available preamplifier having Model No. 5300, Series GPS RF/IF from Stanford Telecommunications Inc. (STel) of Santa Clara, California. The preamplifier 704 is coupled to a GPS receiver 706. The GPS receiver 706 processes the GPS data sent from the GPS satellites 200, 202, 204, and 206 in view of the GPS antenna 702. The GPS receiver 706 computes actual pseudoranges for each of the GPS satellites 200, 202, 204, and 206. Actual pseudoranges are defined in this document as an estimate of the pseudoranges R0, R2, R4, and R6 which is derived from the time delay between the transmission of electromagnetic signals from the GPS satellites and the reception of the electromagnetic signals by the GPS processing system 700. Moreover, the GPS receiver 706 can process in parallel all of the actual pseudoranges for the GPS satellites 200, 202, 204, and 206.

The GPS receiver 706 produces this data when four or more GPS satellites are visible. Using the differential correction techniques described in of this document, the GPS processing system 700 can compute (at GPS processor 710) the first position estimate with an accuracy of approximately 25 meters when an optimal constellation of four GPS satellites 200, 202, 204, and 206 is in view. When an optimal constellation of five GPS satellites (not shown) is in view, the GPS processing system 700 can compute the first position estimate with an accuracy of approximately 15 meters. An "optimal" constellation is one in which the relative positions of the GPS satellites in space affords superior triangulation capability, triangulation technology being well known in the art.

The GPS receiver 706 outputs actual pseudoranges and the number of GPS satellites 132-170 currently being sampled. In cases in which the number of GPS satellites 132-170 viewed for a series of first position estimates is less than four, the VPS weighted combiner 1204 does not use the first position estimates received from the GPS processing system 700 (specifically, the GPS processor 710) in the computation of the third position estimate.

The GPS receiver 706 comprises a Model Number 5305-NSI receiver, which is commercially available from Stanford Telecommunications Inc. However, any receiver which is capable of providing actual pseudoranges and the number of sampled GPS satellites may be utilized.

The GPS receiver 706 is coupled to a GPS intercommunication processor 708.

The intercommunication processor 708 is the commercially available 68000 microprocessor from Motorola Inc., of Schaumburg, Illinois, U.S.A. Any processor alone or in combination with the GPS receiver 706 for accomplishing the same purpose as described below may be utilized.

The GPS intercommunication processor 708 is further coupled to a GPS processor 710 and a GPS Console 1 712. The GPS intercommunication processor 708 coordinates data exchange between these three devices. Specifically, the GPS intercommunication processor 708 receives pseudorange data from the GPS receiver 706 which it passes on to the GPS processor 710. The pseudorange data includes, for example, the actual pseudoranges computed by the GPS receiver 706, the number of GPS satellites 200, 202. 204, and 206 currently being viewed by the GPS receiver 706, and other GPS data needed by the GPS processor 710 to compute the estimated pseudoranges for each of the GPS satellites 200, 202, 204, and 206. The GPS intercommunication processor 708 also relays status information regarding the GPS receiver 706 and the GPS processor 710 to the GPS Console 1 712.

The GPS intercommunication processor 708 transmits the above information to the GPS processor 710.

The GPS processor 710 comprises the 68020 microprocessor, which is commercially available from Motorola Inc. Figure 8 is a low level flow diagram 800 illustrating the functioning of the software in the GPS processor 710.

The GPS processor 710 uses a number of algorithms and methods to process the data it receives including, for example, a GPS Kalman filter 802, which is shown in Figure 8. The Kalman filter 802 is well known in the conventional art. The GPS Kalman filter 802 is a module in the software of the GPS processor 710.

In part, the function of the Kalman filter 802 is to filter out noise associated with the pseudorange data.

The GPS processor 710 then computes the estimated pseudoranges, the first position estimate, and the vehicle velocity (from Doppler shift) using the above current state and any biases, including the clock biases and the spatial biases. However, the GPS processor 710 discards the computed velocity data when the C/A code, rather than the carrier frequency, is utilized by the GPS receiver 706 to derive the vehicle velocity. The rationale for discarding the vehicle velocity is that experimentation has shown that it is not adequately accurate when derived from the C/A code.

Vehicle velocities derived from the carrier frequency (Doppler shift) are much more accurate than the velocities derived from the C/A code.

The first estimated position (and vehicle velocity if derived from the carrier frequency) are encoded on GPS Signal 716 and sent on to the VPS main processor 1002 shown on Figure 10.

As previously discussed, the GPS processor 710 analyzes both the carrier frequency and the C/A code. Unlike data demodulated from the C/A code, data may be retrieved from the carrier frequency by the GPS receiver 706 at approximately 50 Hz (not approximately 2 Hz, as is the case for demodulating C/A code). This increased speed allows the present invention to produce more precise position and velocity determinations with less error.

Figure 8 illustrates other functions of the GPS processor 710. However, the present invention contemplates any method by which GPS data can be processed to determine pseudoranges. As shown at a flowchart block 816, a console function controls the operation of the GPS console 2. This console function regulates the operation of the GPS Kalman filter 802 by providing a user interface into the filter.

The VPS communications function 818 controls the outputs of the GPS Kalman filter 802 which are directed to the VPS 1000. At a flowchart block 806, it is shown that the GPS Kalman filter 802 requests and decodes data from the GPS receiver 706, which data is routed through an IPROTO function 804 shown at a flowchart block 804.

As shown, the IPROTO function 804 resides in the GPS intercommunications processor 708 and executes tasks associated with the GPS intercommunications processor 708. The IPROTO function 804 is the model number XVME-081, which is commercially available from Xycom Inc.

The GPS console 712 is well known in the art. Many types of devices are commercially available which provide the desired function. One such device is commercially available from Digital Equipment Corporation of Maynard, Massachusetts Model Number VT220. The GPS console 712 displays processor activity data regarding the GPS intercommunications processor 708 and the GPS processor 710.

The GPS processor 710 is coupled to a GPS console 722 and a GPS communications interface processor 720. The GPS console 722 is well known in the art. Many types of devices are commercially available which provide the desired console function. One such device is commercially available from Digital Equipment Corporation of Maynard, Massachusetts Model Number VT220. The GPS console 722 provides the user interface from which the GPS processor 710 can be activated and monitored.

The GPS communications interface processor 720 is essentially an I/O board. It is coupled to a data-radio 714 and a GPS data collection device 718. The GPS communications interface processor 720 coordinates data exchange between the GPS processor 710 and both the data-radio 714 and the GPS data collection device 718. The communications interface processor 720 in the example system is the model no. MVME331, which is commercially available from Motorola Inc., U.S.A.

The data-radio 714 establishes a communication link between the GPS processor 710 (through the GPS communications interface processor 720) at the vehicle 102 to a similar data-radio 714 located at the base station 188 (see Figure 6).

The data-radio 714 communicates synchronously at 9600 baud using RF frequencies. The data-radio 714 at the base station 188 provides periodic updates on the amount of spatial bias and clock bias for each satellite to the data-radio 714 at the vehicle 102 at a rate of 2 Hz (twice per second). Spatial and clock biases computed by the base station 188 will be discussed further below.

The GPS data collection device 718 can be any of numerous common electronic processing and storage devices such as a desktop computer. Any personal computer (PC) manufactured by the International Business Machines Corporation (IBM) of Boca Raton, Florida, U.S.A., can be implemented.

### C. Motion Positioning System (MPS)

The MPS 900 is illustrated in Figure 9. The MPS 900 derives the second position estimate of the vehicle 102. Usually, this second position estimate is combined and filtered with the first position estimate to thereby derive a more accurate third position estimate. However, it is envisioned that in some instances the second position estimate may be utilized exclusively as the third position estimate, when the first position estimate is deemed to be drastically inaccurate.

For the MPS 900, the example system envisions the combination of the odometer 902 and the IRU 904. However, the IRU 904 could be utilized without the odometer 902. The odometer and the IRU 904 are coupled to an MPS intercommunications processor 906 to thereby comprise the MPS 900. IRUs and odometers are well known in the art and are commercially available, respectively, from Honeywell Inc. of Minneapolis, Minnesota, Model Number HG1050-SR01 and from Caterpillar Inc. of Peoria, Illinois, Part Number 7T6337.

The IRU 904 comprises ring-laser gyroscopes and accelerometers of known design. The IRU 904 is a replica of the system used by Boeing 767 aircrafts to determine aircraft position, except that the IRU 904 has been modified to account for the lesser dynamics (for example, velocity) that the vehicle 102 exhibits relative to that of a 767 aircraft.

The IRU 904 can output vehicle position at 5 Hz, velocity at 10 Hz, roll at 50 Hz, pitch at 50 Hz, and yaw data at 50 Hz. Furthermore, the vehicle odometer 902 can output the distance travelled by the vehicle 102 at 20 Hz.

The laser gyroscopes of the IRU 904, in order to function properly, must at first be given an estimate of the vehicle 102's latitude, longitude and altitude. Using this data as a baseline position estimate, the gyroscopes then use a predefined calibration in conjunction with forces associated with the rotation of the Earth 172 to determine an estimate of the vehicle 102's current position.

This information is then combined by the IRU 904 with data acquired by the IRU 904 accelerometers to produce a more accurate, second position estimate of the vehicle's current position. The second position estimate from the IRU 904 and the data from the vehicle odometer 902 are transmitted to the MPS intercommunications processor 906 as shown by respective arrows 910 and 908 of Figure 9. Arrow 114 of Figure 1 includes arrows 908 and 910.

Upon experimentation, it has been determined that the IRU 904 may provide erroneous second position estimates of the vehicle 102 due to imprecise constituent parts. More specifically, in the example system, it has been observed that the directional output of the IRU 904 has drifted counterclockwise from the direction. north during operation. The drift is dependent upon the direction in which the vehicle 102, and consequently the IRU 904, is travelling.

Moreover, the drift can be defined by an IRU drift equation. The IRU drift equation can be derived similar to the construction of path equations described in regard to the weighted path history technique or similar to the construction of parabolic equations described in regard to the parabolic bias technique,

After derived, the IRU drift equation can be utilized to extrapolate more accurate second position estimates.

The intercommunications processor 1002 comprises the commercially available 68000 microprocessor from Motorola Inc. The intercommunications processor 1002 coordinates exchange of data between the MPS 900 and the VPS 1000. Any processor with similar function as described herein may be utilized.

D. Vehicle Positioning System (VPS)

Turning now to Figure 10, the architecture of the VPS 1000 is depicted. Figure 11 shows in detail a diagram of the VPS 1000 connected to the GPS processing system 700 and MPS 900.

GPS processing system 700 and MPS 900 are independently coupled to the VPS main processor 1002. The independent coupling is an important novel feature of the present invention. Because they are independent, the failure of one of the systems will not cause the other to become inoperative. Thus, if the GPS processing system 700 is not operative, data can still be collected and processed by the MPS 900 and, consequently, the VPS 1000. The GPS processing system 700 and the MPS 900 transmit signals 716, 908, 910 to the VPS main processor 1002, as shown. These signals contain position, velocity, time, pitch, roll, yaw, and distance data (see Figures 7 and 9 and associated discussions).

The VPS main processor 1002 is coupled to the VPS I/O processor 1004. The VPS main processor 1002 transmits a signal 1008 to a VPS I/O processor 1004, as shown. The signal 1008 comprises the third position estimate. The third position estimate is derived from the GPS, IRU, and odometer data noted above, and more specifically, the first and second position estimates of the vehicle 102.

The example system contemplates any system and method by which the signals indicated by arrows 716, 908 and 910 can be received by the VPS main processor 1002 from the GPS processing system 700 and MPS system 900 and forwarded to the VPS main processor 1002. The VPS main processor 1002 is the 68020 microprocessor, which is commercially available from Motorola Inc., U.S.A.

Referring now back to Figure 10, the VPS I/O processor 1004 is coupled to a VPS communications interface processor 1020. The communications interface processor 1020 is the MVME331 processor, which is commercially available from Motorola Inc., U.S.A. Any processor accomplishing the same purpose as described below may be utilized.

The VPS communications interface processor 1020 is coupled to three different devices: (1) a VPS console 1012, (2) a data collection device 1014, and (3) the navigation system 1022. The VPS communications interface processor 1020 routes the data, including the third position estimate, contained in output 1016 to the above three devices at a rate of 20 Hz.

The VPS console 1012 is well known in the art, and is commercially available from Digital Equipment Corporation, of Minneapolis, Minnesota, Model Number VT220. This VPS console 1012 is used to display the current status of the VPS I/O processor 1004.

The VPS data collection device 1014 can be any of numerous commercially available electronic processing and storage devices, for example, a desktop PC. Any MacIntosh PC available from Apple Computer of Cupertino, California, can be used successfully to achieve this purpose.

The navigation system 1022 comprises the features associated with the navigation of the vehicle 102. The VPS 1000 transmits the third position estimate to the navigation system 1022, so that the navigation system 1022 can accurately and safely guide the autonomous vehicle 102.

E. Base Station

With reference to Figure 7, the host processing system 186 at the base station 188 comprises the GPS processing system 700 of Figure 7. The purposes of the host processing system 186 at the base station 188 are to (1) monitor the operation of the vehicle 102, (2) provide a known terrestrial reference point from which spatial biases can be produced, and (3) provide any other information to the vehicle 102 when necessary over the high-speed data communication channel 618.

The base station 188 will be located close to the vehicle 102, preferably within 20 miles. The close geographical relationship will provide for effective radio communication between the base station 188 and the vehicle 102 over the communication channel 618. It will also provide an accurate reference point for comparing satellite transmissions received by the vehicle 102 with those received by the base station 188.

A geographically proximate reference point is needed in order to compute accurate spatial biases. Spatial and clock biases are, in effect, the common mode noise that exists inherently in the NAVSTAR GPS and the GPS processing system 700. Once computed at the base station 188, the spatial and clock biases are then sent to the vehicle 102 using the data-radio 714, as shown in Figure 7. The spatial biases are computed using various methods which are discussed further below.

In the example system the host processing system 186 at the base station 188 further coordinates the autonomous activities of the vehicle 102 and interfaces the VPS 1000 with human supervisors.

F. Satellite Based Accuracy Improvements

The example system improves the accuracy of the position estimates of the vehicle 102 via a number of differential correction techniques. These differential bias techniques are used to enhance the first, second, and third position estimates.

Several of these differential correction techniques are designed to directly remove errors (noise or interference) in the calculation of pseudoranges R0, R2, R4, and R6 (both actual and estimated pseudoranges). The removal of these errors results in a more precise first position estimate, which is outputted by the GPS processing system 700 to the VPS 1000, and ultimately, in a more precise third position estimate, which is outputted by the VPS 1000 to the navigation system 1022.

The host processing system 186 at the base station 188 is responsible for executing these differential techniques and for forwarding the results to the vehicle 102. Recall that the host processing system 186 comprises the GPS processing system 700, just as the vehicle 102. The term "differential" is used because the base station 188 and the vehicle 102 use independent but virtually an identical GPS processing system 700. Furthermore, because the base station 188 is stationary and its absolute position is known, it serves as a reference point from which to measure electronic errors (noise or interference) and other phenomena inducing errors.

G. Satellite Position Predictor

The example system includes a method by which the future positions of the GPS satellites 132-170 can be predicted with respect to a known absolute position of the base station 188 and/or the vehicle 102. The future positions are based upon estimated pseudoranges calculated by the GPS processor 710 at the host processing system 188 and/ or the VPS 1000. Moreover, the computations can be performed at the base station 188 and/or the vehicle 102 and transferred anywhere, if necessary.

By predicting the future positions of the GPS satellites 132-170, optimum satellite constellations for the vehicle 102 can be determined well in advance. Thus, the example system can provide for the prediction of satellite availability and unavailability in a systematic manner. It further allows for future planning related to the operation, service, and maintenance of the vehicle 102.

IV Navigation System

A. Overview

In considering implementation of an autonomous navigation system, there are some basic questions which any autonomous system must be able to answer in order to successfully navigate from point A to point B. The first question is "where are we (the vehicle) now?" This first question is answered by the positioning system portion of the present invention, as discussed above in section III,

The next or second question is "where do we go and how do we get there?" This second question falls within the domain of the navigation system portion of the present invention, discussed in this section (IV).

A further (third) question, really a refinement of the second one, is "how do we actually physically move the vehicle, for example, what actuators are involved (steering, speed, braking, and so on), to get there?" This is in the domain of the vehicle controls subsystem of the navigation system, also discussed below.

As has been discussed implicitly above, autonomous navigation, of a mining vehicle as an example, may provide certain significant advantages over conventional navigation. Among them is an increased productivity from round the clock, 24 hr. operation of the vehicles. The problems presented by dangerous work environments, or work environments where visibility is low, are particularly well suited to solution by an autonomous system.

There are, for instance, some mining sites where visibility is so poor that work is not possible 200 days of the year. There are other areas which may be hazardous to human life because of being contaminated by industrial or nuclear pollution. An area may be so remote or desolate that requiring humans to work there may pose severe hardships or be impractical. The application of the present invention could foreseeably include extraterrestrial operations, for example, mining on the Moon, provided that the necessary GPS satellites were put in Moon orbit.

In a typical application, as shown in Figure 3, with regard to the navigation of a mining vehicle at a mining site, there are three basic work areas: the load site, the haul segment, and the dump site. At the load site, a hauling vehicle may be loaded with ore in any number of ways, by human operated shovels for instance, controlled either directly or by remote control, or by autonomous shovels. The hauling vehicle then must traverse an area called the haul segment which may be only a few hundred meters or may be several km's. At the end of the haul segment is the dump site, where the ore is dumped out of the hauling vehicle to be crushed, or otherwise refined, for instance. In the example system autonomous positioning and navigation may be used to control the hauling vehicle along the haul segment. Autonomously navigated refuelling and maintenance vehicles are also envisioned.

Referring now to Figures 4 and 5, navigation of the AMT (Autonomous Mining Truck) encompasses several systems, apparatus and/or functions. The VPS 1000 subsystem of the overall AMT system as described above, outputs position data that indicates where the vehicle is located, including, for example, a North and an East position.

Referring now to Figures 4 and 5, position data output from the VPS is received by a navigator 406. The navigator determines where the vehicle wants to go (from route data) and how to get there, and in turn outputs data composed of steer and speed commands to a vehicle controls functional block 408 to move the vehicle.

The vehicle controls block then outputs low level commands to the various vehicle 102 systems, such as the governor, brakes and transmission. As the vehicle is moving towards its destination, the vehicle controls block and the VPS receive feed-back information from the vehicle indicative of, for example, any fault conditions in the vehicle's systems, current speed, and so on.

Navigation also must include an obstacle handling (detection and avoidance) capability to deal with the unexpected. A scanning system 404 detects obstacles in the vehicle's projected trajectory, as well as obstacles which may be approaching from the sides and informs the navigator of these.

The navigator may be required to then decide if action is required to avoid the obstacle. If action is required, the navigator decides how to avoid the obstacle. And after avoiding the obstacle, the navigator decides how to get the vehicle back onto a path towards its destination.

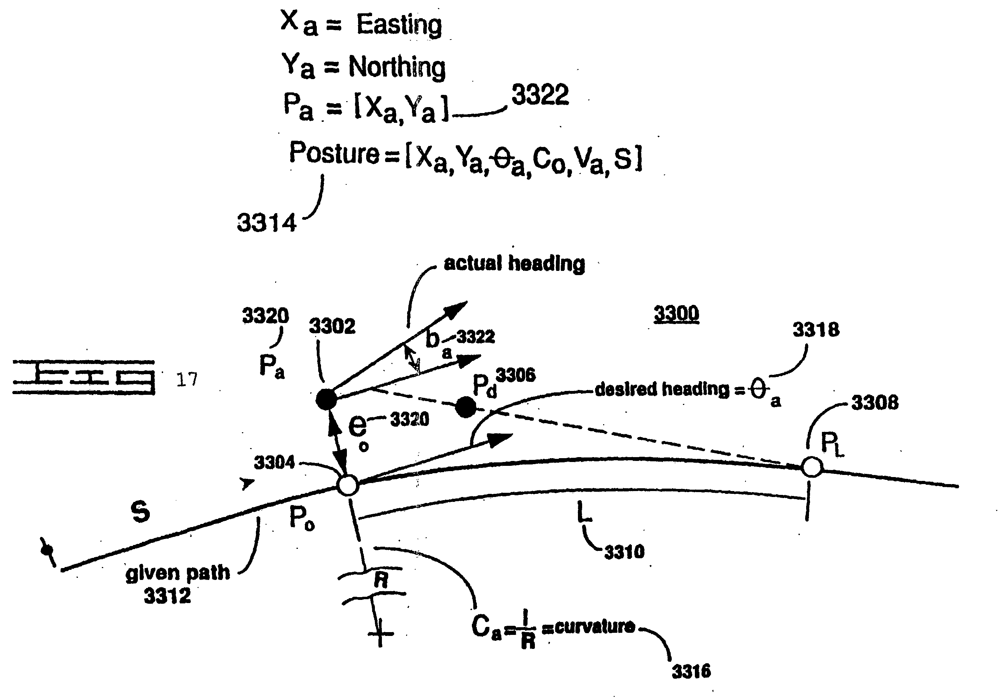

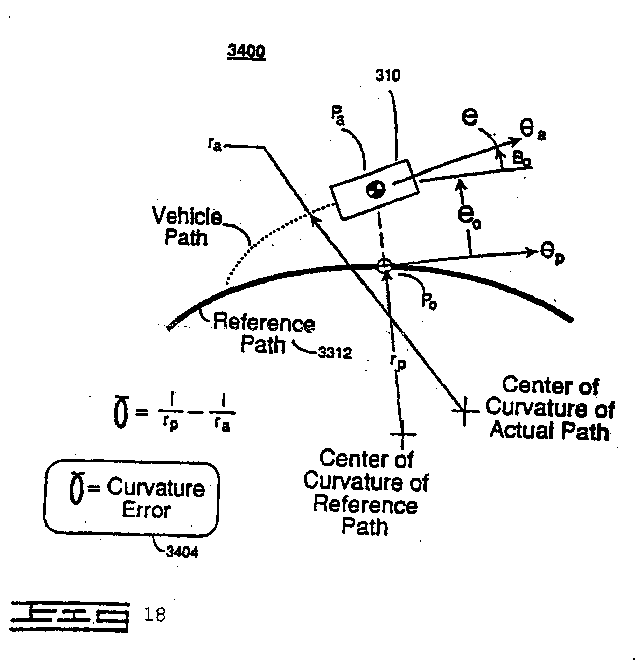

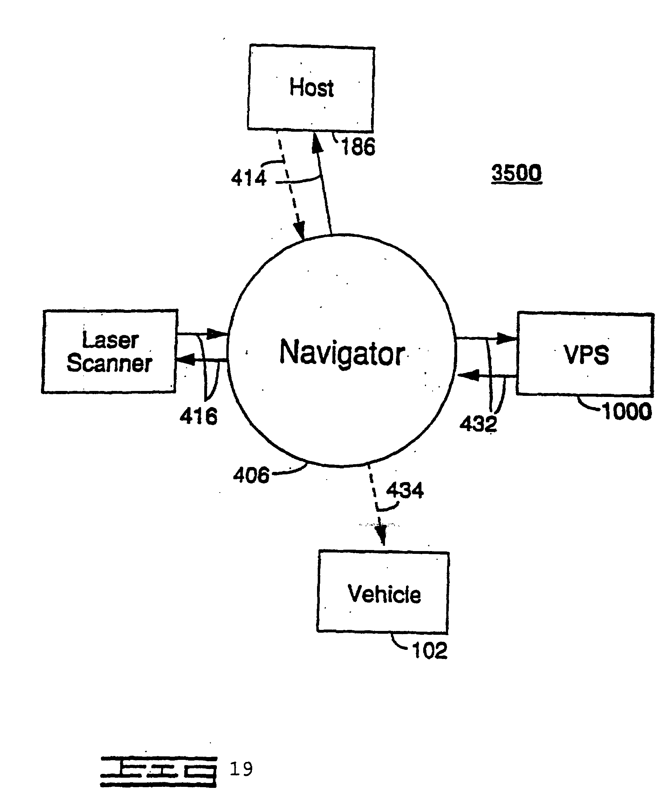

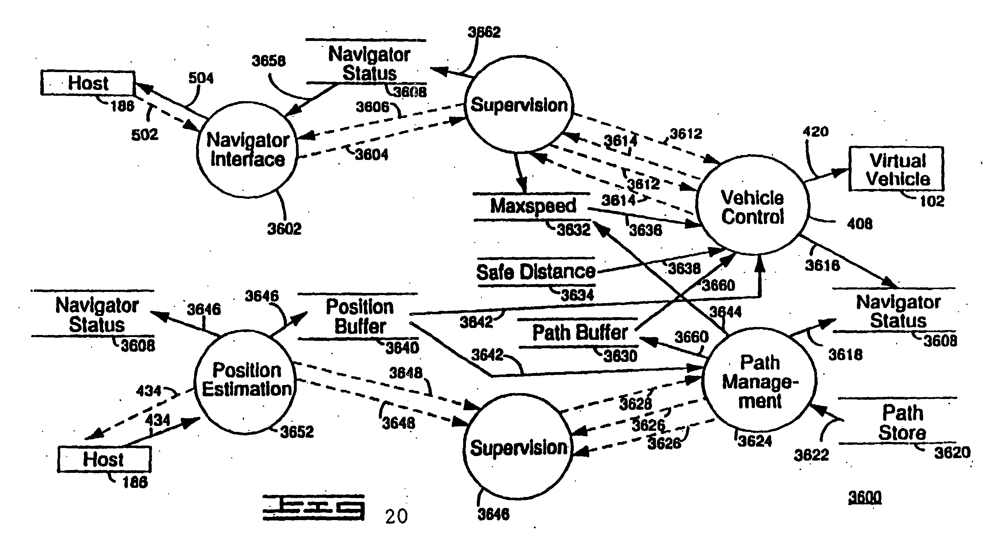

Referring now to Figure 19, titled the context diagram, and Figure 21A-21D definitions of the communications, which are shown as circles with numbers in them, are provided below:

502. Host commands & queries:

Commands given by the host to the vehicle manager. These commands could be of several types:

initiate/terminate;
supply parameters;
emergency actions; and
directives.

Queries inquire about the status of various parts of the navigator.

504. replies to host:

These are responses to the queries made by the host.

432. position data:

This is streamed information provided by the VPS.

416. Range data:

This is range data from the line laser scanner.

432. VPS control:

These are commands given to the VPS to bring it up, shut it down and switch between modes.

416. scanner control:

These are commands sent to the laser scanner to initiate motion and set follow velocity profile.

420. steering & speed commands

These are commands given to the vehicle to control steering and speed. These commands are issued at the rate of 2-5 Hz.

Referring to Figure 5, as described above, both the VPS and the navigator are located on the vehicle and communicate with the base station 188 to receive high level GPS position information and directives from a host processing system 186, discussed below. The system gathers GPS position information from the GPS satellites 200-206 at the base station and on-board the vehicle so that common- mode error can be removed and positioning accuracy enhanced.

Alternatively, portions of the VPS and navigator may be located at the base station.

The host at the base station may tell the navigator to go from point A to point B, for instance, and may indicate one of a set of fixed routes to use. The host also handles other typical dispatching and scheduling activities, such as coordinating vehicles and equipment to maximize efficiency, avoid collisions, schedule maintenance, detect error conditions, and the like. The host also has an operations interface for a human manager.

It was found to be desirable to locate the host at the base station and the navigator on the vehicle to avoid a communications bottleneck, and a resultant degradation in performance and responsiveness. Since the host sends relatively high-level commands and simplified data to the navigator, it requires relatively little communication bandwidth. However, in situations where broad-band communication is available, this may not be a factor.

Another factor in determining the particular location of elements of the system, is the time-criticality of autonomous navigation. The navigation system must continually check its absolute and relative locations to avoid unacceptable inaccuracies in following a route. The required frequency of checking location increases with the speed of the vehicle, and communication speed may become a limiting factor even at a relatively moderate vehicle speed.

However, in applications where maximum vehicle speed is not a primary consideration and/or a high degree of route following accuracy is not critical, this communication factor may not be important. For example, in rapidly crossing large expanses of open, flat land, in a relatively straight path, it may not be necessary to check position as often in the journey as it would be in navigating a journey along a curvaceous mountain road.

Conceptually, the navigation aspects of the present invention can be arbitrarily divided into the following major functions:

route planning/path generation;
path tracking; and
obstacle handling.

B. Route Planning/Path Generation

1. Introduction

Autonomous vehicle navigation conceptually consists of two sub problems, path generation and path tracking, which are solved separately.

Path generation uses intermediate goals from a high level planner to generate a detailed path for the vehicle 102 to follow. There is a distinct trade-off between simplicity of representation of such plans and the ease with which they can be executed. For example, a simple scheme is to decompose a path into straight lines and circular curves. However, such paths cannot be tracked precisely simply because of discontinuities in curvature at transition points of segments that require instantaneous accelerations.

Following path generation, path tracking takes, as input, the detailed path generated and controls the vehicle 102 to follow the path as precisely as possible. It is not enough to simply follow a pre-made list of steering commands because failure to achieve the required steering motions exactly, results in steady state offset errors. The errors accumulate in the long run. Global position feedback 432 may be used to compensate for less than ideal actuators. Methods have been developed which deviate from traditional vehicle control schemes in which a time history of position (a trajectory) is implicit in the plan specified to the vehicle 102.

These methods are appropriately labelled "path" tracking in that the steering motion is time decoupled; that is, steering motions are directly related to the geometric nature of the specified path, making speed of the vehicle 102 an independent parameter.

Referring now to Figure 3, an autonomous rehicle 102 may be required to traverse a haul segment 320 to a dump site 322, and after dumping its load, traverse another haul segment to a service shop 324, under the direction of the host processing system 186. The host processing system 186 determines the vehicle 102's destinations, which is called "cycle planning." The determination of which routes to take to get to a desired destination must be accomplished by "route planning."

"Route planning" is the determination of which path segments to take to get to a desired destination. In general, a route can be thought of as a high-level abstraction or representation of a set of points between two defined locations. Just as one can say to a human driver "take route 95 south from Lobster, Maine to Miami, Florida," and the driver will translate the instruction into a series of operations (which may include starting the vehicle 102, releasing the brake 4406, engaging the transmission 4610, accelerating to the posted speed limit, turning the steering wheel 4910, avoiding obstacles 4002, and so on), the autonomous navigation system of the present invention performs similarly.

A "route" is a sequence of contiguous "segments" between the start and end of a trip.

An autonomous vehicle 102 may begin at any position in the sequence and traverse the route in either direction. A "segment" is the "path" between "nodes." A "node" is a "posture" on a path which requires a decision. Examples of nodes are load sites 3318, dump sites 322, and intersections 326.

There are various types of segments. For instance, there are linear and circular segments. Linear segments (lines) are defined by two nodes. Circular segments (arcs) are defined by three nodes.

"Postures" are used to model parts of a route, paths and nodes for instance. Postures may consist of position, heading, curvature, maximum velocity, and other information for a given point on the path.

A "path" is a sequence of contiguous postures.

A segment is, therefore, a sequence of contiguous postures between nodes. All segments have a speed associated with them, which specifies the maximum speed with which the vehicle 102 is to traverse that segment. The navigator 406 can command slower speeds, if necessary, to meet other requirements.

Determining which postures are required to define a path segment by analytical, experimental or a combination of both, is called "path planning".

To bring the discussion full circle, a sequence of contiguous routes, as mentioned above, is referred to as a "cycle," and a vehicle 102's work goals determine its "cycle."

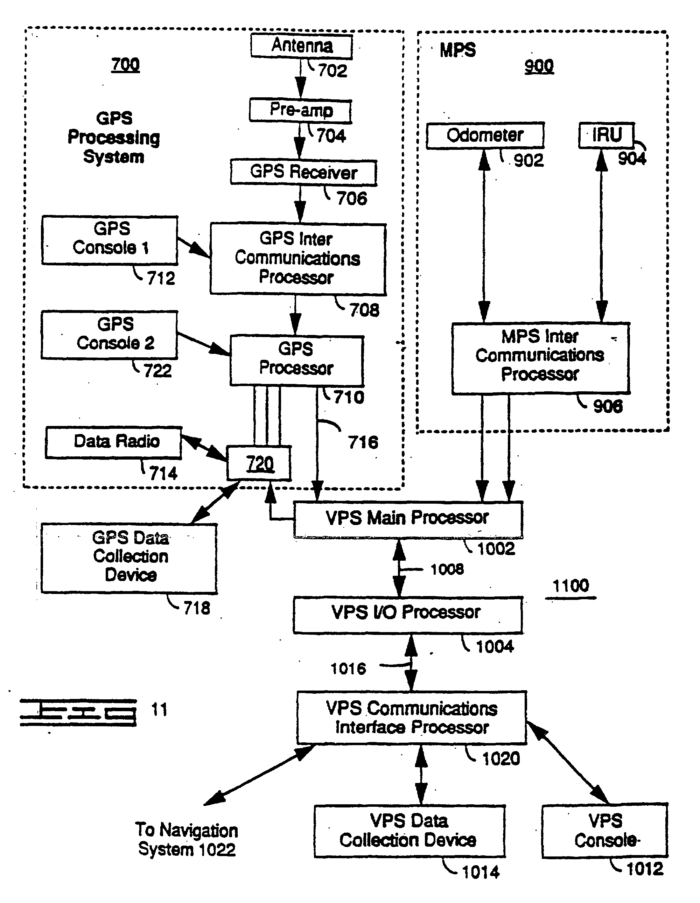

Therefore, to define a route one must first define the nodes and segments. Next, the nodes and segments must be ordered. Finally the routes must be defined by specifying where in the ordered set a route is to begin, and in which direction the ordered set is to be traversed (See Figure 12 which illustrates these concepts of the present invention).

The aforementioned method of defining routes was developed for memory efficiency.
It is also a convenient way to define many routes on a specific set of nodes and segments.

In a real world example, picture a site where there are many intersecting roads 326. A route programmer would define nodes at the intersections, and segments to define the roads between the intersections. Routes would therefore be determined by the roads and intersections. There will however, be many ways to get from point A to point B (many routes) with a fixed set of intersections and roads.

The path-tracking method uses route curvature to steer the vehicle. Methods of route definition using lines and arcs do not provide for continuous curvature. Clothoid curves are another way to define routes.

Another method of defining routes developed by the inventors, fits B-splines to the driven data. B-splines provide continuous curvature and therefore enhance tracking performances. In addition, since B- splines are free form curves, a route may be defined by a single B-spline curve. By using free form curves, a more robust method (semi-automatic) for fitting routes to data collected by driving the vehicle over the routes is produced,

Referring to Figures 4 and 12 in operation, the host processing system 186 from the base station 188 commands an identified vehicle 102 to take route N from its present location. The navigator 406 functions to generate a path by translating "route 1" into a series of segments, each of which may have a "posted" or associated maximum speed limit, which together form a generated path for the vehicle to attempt to follow. By specifying routes and commanding the autonomous vehicle 102 with high-level commands this way, enormous data requirements and inefficiencies are avoided in giving directions.

The navigator 406 stores the routes as a linked-list of path segments, rather than the set or series of sets of individual points. These segments are also abstractions of the set of points between defined locations or nodes.

A LINKER then takes given path segments and generates a linked-list of control points, allowing for flexibility and efficiency. Path segments are shared by different routes, as is shown in Figure 12.

The path segments are stored in a memory called the TARGA 5302 as a set of arcs, lines, and postures. For instance, an analytical generator function generates paths using these arcs, lines and postures. In another example, B-splines are used as a mathematical representation of a route, as mentioned above.

In another example, "clothoid" curves are used in generating path segments.

## 2. ROUTE CREATION AND STORAGE

### a. INTRODUCTION

In one embodiment of the present invention, in order to create routes for a site 300, data is first collected from the VPS 1000 and stored while a human drives the vehicle 102 over the road system of the work site 3000. Nodes and segments are then fitted to the stored driven data, and opganized into routes per the aforementioned procedure.

An application on an APOLLO Computer (now HEWLETT-PACKARD of Palo Alto, California) work station (a graphics display system, not shown) was developed to graphically fit route data to the stored driven data and to further define routes (that is, speeds, sequences; starting point, traversal direction). Any graphics work stations equivalent to the APOLLO could be used.

Once the routes for a site are defined, the route data is written to a permanent storage device. The storage device used may be a bubble memory cartridge 5302 with an associated reader/writer. The bubble memory device 5302 is durable and retains the data when power is disconnected. The APOLLO application is capable of writing data to a cartridge 5302 and reading data from a cartridge 5302.

As implied above, routes may be predefined, or they may be generated dynamically.

In mining applications, generally a site 300 is surveyed and roads are pre-planned, carefully laid out and built. The routes used by the navigation system may then either be obtained from a manually created computer data base (created specifically to be used by the navigation system), or alternately, a vehicle may be physically driven over the actual routes on site to learn the routes as described above. In the learning method, several trips over a given route may be made. Then the variations in the data (due for instance to driver weaving) are averaged, and a smoothed-out best fit developed.

b. ROUTE DEFINITION

In an example system, the following method may be used for route definition.

1. Define the nodes the segments upon which the routes will be built. Place the node and segment data into an array called the "routeData" array. Each record in the array contains the following information.

1. Type of item (that is, node, linear segment, circular segment, end of route marker)
2. If node item, define the north and east coordinates of the node.
else if linear segment item, define the speed along the segment.
else if circular segment item, define the north and east coordinates of the center, the radius, the direction the circle is traversed (that is, clockwise, or counterclockwise), and the speed along the segment.
else if end of route marker, there is no other information.

2. Link the node and segment data together into sequences. The sequences are simply an array of indexes into the routeData array. Each sequence must begin with an end of route marker, followed by a node, then the remainder of the sequence alternate between segments and nodes until the sequence is terminated by another end of route marker. An example sequence would be,

    1, 6, 3, 4, 7, 9, 10, 23, 78, 1

    where the integers are indexes into the routeData array.

3. Finally define a route by specifying an index into the sequence array and whether to index through the sequence in the positive or negative direction. Place the index and index direction into an array called the "routeSpec" array. An item in the route spec array may look like the following:

6, 1    This specification defines a route which begins at node 6 and is indexed in the positive direction.
78, -1    This specification defines a route which begins at node 78 and is indexed in the negative direction.

A user simply tells the vehicle which item in the routeSpec array to use as a route.

4. The aforementioned data is stored onto the storage device in the order which it was defined in steps 1 - 3.

c. NAVIGATOR ROUTE USAGE

The following describes how the navigator 406 may use the defined routes from the above method,

When the navigator 406 is powered on it reads the route information from the storage device 5302 and stores it in RAM in the syntax already presented.

Next the operator specifies a route for the vehicle 102 to follow. Again, the route is simply an index into the routeSpec array.

When the navigator 406 decides that all systems are ready for auto-operation, it sends a message to the vps_posture task 5324 telling it to engage.

The vps_posture task 5324 then determines the position, along the route which is closest to the vehicle 102's present position 2812. The search for the closest position 284 on the route proceeds as follows:

1. A pointer is set to the first segment in the route.
2. The perpendicular distance from the vehicle position to the segment is determined.
3. The pointer is moved to the next segment in the route.
4. The perpendicular distance from the vehicle position to the next segment is determined.
5. Repeat steps 3 and 4 until the end of route marker 2218 is reached.

6. Determine the distance from the vehicle position to the end points 2218 of the route.

7. Set a pointer to the route segment which had the closest distance and store the coordinates of the closest distance.

The vps_posture task 5324 then uses the description of the route (lines, arcs and speeds) to generate posture at one meter intervals. The task 5324 generates a predefined distance of postures plus a safety margin and puts the postures into a buffer 3000. To generate a posture which is one meter from a given posture the vps_posture task 5324 uses the following procedure:

1. Determine the type of segment from which the given posture was generated.

2. Use the proper formula for the type of segment to determine the change in north and east per meter of segment length.

3. Add the change in north and east per meter to the last given posture.

4. If the generated posture is beyond the end of the current segment, set a pointer to the next segment and repeat steps 2 and 3. else, return the generated posture.

The vps-posture task 5324 then informs the executive 5316 that it is ready for tracking.

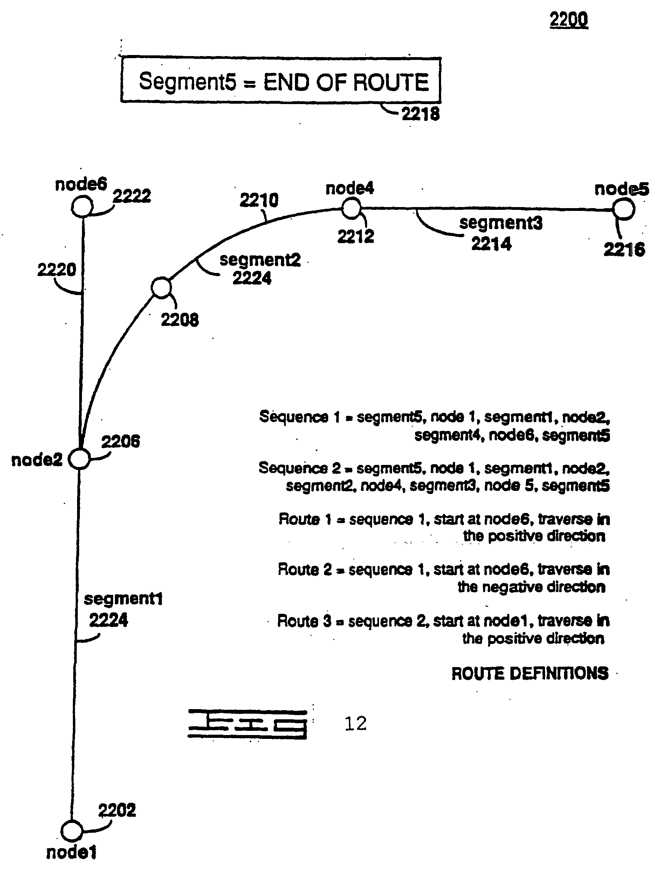

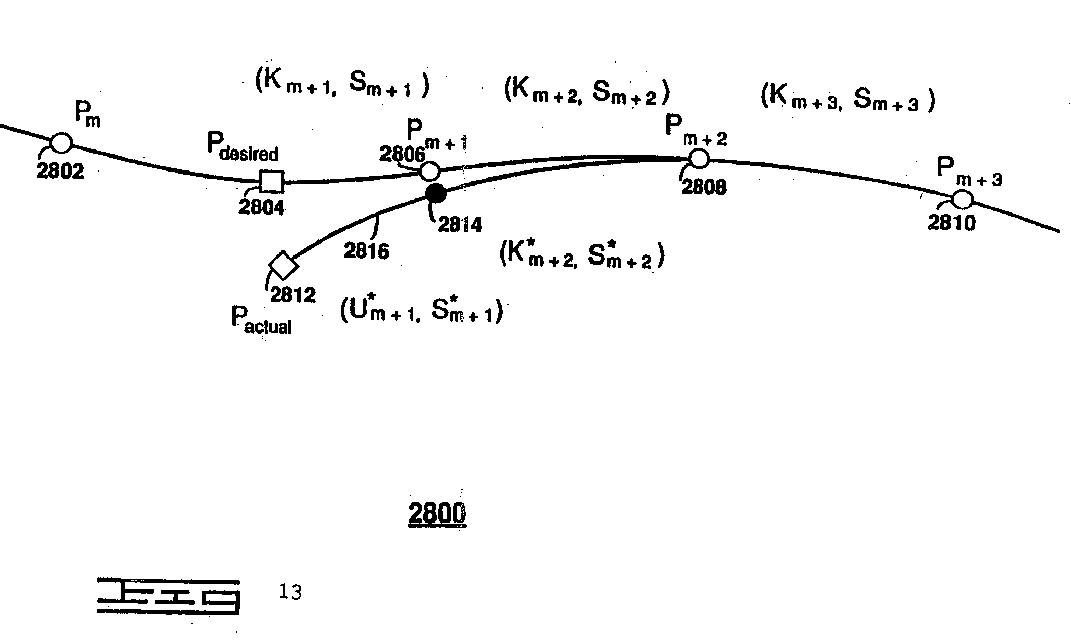

As the autonomous vehicle 102 moves along the posture in the buffer 3000, the safety margin 3006 is depleted. When the safety margin is below a specified amount, the vps_posture task 5324 generates another safety margin 3006 of postures and appends them to the current buffer 3000. The vps_posture task 5324 depletes the posture buffer 3000 by monitoring the current position 2812 of the vehicle 102 and moving a pointer 3002 in the buffer 3000 to the nearest posture. The posture buffer 3000 is constructed as a ring which is traversed in the clockwise direction (see Figure 14, Posture Ring Buffer). That is, postures are placed in the ring such that the direction of vehicle travel corresponds to a clockwise traversal of the posture ring buffer 3000. Therefore, as the vehicle 102 moves the pointer 3002 to the nearest posture in the buffer 3000 will be moved in the clockwise direction. When the pointer 3002 will be moved in the clockwise direction, memory in the ring behind posture (counterclockwise of the pointer) is free to be over written.

Step 7 (in the search routine above) is registered until the end of route marker 2218 is reset at which time the vps_posture task 5324 ceases to generate posture and informs the executive 5316 that it has reached the end of the route.

As mentioned above, a path is as a series or sequence of contiguous "postures." A posture includes the speed and steering angle required to be on track. A posture may include latitude, longitude, heading, curvature (1/turning radius), maximum velocity and distance to next posture information.

### 3. POSTURE GENERATION

The tracking method of the present invention, requires certain information about the route it is tracking. The information is contained in a packet called a "posture" 3314. A single posture 3314 may contain position (that is, north and east coordinates), heading, and curvature data, for a specified location on the route. Therefore, a way of producing posture data from the route specification is required

Among the navigator tasks, (discussed below) is a task which reads the route information and produces postures at intervals (one meter for instance) along the route which are used by the tracking method. In an example system, each posture requires 36 bytes of memory which translates to about 36k of memory for each kilometer of route. To reduce the memory requirements, the navigator buffers posture data.

The task which produces the postures reads the current position of the vehicle 102, finds the nearest point on the route to the current position, then generates a specified number of postures ahead of the vehicle 102. The number of postures generated is dependent on the maximum stopping distance of the vehicle 102. That is, there should always be enough postures in the buffer 3000 to guide the vehicle 102 to a stopping point.

In the B-spline approach to route definition the need for a posture buffer is eliminated, since the tracking method is able to directly produce posture information from the B-spline curve.

### C. PATH TRACKING

### 1. INTRODUCTION

Path tracking or following is a critical aspect of vehicle navigation in the example system.

The technique uses position based navigation (rather than vision based navigation used in conventional navigation systems) to ensure that the correct autonomous vehicle path 3312 is followed. The present invention is also innovative in that it provides for separate control of steering angle 3116 and vehicle speed 3118. Figure 20 graphically illustrates a path tracking system 3102.

For an autonomous vehicle 102 according to the present invention to track specified paths, it is necessary to generate referenced inputs for the vehicle servo-controllers. Thus, path tracking can be considered as a problem of obtaining a referenced steering angle and a reference speed for the next time interval in order to get back to the referenced path ahead from the current deviated position.

In general terms, path tracking is determining the autonomous vehicle commands (speed, steer angle) required to follow a given path. Given a pre-specified steering angle, driven wheel velocity values and error components, the command steering and driving inputs are computed in the present invention.

2. <u>CONSIDERATIONS</u>

a. <u>GLOBAL POSITION FEEDBACK</u>

The path to be tracked is specified in Cartesian coordinates. If the control scheme consists of only a servo-control to reference steering commands, vehicle position and heading errors accumulate. Position and heading result from integrating the whole history of steering and driving. Thus, it is necessary to feedback vehicle position 3304 and heading 3318 in Cartesian space.

Consequently, referenced inputs to the servo-controllers are generated in real time, based on positioned feedback 3114 (as shown in Figure 15).

b. <u>SEPARATE STEERING AND DRIVING CONTROL</u>

Steering and driving reference inputs are computed in the present invention, from the given path and vehicle speed, respectively. This enables easy integration of path tracking with other modules of the present invention, such as collision avoidance.

3. <u>EMBODIMENTS</u>

a. <u>TRACKING CONTROL STRUCTURE (Figure 15)</u>

One of the challenges of vehicle autonomy is to determine the steering inputs required to track a specified path. For conventionally steered vehicles, in the present invention the desired path and the desired speed along the path can be tracked separately, reducing the problem to one of controlling the steering. (A path, for this discussion, being a geometric curve independent of time in contrast to a trajectory, which is a time history of positions.)

Steering angles are planned from the desired path 3312 and sensed vehicle positions. These angles are commanded to. the vehicle via a steering controller 3104.

The functional block diagram in Figure 15, shows a tracking control structure according to the present invention.

In kinematic steering schemes, errors in position, heading and curvature are reduced based on the geometry of the errors without consideration of actuator saturation, compliance, any friction or mass terms. Tuning values, such as look-ahead distance and selection of curvature on the path, are selected through empirical trials and simulations in order to get good performance.

In a manually driven vehicle, the look-ahead distance is the distance 3310 in front of a vehicle that a driver looks during driving. The look-ahead distance in the example system is the distance by which the errors in position, heading and curvature are planned to be reduced to zero. It varies with the speed of the conventional or autonomous vehicle.

Varying the look-ahead distance varies the degree to which steering adjustments must be made to effect a change of course. Look-ahead distance is discussed in more detail in a following section.

However, real vehicles depart from kinematic idealization, and their control response departs accordingly. As vehicle speed, mass and path conditions change, actual vehicle response departs even further from kinematic idealization. Hence, kinematic idealization is generally valid only at low speeds with constant conditions.

An embodiment of the present invention uses a model which includes considerations of cornering stiffness, mass and slip angle. The control problem is formulated as a linear quadratic optimal tracking problem where the errors in position, heading and curvature are minimized based on the vehicle control model.

The optimal path and controls are computed from the desired path 3312 and the currently sensed vehicle position using the current errors as initial conditions to the optimal control problem. A few computed steering angles along the initial part of the optimal path are used as references to the low level steering controller for the next sensing time interval.

This preview optimal steering planning has the advantage of guaranteeing stability and optimality with respect to the given performance index. The optimal preview control method of the present invention is central to the steering planning of an autonomous vehicle.

Turning again to Figure 15, the inner loop 3116 of steering control 3104 is executed on the order of 10 milliseconds, while the outer loop 3114 is closed at the rate of 0.25-0.5 second.

The following procedure is used to close the loop on position. After sensing the current position ($Pa_{,k}$) 3210, the posture at the end of the current time interval ($\underline{P}_{a,k+1}$) 3216 is expected.

Then, the desired posture at the end of the next time interval ($P_{d,k+2}$) 3218 is computed in a referenced steering angle between ($\underline{P}_{a,k,+1}$) 3216 and ($P_{d,k+2}$) 3218 are determined.

Significantly, as mentioned above, these vehicle and path techniques of the present invention, decouple steering control from velocity control at the vehicle.

b. <u>QUINTIC METHOD</u>

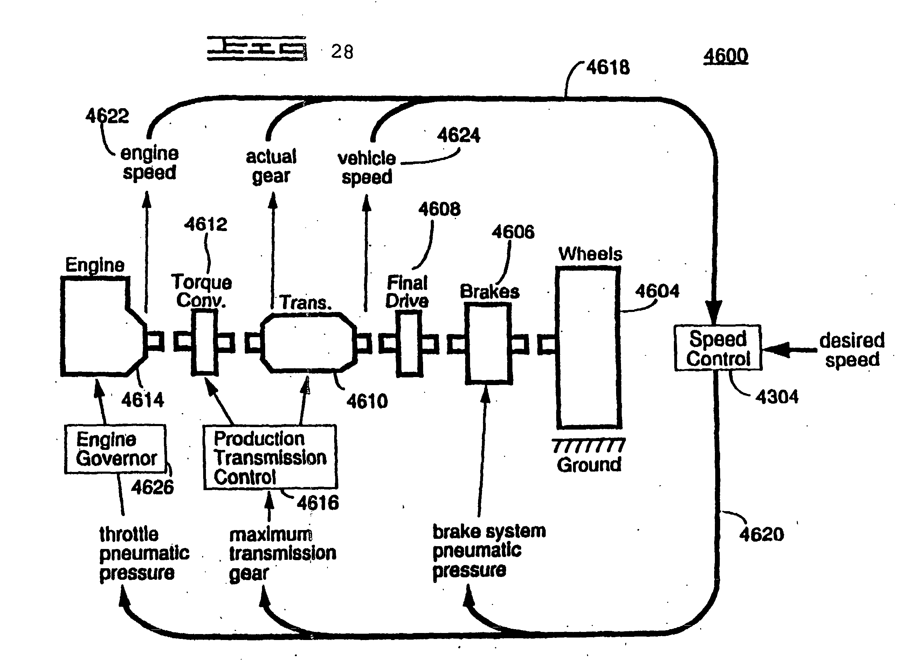

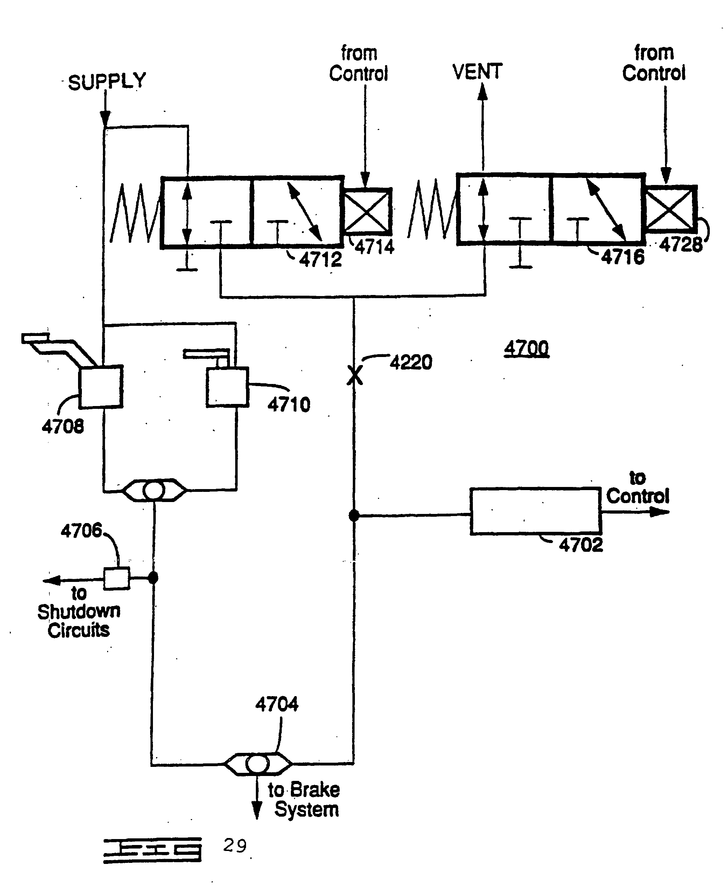

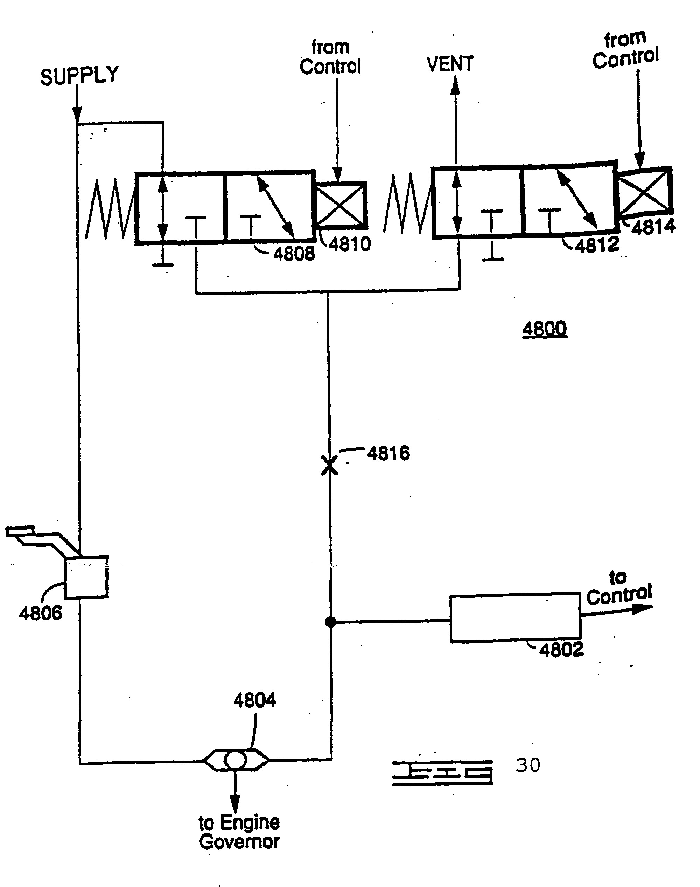

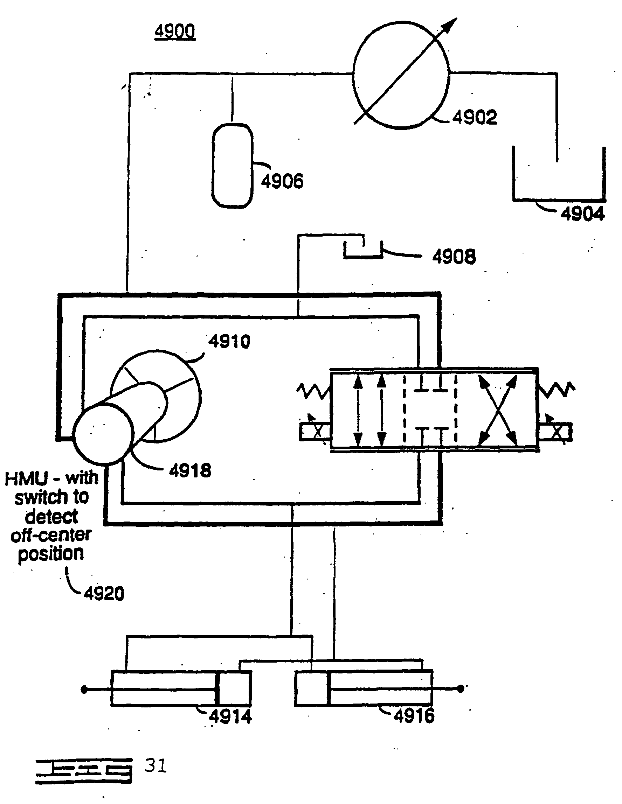

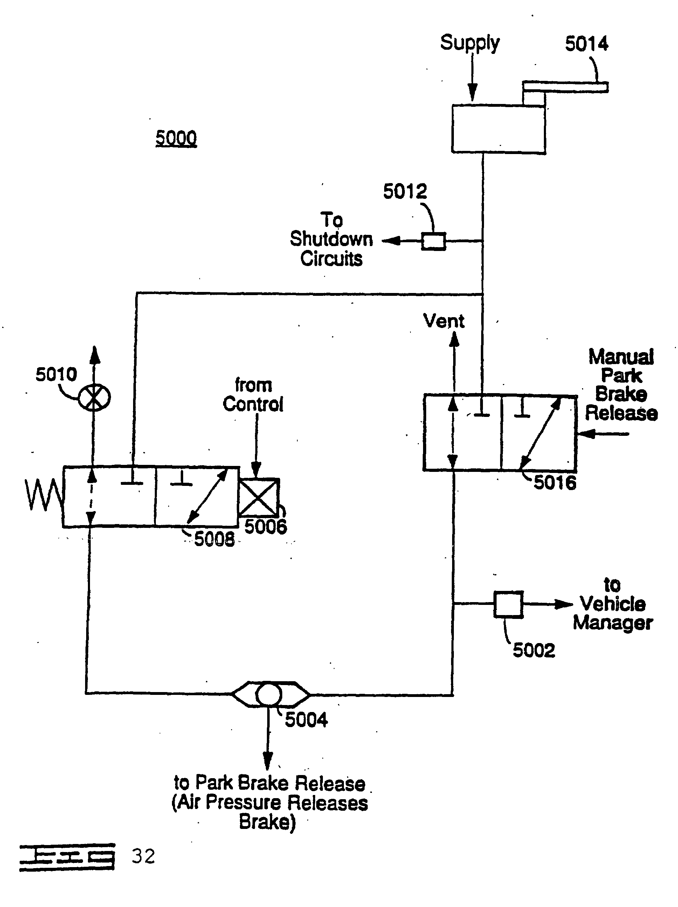

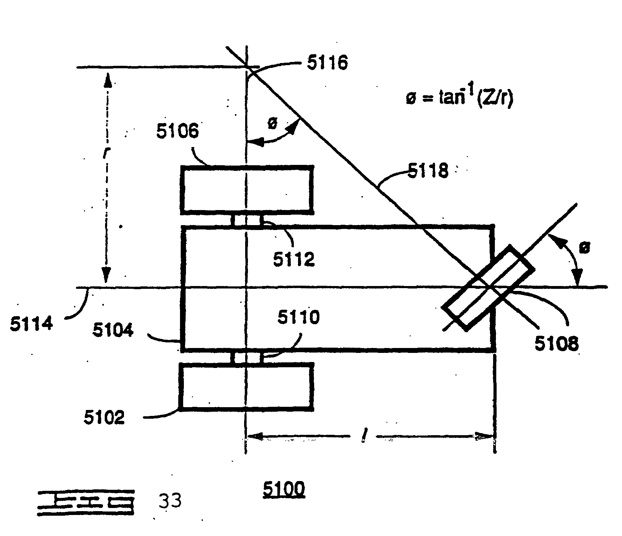

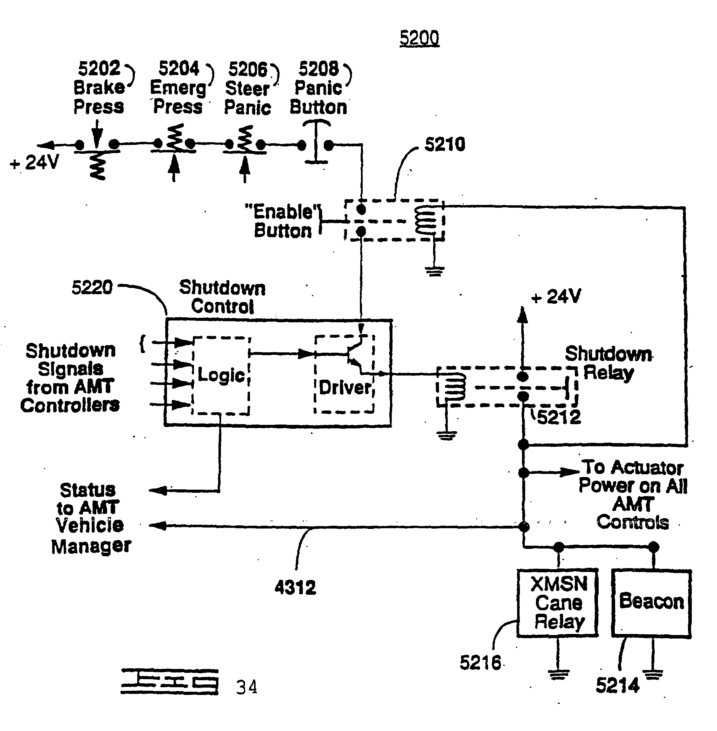

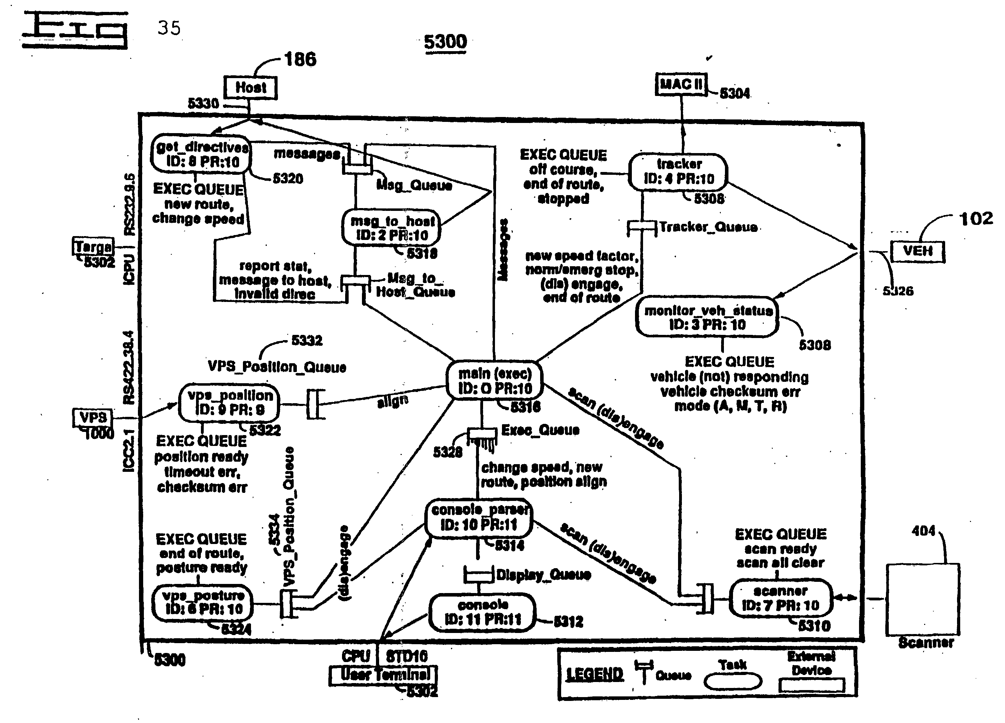

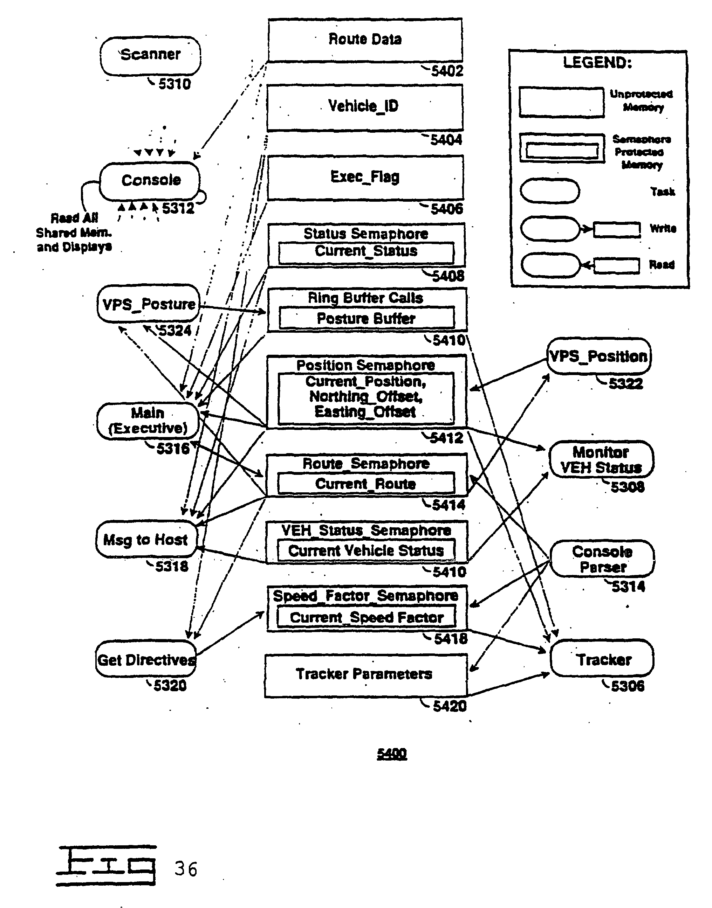

Shown in the navigator task diagram, Figure 35 , which is discussed in more detail below, is a functional block called the tracker 5306. The tracker 5306 operates to construct a smooth path back to the desired or correct path. In an example system, a quintic method is used. This involves a fifth order curve in error space for steering commands.

The quintic polynomial method of the example system replans a simple, continuous path that converges to a desired path in some look-ahead distance 3310 and computes a steering angle corresponding to the part of the replanned path 2816 to be followed for the next time intereal.

If the desired path is considered as a continuous function of position and the vehicle is currently at Pa 3320, an error vector can be calculated (Figure 17) that represents error in the distance transverse to the path (e0) 3322 relative to Po 3304, in heading (Bo) 3322, and in curvature (yo) 3404. If the vehicle is to be brought back onto the specified path within distance L 3310 (measured along the reference path), six boundary conditions can be stated corresponding to the initial errors and to zero errors at PL.

$$\varepsilon(P_o) = \varepsilon_o; \qquad \varepsilon(P_L) = 0$$

$$\beta(P_o) = \beta_o; \qquad \beta(P_L) = 0$$

$$\gamma(P_o) = \gamma_o; \qquad \gamma(P_L) = 0 \qquad\qquad \text{(EQ. 11)}$$

A quintic polynomial can be constructed to describe the replanned path (in error space) as follows:

$$\varepsilon(s) = a_0 + a_1 s + a_2 s^2 + a_3 s^3 + a_4 s^4 + a_5 s^5 \qquad\qquad \text{(EQ. 12)}$$

where s is in the set of [0,L]

The expression for e(s) gives the error along the replanned path 2816 from Po 3304 to PL 3308. The second derivative describes path curvature, which can in turn, be used to calculate a steering command to guide the vehicle back to the desired path 3312. Variation in the steering angle 3116 from the replanned path 2816 (or in error space) is computed from the second derivative of error function e(s). Then, curvature along the new path can be computed as:

$$C_{new}(s) = c_{old}(s) + \frac{d^2\varepsilon(s)}{ds^2} \qquad\qquad \text{(EQ. 13)}$$

The reference steering angle 3112 along the new path can be converted from curvature. Since this procedure is executed at every planning interval, the entire new path back to the reference path 3312 is not required. Only the steering angle 3112 for the next time interval is computed from the curvature at the point on the new path that can be achieved in the next time interval.

The look-ahead distance, L 3310, is a parameter that can be used to adjust how rapidly the vehicle steers to converge to the desired path. Additionally, better performance is obtained if L 3310 is chosen proportional to the vehicle speed because for small values of L 3310, the vehicle oscillates around the path 3312, while for large values of L 3310 the variation introduced by the quintic polynomial is small enough that the tracking performance is poor.

Since there are six boundary conditions used: $e_{p0}$ - error in position at the current position (distance) and $e_{p1}$

(look-ahead), $e_{h0}$ - error in heading and $e_{h1}$ (look-ahead), and $e_{c0}$ - error in curvature and $e_{c1}$ (look-ahead), a fifth order curve is required. This is used to generate a steering angle 3112.

Recall that path tracking schemes in general, perform better when the path specified is intrinsically easier to track. This is especially the case when the steering actuators are slow compared to the speed of the vehicle.

Other vehicle characteristics, like steering response, steering backlash, vehicle speed, sampling, and planning time intervals significantly affect vehicle performance. As expected, at higher vehicle speeds, faster and more accurate actuators are necessary, if sensing and planning time intervals are kept constant.

An advantage of the quintic polynomial method in general, is that it is simple, and reference steering angles can be computed very easily. However, since there is no consideration of vehicle characteristics (mass, inertia, time delays, vehicle ground interaction, and so on) in the control scheme, stability and convergence are not guaranteed.

The parameter L 3310 (look-ahead distance) can be adjusted to modify response to the vehicle, and the value of L 3310 can be chosen based on trial and error. This scheme has provided good results at speeds up to approximately 28 Km per hour at the time this application disclosure was prepared.

The method used by the tracker of the present invention is:

(1) estimate the next position by either averaging or evaluating the states of position;
(2) compensate for delays using either of the estimating methods
(3) dynamic look-ahead changes at different speeds - the coefficients of the quintic: look-ahead distance.

## C. LATENCY AND SLOW SYSTEM RESPONSE

An additional path tracking example system may use various compensation techniques to improve vehicle response characteristics. This is used in conjunction with the quintic polynomial method to realize improved tracking performance.

Some vehicle response characteristics include latency of vehicle control commands, slow system response, and vehicle dynamic characteristics including vehicle-ground interaction (VGI), (slip angle and under/over steer).

The latency of vehicle commands can be compensated by modifying the vehicle control hardware to reduce time delays, and by utilizing a method which sets control commands far enough in advance to compensate for the existing delays.

Decreasing the time lag between when the vehicle position is sensed and when the command is issued reduces prediction errors, which reduction is required to plan steering angles, and results in better tracking performance.

A varying look-ahead distance with speed also improves the tracking performance in comparison to the constant look-ahead distance.

A tracking method outputs steering and speed commands over a serial link to a vehicle control system. The vehicle control system is a multi-processor, multi-tasking system, relying on a mailbox queue for communication between tasks.

This mailbox queue is composed of two types of queues, a high performance queue and an overflow queue. During high data flow rates from the tracking task, the high performance queues spill into the overflow queue, degrading the performance of inter-task communication. This can result in total latency times between the tracking task and actual steering actuator commands which are on the order of seconds.

The steering dynamics may be modeled as a first order lag system. It takes a period equivalent to one time constant for a first order lag response to reach approximately 63% of the desired final value. As can be appreciated, for slow systems with large time constants, the response time can be significant.

To resolve the latency and response problems, hardware may be adjusted to be used in close conjunction with the tracking method to control vehicle steering, and a new control scheme devised to compensate for pure time delay and poor response.

The hardware may be adjusted, for example, to reside on the same back plane as the processor which executes the tracking method and controls the vehicle steering system directly. This serves to eliminate delays due to the serial link and queuing.

To compensate for the remaining delays (delays due to processing time of the tracking method and inter-task communication within the tracking system), a method which sends speed and steering commands in advance to counteract any delays is used.

The method may be executed as follows:

sense the current position $P_{actual}$

(Initialization: $P_{actual}$ = P[0] = P[1] = ....= P[d_index+1])

compute error between predicted and sensed position:

$$P_e = P_{actual} - P[0] \text{ for } i = 0, \text{ d\_index}$$

$$P[i] = P[i+1] + P_e$$

compute the position on the path corresponding to the position of the beginning of the time interval: get $P_{on}$

$$(P[d\_index], P_{on})$$

get initial condition:errors(O) = P[d_index] - $P_{on}$
compute a quintic polynomial curve in error space [1]
predict a position at the end of the planning time interval;
get despos ($P_{on}$,$d_s$,P+d_index+1)
P[d+index+1] + = errors(ds)

For example, to compensate a system which has time delays on the order of two planning intervals (on the order of 250 mSec), the variable d_index is set to 2.0.

Tracking performance improves as the compensation index (d_index) is increased to match the delays inherent to the system.

d. <u>VEHICLE-GROUND INTERACTION (VGI)</u> :

Reference commands for steering angle and vehicle speed result in varying angular velocities and accelerations of the vehicle wheels.

VGI describes how the vehicle moves, given steered wheel angles and wheel angular velocities. The principal VGI phenomena are slip angle and under/oversteer characteristics which are based on the tire/road contact region geometry, and are affected by tire elastic deformation. These phenomena require a larger steering angle as compared to a kinematically computed one.

e. <u>SENSING AND ACTUATION TIMING</u>

Since actual path tracking is controlled by digital processors in the example system a discrete time interval is used. It is governed by the position sensing time interval (which may be on the order of 0.25 Sec) which is much longer than the computing time required for steering planning (which may be on the order of 16 mSec).

At times, especially when the discrete time interval is large, poor predictions of the vehicle position may be made which degrade performance of the tracking method.

```
                              k              k+1            k+2

                              executed

old sensing and    ___|_____|_____|___
actuation timing

                              sense P_k
                              expect P_{k+1}
                                plan ϕ_{k+1}
```

A compensation method serves to reduce the error in predicting the next vehicle position by decreasing the discrete time interval. In this method, the vehicle position is predicted for the end of the computing interval (16 mSec) rather than at the end of the planning interval (250 mSec). The method is executed as follows:

sense the current position $P_{actual}$

$$(\text{Initialization: } P_{actual} = P[0] = P[1] = .... = P[d\_index+1] = P_{actual},k+1$$

compute error between predicted and sensed position:

$$Pe = P_{actual} - P_{actual}, k+1$$

for i = 0, d_index

$$P[i] = P[i+1]+ P_e$$

compute the position on the path corresponding to the position of the beginning of the time interval:

$$\text{get } P_{on}(P[d\_index], P_{on})$$

$$\text{get initial condition: errors } (0) = P[d\_index] - P_{on}$$

compute a quintic polynomial curve in error space
compute a quintic polynomial curve in error space[1]
predict a position at the end of the planning time interval:

$$\text{get despos } (P_{on}, d_s, P+d\_index+1)$$

$$P[d+index+1] \mathrel{+}= errors(ds)$$

predict a position at the next sensing time:

$$P_{actual}, k+1 = P[0] + (P[1] - P[0])*(dt\ plan- dt\ comput)/dt\ plan$$

f. <u>LOOK AHEAD</u>

Human operators use different look-ahead distances 3310 when driving. At slow speeds, a driver generally looks at a point on the road relatively close to the vehicle, while at higher speeds, this point is generally farther ahead of the vehicle. The higher the speed, the farther ahead the reference point is, resulting in smaller steering corrections.
Thus, in an autonomous application, a look-ahead distance which varies with speed, logically helps to improve tracking performance.
A desired steering angle may consist of a steering angle from the reference path 3312 and a steering angle 3112 which is computed with a quintic method to correct for tracking errors. These steering angles are summed to give the vehicle steering command as shown in equation (1) below:

$$\Phi = \Phi_{ref} + \Phi_{error}$$

Note that look-ahead in the autonomous scheme affects only $\Phi_{error}$, even though look-ahead in manual driving affects both the reference and error compensating steering angles. Shorter look-ahead values result in large steering corrections; the look-ahead distance can therefore be interpreted as a gain in an error feedback system.
An arbitrary model for varying look-ahead distance (L) with speed (V) is expressed with three parameters, $V_{ref}$, $L_{ref}$, and slope, as shown in equation (2) below:

$$L = slope * (V-V_{ref})+L_{ref}$$

where V is the speed of a vehicle and L should be between $L_{min}$=10 and $L_{max}$=30 . Tracking performance is improved with the varying look-ahead distance 3310.

g. <u>OPTIMAL CONTROL METHOD</u>

As mentioned above, an example system uses a model which includes considerations of cornering stiffness, mass and slip angle.
The control problem is formulated as a linear quadratic optimal tracking problem where the errors in position, heading and curvature are minimized based on the vehicle control model. The optimal path and controls are computed from the desired path 3312 and the currently sensed vehicle position 3304 using the current errors as initial conditions to the optimal control problem.
A few computed steering angles along the initial part of the optimal path are used as references to the low level steering controller for the next sensing time interval. This preview optimal steering control has the advantage of guaranteeing stability and optimality with respect to the given performance index. The optimal preview control method according to the present invention, is applicable to the steering planning of an autonomous vehicle 102.
The model is derived from a standard telescoped, or bicycle model (not shown) or approximation of the vehicle. The equations describing the vehicle motion include terms which represent the VGI described earlier. These equations use the state variables:

$$X = [\, x, y, \theta, \dot{\theta}\, ]$$

where x and y represent the global position of the vehicle; $\theta$ is the heading 3318 of the vehicle, and $\dot{\theta}$ is the rate of change of heading.
Using these variables, the equations are:

$$\dot{x}_1 = - x_3\sin(x_4) + V_n\cos(x_4)$$

$$\dot{x}_2 = x_3\cos(x_4) + V_n\sin(x_4)$$

$$\dot{x}_3 = - \frac{(C_{\alpha F} + C_{\alpha R})}{mV_n}\, x3$$

$$+ \left\{ \frac{(bC_{\alpha R} - aC_{\alpha F})}{v_n} - V_n \right\} x_5$$

$$\dot{x}4 = x5$$

$$\dot{x}_5 = - \frac{(bC_{\alpha R} - aC_{\alpha F})}{IV_n} x_3$$

$$- \frac{(a^2 C_{\alpha F} + b^2 C_{\alpha R})}{IV_n} x_5 + \frac{aC_{\alpha F}}{I} u_1$$

$$u_1 = \delta \qquad C = \left[ \frac{mL}{t} \right]$$

where:

| | |
|---|---|
| $V_\xi$: | lateral velocity |
| $v_n$: | constant forward velocity |
| $\delta$ : | steering angle |
| $\alpha_F$: | slip angle |
| $v_F$: | speed of the front wheel |
| $F_F$: | lateral force between front wheel and ground |
| $F_R$: | lateral force between rear wheel and ground |
| m: | vehicle mass |
| I: | vehicle moment of inertia |
| $\theta$: | vehicle heading |
| $C_{\alpha F}, C_{\alpha R}$ : | Front and rear tire cornering stiffness |

x,y: inertial system

It is well known in the art of optimal control theory, that a cost function must be selected which is used to minimize selected parameters in the system. The cost function used in this problem was selected as:

$$
\begin{aligned}
J(t) = \frac{q_f}{2} \big[ \{ x_1(t_f) - x_d(t_f) \}^2 \\
+ \{ x_2(t_f) - y_d(t_f) \}^2 \big] \\
+ \frac{1}{2} \int_{t_o}^{t_f} \{ R_1 \{ \dot{u}_1(t) \}^2 + \{ x_1(t) - x_d(t) \}^2 \\
+ \{ x_2(t) - y_d(t) \}^2 \big] \, dt \qquad (EQ. 15)
\end{aligned}
$$

There are several problems to solve the optimal control problem with the state equations (14) and the cost function (15) ;

1. The system is nonlinear. Usually, a two point boundary value problem which results from a nonlinear system does not have an analytic solution. Numerical solutions, on the other hand, take a long time to compute.
2. The resulting optimal control problem is a free final time problem. Generally fixed final time problems are simpler to solve than those with free final time.
3. The first term inside the integration (within the above cost function) is the time derivative of the control input, which is not usual in a quadratic cost function of an optimal control problem. However, the time rate change of steering is very important for smooth path following, because it is directly related to the time rate of change of centrifugal force (due to lateral accelerations of the vehicle).

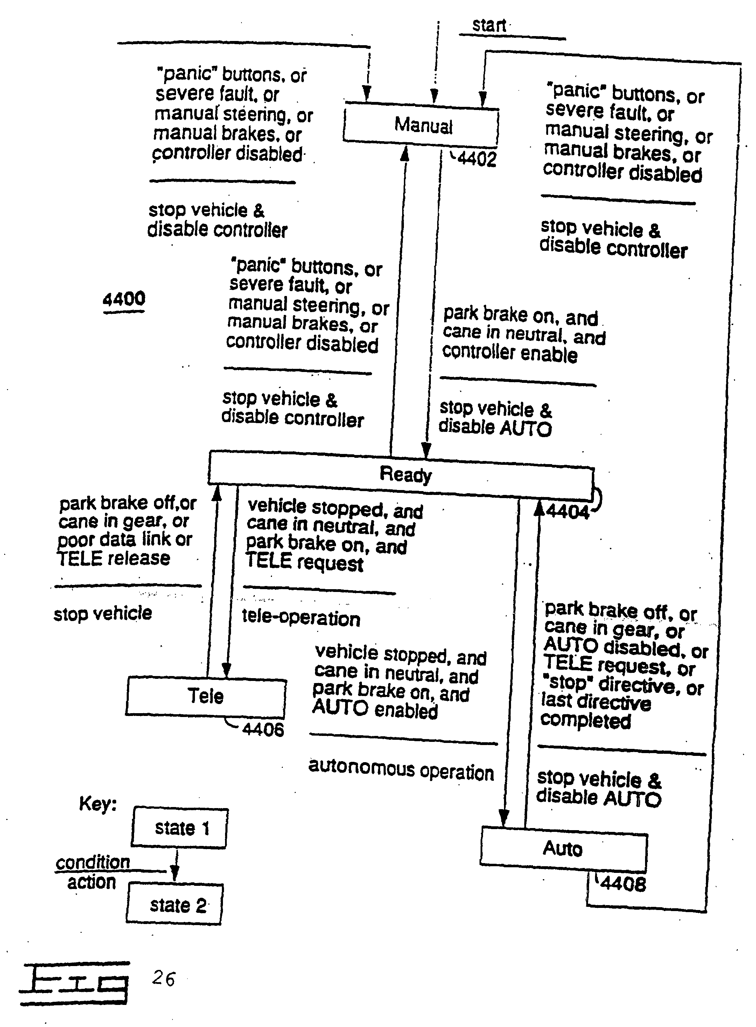

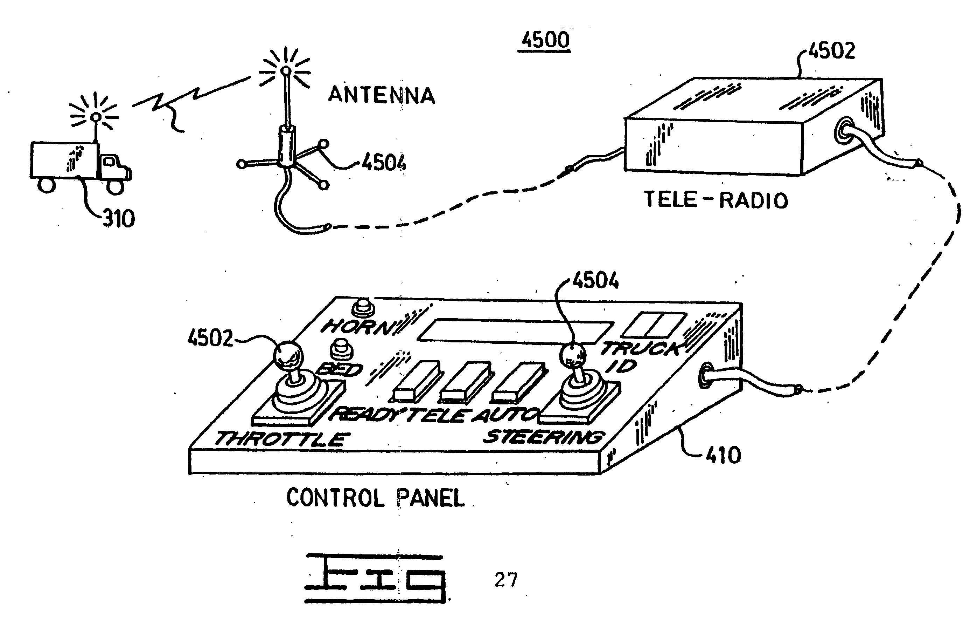

Note that the steering angle is dependent on the curvature of the path as in Figure 33.
The following approaches are applied in order to overcome the above three problems and to make the resulting optimal control problem tractable:

1. Since the sinusoidal functions in the first and the second equations of (14) make the system nonlinear, a new coordinate system, an axis of which is parallel to the tangent direction of the corresponding point of the path to the current vehicle position, is used. The deviations only in the lateral direction are considered in the cost function. These two approximations not only eliminate the nonlinearity in the system equation but also reduce the number of equations to deal with; the first equation of (14) is not required now. (Refer to "Coordinate Systems.")
2. This problem with free final time, $t_f$, can be converted to the one with a fixed final value of the independent variable by writing the differentials in the equation of motion with respect to the forward distance. To this end, a non-dimensional independent variable, s, is defined as:

$$
\bar{s} = \frac{s}{s_f} \quad \frac{d\bar{s}}{dt} = \frac{\dot{s}}{s} = \frac{V_n^2 V_\xi^2}{s_f} \quad s_f = accel
$$

3. To solve the third problem pointed out above, a new state vector and a control input are defined as:

$$
X_{new} = [X_{old}, U_{old}]^T, \quad U_{new} = \dot{U}_{old}
$$

where Xnew satisfies:

$$A_{new} = \left[\begin{array}{c|c} A_{old} & B_{old} \\ \hline 0 & 0 \end{array}\right] \qquad B_{new} = \left[\begin{array}{c} 0 \\ \hline 1 \end{array}\right]$$

$$y = Ax + B$$

where $A_{old}$ and $B_{old}$ denote the old system matrix and the old input matrix.

Then, the state variables and the control input are defined as:

$$Z = [\, \xi, v_\xi, \theta, \dot\theta, \delta \,]^T, u = \dot\delta \qquad\qquad \text{(EQ. 16)}$$

which satisfies the system equations as the following:

$$\frac{d\xi}{ds} = Z'_1 = (Z_2 + v_n Z_3)\, \sigma$$

$$\frac{dV_\xi}{ds} = Z'_2 = [\, - \frac{C_{\alpha F} + C_{\alpha R})}{mV_n}\, Z_2$$

$$+ \{\frac{(bC_{\alpha R} - aC_{\alpha F})}{V_n} - V_n\} Z_4$$

$$+ \frac{C_{\alpha F}}{m}\, Z_5\, ]\, \sigma$$

$$\frac{d\theta}{ds} = Z'_3 = Z_4\, \sigma$$

$$\frac{d\dot\theta}{ds} = Z'_4 = [\, \frac{(bC_{\alpha R} - \alpha C_{\alpha F})}{IV_n}\, Z_2$$

$$- \frac{(a^2 C_{\alpha F} + b^2 C_{\alpha R})}{IV_n}\, Z_4 + \frac{aC_{\alpha F}}{I}\, Z_5\, ]\, \sigma$$

$$\frac{d\delta}{ds} = Z'_5 = u\sigma \qquad\qquad \text{(EQ. 17)}$$

The new cost function becomes:

$$L(Z,\bar{s}) = \frac{q_f}{2}[Z(1) - \xi_d(1)]^2$$

$$+ \frac{1}{2}\int_0^1 \{R_1 u^2(\bar{s}) + \{Z_1(\bar{s}) - \xi_d(\bar{s})\}^2\} d\bar{s}$$

$$(EQ.\ 18)$$

The steering planning with resulting system equation (17) and the cost function (18) above, can be solved as a linear quadratic tracking problem as the following. Suppose the system equation and the cost function are described as

$$\dot{X} = AX + BU, t > t_o \tag{EQ. 19}$$

$$L = \frac{1}{2}[X(t_f) - X_d(t_f)]^T Q_f [X(t_f) - X_d(t_f)]$$

$$+ \frac{1}{2}\int_{t_o}^{t_f} \{[X(t) - X_d(t)]^T Q(t) [X(t) - X_d(t)]$$

$$+ U^T(t)R(t)U(t)\} dt \tag{EQ. 20}$$

and $Qf \geq$, o, $Q \geq$, o, $R \geq$ o
are chosen all symmetric. Then the resulting equations are:

$$-\dot{P} = A^T P + PA - PBR^{-1}B^T P + Q \quad , P(t_f) = Q_f \tag{EQ. 21}$$

$$k(t) = R^{-1}B^T P(t) \tag{EQ. 22}$$

$$-\dot{v} = (A-BK)^T v + QX_d \quad , V(t_f) = X_d(t_f) \tag{EQ. 23}$$

$$U = -KX + R^{-1}B^T V \tag{EQ. 24}$$

Thus, the riccati equation (21) must be solved first and the gains are computed from the result of the riccati equation and then the forcing function driven by the desired path are computed by solving equation (23). Then, the control and states are obtained by solving equation (19) and (24).

The MacFarlane-Potter integration method was tried to solve the riccati equation. This method is known to be very effective for the steady-state solution of the time-invariant problem. since the previewed distance is quite long and the initial parts of the solution are used, this method seems good to reduce the computation time.

Hence, equation (23) is changed as the following equation (25) and solved, because the previewed distance is long and only the inertial part of the solution is used.

$$(A-BK)^T v + QX_d = 0 \tag{EQ. 25}$$

h. CONCLUSION

Tracking performance has been improved by investigating and understanding vehicle and control system dynamics and by designing compensation methods given this understanding.

A degraded performance of a tracking method is attributable to latency of vehicle control commands, slow system response, and vehicle dynamic characteristics. It is possible to counteract each of these effects.

Latency of Vehicle commands, a dominant effect, can be successfully compensated by modifying the vehicle control hardware and by utilizing a method which set control commands far enough in advance to compensate the delays. Decreasing the time lag between when the vehicle position is sensed and when the command is issued reduces prediction errors. This is required to plan steering angles, and results in better tracking performance.

Varying look-ahead distance with speed also improves tracking performance in comparison to using a constant look-ahead distance.

In general terms then, path tracking is the function of staying on course. In path tracking, some of the considerations are errors in distance, heading and curvature, delays in the system including processing delays and delays in vehicle response to actuators, and so on, dynamic look ahead distance, weighted path history, and extrapolation.

D. OBSTACLE HANDLING

1. INTRODUCTION

Obstacle handling involves at least three major functions: detection of obstacles 4002, avoidance of obstacles 4002, and returning to path 3312. The returning to path function is similar to path generation and tracking, as described above.

In addition to path tracking (following), successful navigation of vehicle 102 requires that vehicle 102 be able to detect obstacles 4002 in its path, thus allowing the vehicle to stop or otherwise avoid such an obstacle before a collision occurs.

In one embodiment of the present invention, a single line infra-red laser scanner 404 is used in a configuration where the scan is horizontal (not shown). The scan line does not contact the ground, so any discontinuities in the range data can be attributed to objects 4002 in the environment.

Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

2. DETECTION OF OBSTACLES

a. CLEARANCE CHECKING

In the simplest case of the present invention, the laser 404 may be used in a single line scan mode with successive range measurements being made at regular angular intervals as the laser scans over the field of view. Again for simplicity, these scans can commence at regular time intervals. The term "clearance checking" has been used to describe this method. In this version of the present invention, the method has been limited to processing only two dimensional data.

This type of obstacle method is limited to checking to see if the path 3312 is clear using a single line scan mode with successive range measurements being made at regular angular intervals as the scanner 404 scans over the field of view. It does not include any methods to establish the existence of any obstacle 4002 or to create a path around it if the path is not clear. This type of method is not deemed to be a particularly useful obstacle detection method, except in very rigidly controlled environments, such as on a factory floor.

b. FILTERING AND EDGE DETECTION SCHEME

A second obstacle detection embodiment of the present invention uses a multiple-line scanner, whose scan contacts the ground at some distance in front of the vehicle 102. Since the scan line contacts the ground, discontinuities in range data can no longer be attributed to threatening objects 4002. For example, profiles from natural objects such as hills and banked or crowned roads can cause discontinuities in range data. This technique of the present invention can discern discontinuities in range data between threatening objects 4002 and natural objects (not shown).

In this embodiment of the present invention, a filtering scheme is used to decrease the amount of data processed and is independent of the scanner configuration used. The edges of the boundary zone are found by transferring the range data to an image plane representation 3900 (See Figure 22) , where each range value is located by a row number 3908 and a column number 3910 (a matrix representation).

Processing load is minimized by selecting a relatively small number of the scan lines available in a range image representation 3900. The scan lines are selected by vehicle speed, and are concentrated at, and beyond, the vehicle stopping distance. The selected scan lines from successive frames of data can overlap.

In this method, if the vehicle 102 is moving fast, the selected scan lines 3906 are far in front of the vehicle (near the top of the range image representation 3900). In contrast, when the vehicle is traveling slowly, the selective scan lines 3906 are closer to the vehicle (near the bottom of the range image representation 3900).

Each scan line is made up of many pixels of data. Each pixel has two parameters associated with it. First, the actual value of the pixel is the range value returned by the scanner. Second, the location of the pixel on the scan line gives an indication of the angle, relative to the vehicle centerline, at which the range value was recorded. This corresponds to a cylindrical coordinate frame (R,THETA,Z) description.

Given the cylindrical description and the known scanner location with respect to the vehicle 102, the range values can be converted to a Cartesian coordinate (X,Y,Z) system. The result is a road profile description which can be used by a novel filtering scheme to determine if threatening objects 4002 are present in the vehicle path, while ignoring effects due to natural hills and valleys in a typical roadway.

After the scanner data is converted to Cartesian coordinates, the data is processed to determine which part of the scan is actually on the road 3312 and which part of the scan line is outside of the vehicle path and therefore safely ignored. Given the vehicle position and the width of a boundary (which is equal to the vehicle width plus some safety margin), the coordinates of the boundary on either side of the vehicle path can be determined. The coordinates of the boundary can be compared to the coordinates of each pixel on the current scan line. The pixels which have coordinates outside of the boundary are ignored.

The filtering scheme builds an expectation of the road profile from previously sensed road profiles. This expectation is based on three parameters which were found to adequately describe typical paved roads. These three parameters are:

- **o** road crown: the curvature of the road cross section (perpendicular to the road centerline).
- **o** road bank: the 'tilt' of the road profile (perpendicular to the centerline).
- **o** road height: the height of the road centerline above a reference plane described by the location of the four tires of the vehicle 102.

Expected values of the road crown and the road bank are determined by performing a standard, least-squares Kalman filtering technique on previously sensed scanner data. The Kalman filter basically keeps a type of running average of the two parameters based on the values determined from the previous data.

In accordance with the present invention, the expected road height for a particular scan can be determined through one of two similar methods.

One is to average the road height at each pixel within the current scan line to determine a characteristic height of the scan line in question.

The second method is to filter the road height using the standard Kalman filter similar to that used when determining crown and bank expectations.

These three parameters can be used to determine a second order equation which describes the expected road profile. This expected profile is compared to the actual road profile. Any deviations between the two which exceed a preset threshold value are assumed to be threatening objects.

This scheme of the present invention is viable given the assumption that any detected objects 4002 are small in comparison to the width of the road. Then, when these averaging or least squares methods are used, the effects due to objects are negligible in comparison to natural road data.

This filtering scheme also includes a very simple edge detection method which convolves the selected range data with a simple seven point weighing function.

c. <u>OBSTACLE EXTRACTION</u>

An additional technique of the present invention processes an entire range image representation 3900 from a multi-line scanner for objects. This method of the present invention accomplishes three goals:

1. Do not detect obstacles 4002 when none exists,
2. Detect obstacles 4002 when obstacles do exist, and
3. Detect the correct obstacles 4002 when obstacles exist.

Obstacle extraction is obstacle detection through the use of blob extraction. Blob extraction is well known in the art of computer graphics. Obstacles are found by clustering similar pixels into groups, called blobs. The goal of obstacle extraction is to store and process obstacles as units rather than as individual pixels.

The obstacle extraction of the present invention may be done by preforming the following steps in the image plane 3901:

1. Project the vehicle path into the image plane 3901,
2. Transform range data into height data,
3. Fit a curve to the height at the center of the road (this represents the expected road height at each row),
4. Threshold the actual road height against the height expectation, and
5. Extract the obstacles (indicated by differences in actual and expected road heights which exceed the threshold).

E. VEHICLE CONTROLLING SYSTEMS

1. INTRODUCTION

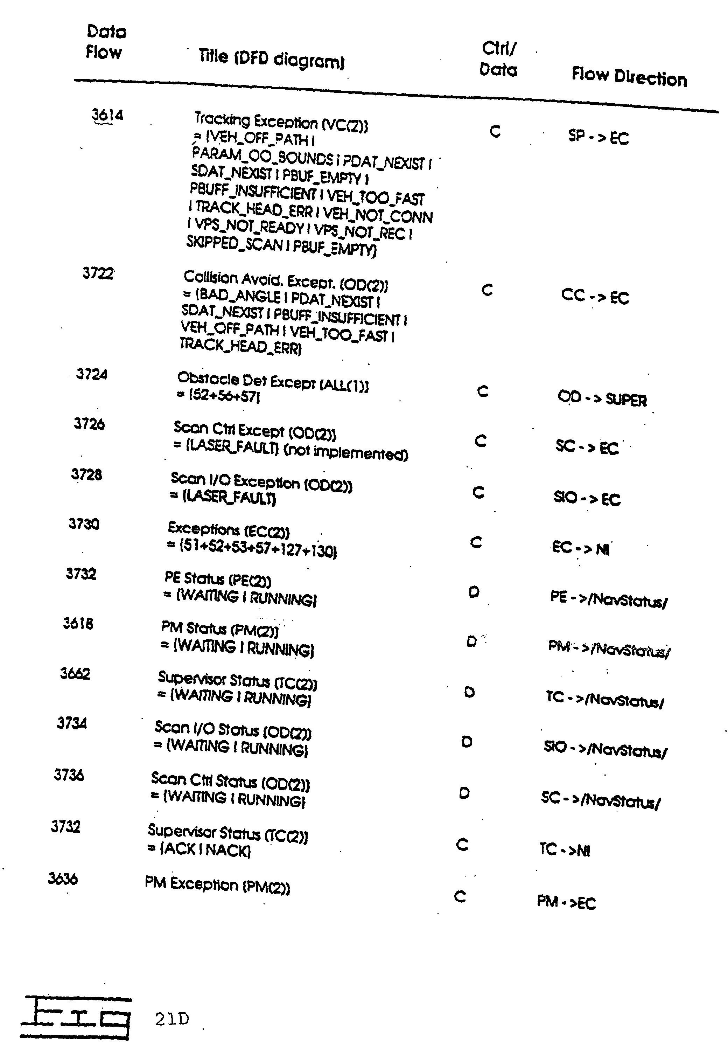

Referring now to Figure 25, the vehicle controls are comprised of four, low-level functional blocks.

One is called a "vehicle manager" (4302). A second is called a "speed control" (4304). The third is called a "steering control" (4306). The fourth is called.a "monitor/auxiliary control" (depicted as two separate blocks 4310 and 4308. These are described in turn below.

They are all tied together with a high-speed serial data bus 4314. The bus 4314 is a data collision detection, packet passing system.

Each of these functional blocks have separate microprocessors, for instance of the Motorola 68000 16 bit series. Each of these microprocessors talks to and listens to the others over the bus 4314.

While each functional block has a more or less specific function, the vehicle manager 4302 functions as a communications hub. It sends to and receives messages from the navigator 406 via an RS-422, 9600 Baud serial link 4316. It is also listening to and sending to the remote control or "tele" panel 410 via an FM radio communications link 4318.

2. VEHICLE MANAGER (modes)

As mentioned above, the vehicle manager 4302 receives commands from a remote control panel 410 and the navigator 406. It then decides which mode "A, M, T, or R" (for Autonomous, Manual, Tele, or Ready) the vehicle 102 should be in.

a. READY MODE

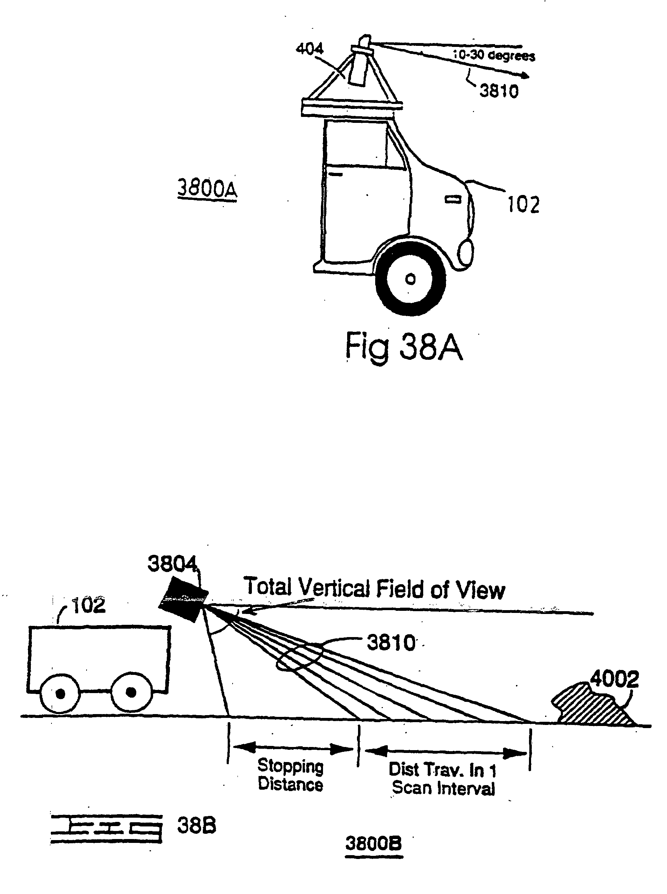

Reference is now made to Figure 26, which shows the states (modes) and how the vehicle 102 changes between states. The navigator 406 cannot set the mode itself. Notice that the vehicle 102 cannot change from tele to auto, for instance, directly. It must pass through the ready mode 4404 first in that case.

The ready mode 4404 brings the vehicle 102 to a stop in a known state. This is because it would be difficult to make a smooth transition, from, for instance, auto mode 4408 to tele mode 4406 while the vehicle 102 was moving. The tele control panel joystick 4502, 4504 would have to be in just the right position when control was switched.

Going from tele 4406 to auto 4408 mode, there is the consideration that the navigator 406 must initialize. For example, it must determine where it is with respect to a route before taking control, which takes some finite time, during which the vehicle 102 might otherwise drive off uncontolled.

b. TELE MODE

Tele control mode 4406, also referred to as tele-operation, remote control or radio control mode, provides a way of controlling the vehicle 102 from a remote location while the vehicle 102 is kept in view.

Shop personnel would use the tele-operation mode 4406 to move the vehicle 102 in the yard, for example. Advantageously, this mode would also be used by a shovel or loader operator to maneuver the vehicle into position for loading or unloading, and moving the vehicle into a location where autonomous mode 4408 would resume control.

In tele-operation mode 4406, each vehicle 102 at an autonomous work site 300 would have its own unique identification code that would be selected on a radio control panel 410 to ensure communication with and control of the correct vehicle only. The vehicle 102 would only respond to tele-operation commands 4318 when its unique identification code is transmitted. Any conflict between modes, such as between manual 4402 and tele 4406, would be resolved in favor of manual mode 4402, for obvious safety reasons.

The navigator 406 keeps track of where the vehicle 102 is while being operated in the tele mode 4406, even though, in tele mode, the vehicle can be maneuvered far off of a known route.

C. UNDERLINE MANUAL MODE

Manual control mode 4402 may be required when the vehicle 102 is being maneuvered in very close quarters, for example, at a repair shop, equipment yard, and so on, or when a control subsystem needs to be removed for repair or maintenance.

This control mode may be implemented to be invoked whenever a human operator activates any of the manual controls. The simple action of stepping on the brakes 4708, moving the shift lever from some predetermined, autonomous mode position, or grasping the steering wheel 4910, for example, would immediately signal the control system that manual control mode 4402 is desired and the system would immediately go to the manual mode.

While in manual mode, the autonomous system would continuously monitor vehicle motion and maintain an updated record of the vehicle position so that when and if autonomous mode 4408 was desired, a quicker and more efficient transition could be made.

When autonomous mode 4408 is again desired, the human operator would then affirmatively act to engage autonomous mode 4408, by physically moving a switch or lever, for instance, to the autonomous control mode. A time delay would preferably be built in so that the human operator would have the opportunity to leave the vehicle 102 if desired. At the end of the time delay, the system would then give several levels of warning, such as lights, horn, or the like, indicating autonomous takeover of the vehicle 102 was imminent.

d. AUTONOMOUS MODE

The autonomous mode 4408 is entered into from ready mode 4404. In the autonomous mode 4408, the vehicle 102 is under the control of the autonomous navigation system.

In this mode, the vehicle control system receives messages from the navigator 406 as discussed above, through the vehicle manager 4302. The vehicle manager 4302 is, as discussed, basically the communications and command hub for the rest of the controllers.

The vehicle manager 4302, and the other functional control blocks, all communicate with the shutdown circuits 4312 as well. The shutdown circuits 4312 are discussed in more detail below.

3. SPEED CONTROL

The speed control subsystem 4302 may be organized to contain a speed command analyzer, closed loop controls 4800 for the engine 4614, transmission and brakes 4700, 5000, a real time simulation model of the speed control system, and a monitor 4310 that is tied to an independent vehicle shutdown system 4312. It is designed to be placed in parallel to the production system on the vehicle 102.

The speed control functional block 4304 takes care of three basic functions. It controls the governor on the engine 4614. It controls the brake system 4606. And it controls the transmission 4610 via the production transmission control block 4616.

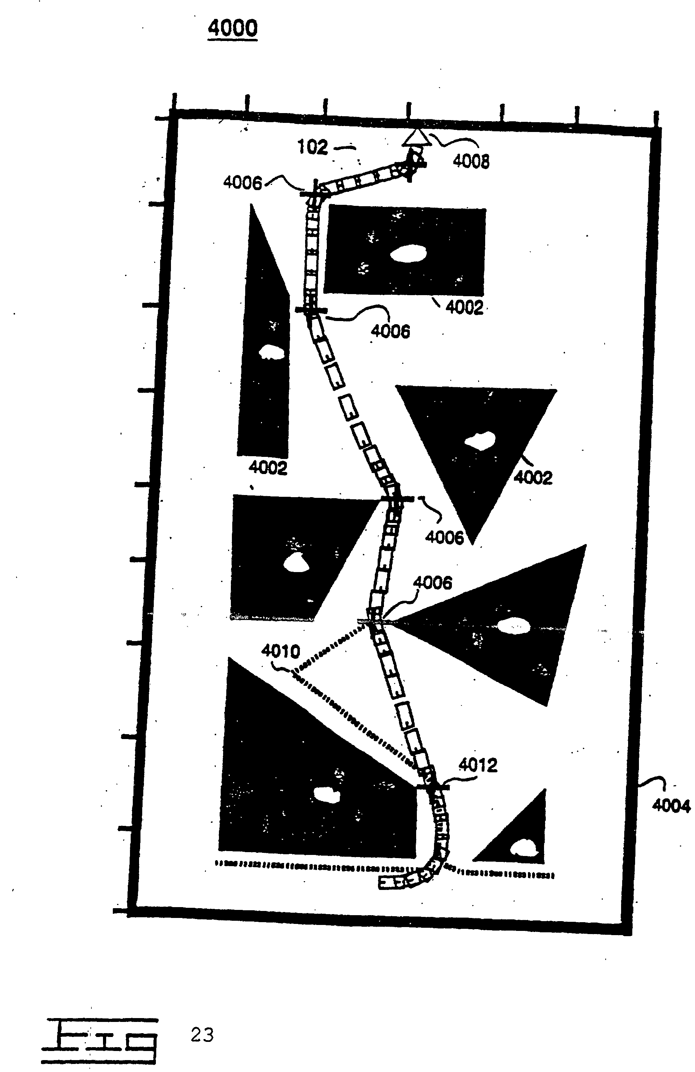

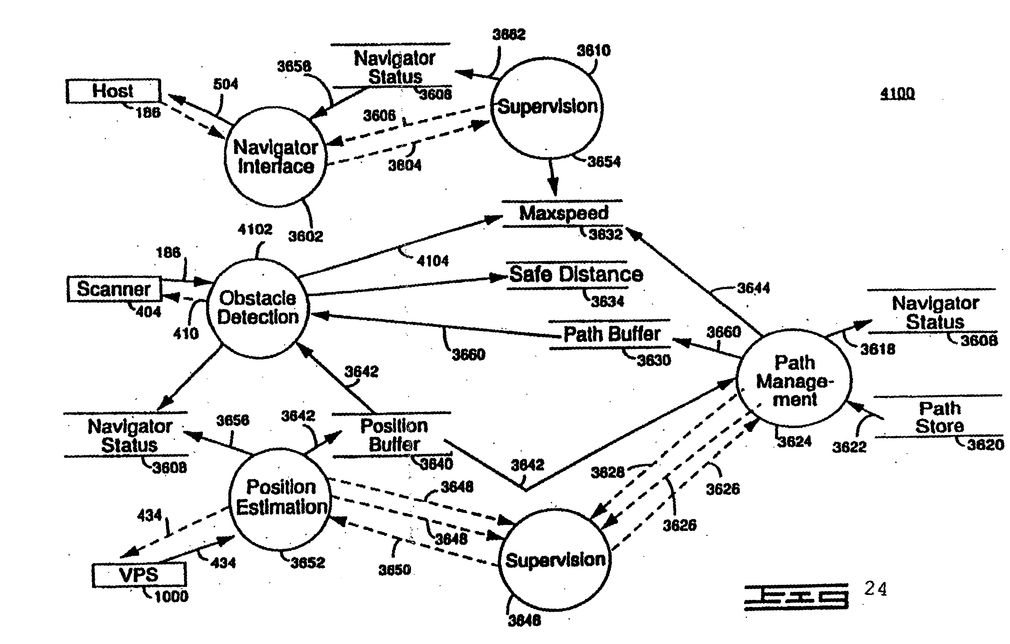

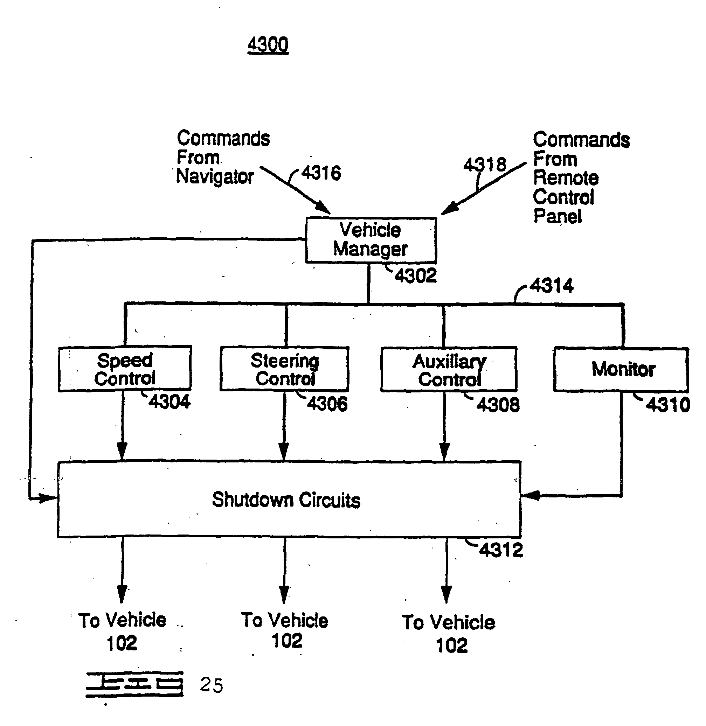

The production transmission control block 4616 is interfaced with the speed control block 4304 in a parallel retro-fit of the autonomous system onto the production system as shown in Figure 30. The production transmission control block 4616 is a microprocessor based system which primarily monitors speed and shifts gears accordingly.

The autonomous system speed control block 4304 feeds the transmission control block 4616 the maximum gear desired. For instance, if the vehicle 102 is to go 15 mph, the maximum gear might be third gear. The production transmission control block 4616 will control all the shifting necessary to get to that gear appropriately.

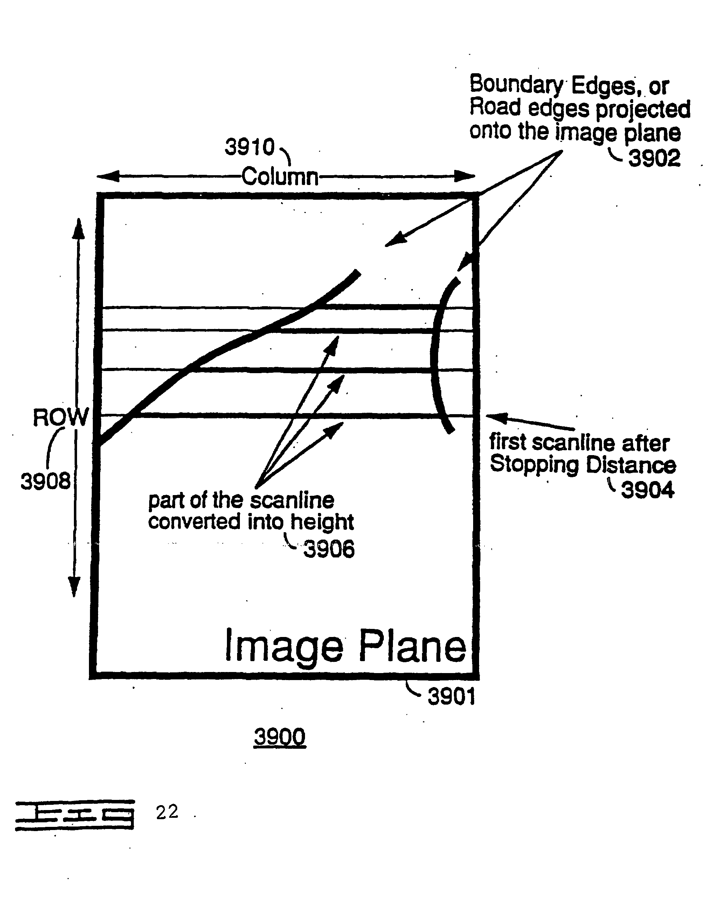

The governor 4626 (Figure 28) controls the amount of fuel delivered to the engine 4616. Thus, it controls engine speed. The autonomous system is capable of being retro-fitted in parallel with the production governor control system, in a similar fashion as described with respect to the transmission system.

The brake system is shown in Figures 29 and 32. The autonomous system here is also capable of being retro-fitted to the production brake system.

The following discusses vehicle systems shown in Figures 46, 48, 47, 50 and 49. These systems relate to the vehicle drive train 4600 and steering 4900 systems.

Referring to Figure 28 a governor 4626 controls engine speed 4222, which in turn controls vehicle speed 4624. The engine power is transferred to the drive wheels through the drive train 4600 which is comprised of:

torque converter 4612

transmission 4610
final drive 4608
brake system 4606
wheels 4604

The function of these systems is well known in the art.

Several key systems were modified in accordance with the present invention to effect autonomous control. The primary systems were the speed control (engine speed, transmission, vehicle speed, and brakes) and steering systems. Each key system is design with manual override capability as a safety measure. In all cases, manual control has priority so that if the vehicle is operating autonomously, and an operator takes control of any one of the vehicle functions, control automatically is returned to the operator.

The system also provides an emergency override button (not shown; also referred to as a 'panic' button) which, when activated, disables all electronically controlled systems and returns the vehicle 102 to manual control 4402.

The system also provides for sensing the pneumatic pressure which is a key part for actuating some of the key systems. If this pressure falls below some preset threshold, it is assumed that there is a problem and the vehicle control system reverts to manual control 4402 and the vehicle 102 is stopped.

Figure 30 depicts the system used to control engine speed. This system uses electronically controlled valves 4808 and 4812 to regulate pneumatic pressure in parallel to a pedal 4806 which can be manually operated to override electronic control of the engine speed 4622. The pressure sensor 4802 and the engine speed sensor 4622 provide the necessary feedback for the electronic speed control system 4304.

Also required to control the vehicle speed is a transmission control 4616. The basic control system is readily available on the particular vehicle used for this purpose.

In addition to controlling the engine speed 4622 as a means of regulating vehicle speed, it is also necessary to control the vehicle service brakes 4606. This system is shown in Figure 29 and is necessary to effect normal stoppage or slowing of the vehicle 102. This system uses electronically controlled pneumatic valves 4712 and 4716 in parallel with a manually operated brake pedal 4708 and/or retarder lever 4710 to regulate the braking force. These two manual inputs can override the electronic control system when actuated. The pressure sensor 4702 and the vehicle speed sensor 4624 provide the necessary feedback to regulate the braking force.

Control of vehicle steering is also required for the vehicle to operate autonomously. The system which performs this function is shown in Figure 31. The system consists of a Rexroth proportional hydraulic valve 4912 which can be actuated electronically to provide flow to hydraulic cylinders 4914 and 4916 attached to the vehicle steering linkage. The system also comprises a manually operable hand-metering unit, or HMU, 4918, which is in parallel to the electronically controlled system. The manual system can override the electronic system, if required, as a safety measure. Also, the system provides a switch 4920 on the HMU to detect when the manual steering wheel 4910 is different from the centered position. When not centered, the autonomous system assumes that the system is being operated manually 4402 and disables autonomous control of the vehicle 102.

Electronic control of the vehicle parking brake is also included as an added safety feature. This system is shown in Figure 32. For proper operation under autonomous control, the parking brake is manually placed in the 'ON' position. When the vehicle proceeds through the status modes (MANUAL 4402, READY 4404, and AUTO 4408), the parking brake is automatically released by electronically controlling the pneumatic valve 5008. This system is in parallel to the manual systems comprised of the brake lever release valve 5016 and the Emergency brake lever 5014.

When a problem is encountered, the vehicle 102 is automatically placed under manual control. Since the manual setting of the park brake is normally 'ON', this activates the parking brake, stopping the vehicle 102 as quickly as possible.

## 4. STEERING CONTROL

Referring again to Figure 25, the steering control functional block 4306 is responsible for controlling the steer angle of the vehicle's wheels. It sends out commands to a valve 4912 to control the steer angle and receives information from a resolver (not shown) mounted on the tie rod system, so that it knows what the actual wheel angle is.

The steering angle can be controlled with an accuracy on the order of a half a degree, and the resolver is accurate to something less than that, on the order of an eighth of a degree.

At some point in the useful life of the vehicle 102 the resolver may go out of adjustment. If this happens, the vehicle will not be able to track the path 3312 properly.

However, the navigator 406 constantly monitors the vehicle 102 to determine how far the vehicle 102 is from the desired path 3312. (The vehicle 102 is always off the desired path to some extent, and the system is constantly correcting.) If the vehicle 102 is more than a certain distance, for example several meters, from the desired path 3312, the navigator 406 stops the vehicle as a safety precaution.

The steering control system 4306 itself is also always checking to make sure the resolver is accurate, and that steering commands 420 received have not been corrupted (not shown) by noise or other error sources. A steering simulation model may also be implemented as an additional check of the system.

The autonomous steering system 4900 may be designed to be implemented in parallel with a manual steering system, and can be retro-fitted on to the vehicle 102 in a similar manner as the speed control system.

As shown in Figure 31, the existing or production manual steering system has a manual steering wheel 4910 which turns a hand metering unit, or HMU 4918. The HMU 4918 controls a valve 4912 which controls flow of hydraulic fluid to steering cylinders 4914, 4916, which turn the wheels (not shown).

A switch 4920 on the HMU 4918 detects off-center position of the steering wheel 4910 as an indication to change to manual control of steering. An operator riding in the cab can merely turn the steering wheel 4910 to disable autonomous steering control 4408.

Under autonomous steering control 4408, the manual steering wheel 4910 in the cab remains centered no matter what position the autonomous steering control has turned the wheels to. There is no mechanical linkage between the steering wheel 4910 and the wheels themselves.

Of course a vehicle 102 may be manufactured without any manual steering system at all on the vehicle if desired. To drive the vehicle manually, the tele-panel 410 could be used, or some sort of tele-panel might be plugged into the side of the vehicle 102 to control it without a radio link 4506 in close quarters, for instance. A jump seat might be provided for an operator in such situations.

Some discussion of the steering model developed may facilitate a better understanding of the present invention.

a. STEERING MODEL

The basis for the steering planner is a tricycle steering model shown in Figure 33. This model permits the calculation of the required steer angle independent of the velocity of the vehicle.

$$\Phi = \tan^{-1} LC\ path$$

To use this model, the desired path 3312 must contain the curvature of the path to be followed. The curvature is the inverse of the instantaneous radius of curvature at the point of the curve.

f(s)|p:position curve
f'(s)|p:tangent to curve or heads
f''(s)|p:curvature at the point

This is also equal to the second path derivative at the point.

b. PATH REPRESENTATION

Referring to Figures 12-18 the response of autonomous vehicle 102 in tracking a path 3312 depends partly on the characteristics of the path 3312. In particular, continuity of the curvature and the rate of change of curvature (sharpness) of the path 3312 are of particular importance, since these parameters govern the idealized steering motions to keep the vehicle 102 on the desired path 3312. In the case where a path 3312 is specified as a sequence of arcs and lines, there are discontinuities of curvature at the point where two arcs of differing radii meet. Discontinuities in curvature are troublesome, since they require an infinite acceleration of the steering wheel. A vehicle travelling through such transition points with non-zero velocity will experience an offset error along the desired path 3312.

In general, and as shown in Figure 17, If a posture 3314 is desired as the quadruple of parameters--poaition 3320, heading 3318, and curvature 3316 (x, y, 0, c), then it is required that the path 3812 be posture-continuous. In addition, the extent to which steering motions are likely to keep the vehicle 102 on the desired path 3312 correlates with the linearity of sharpness of the path, since linear curvature along a path means linear steering velocity while moving along the path.

Certain spline curves guarantee posture continuity. However, these spline curves do not guarantee linear gradients of curvature along curves. Clothoid curves 2602 have the "good" property that their curvature varies linearly with distance along the curve. Paths composed of (a) arcs and straight lines or (b) clothoid segments have been developed.

A path that has discontinuities in curvature results in larger steady state tracking errors. This is particularly the case when the actuators are slow.

The path representation must contain sufficient information to calculate the steer angle 3112 (See Figure 15) needed to drive the desired path 3312, that is, it must consist of at least the position, heading, curvature and speed. A position on the desired path 3312 has been defined as a posture 3314, and the structure of a posture in the present invention is given by:

## c. POSTURE DEFINITION

| North | desired north coordinate |
|---|---|
| East | desired east coordinate |
| Heading | desired heading |
| Curvature | desired curvature |
| Speed | desired ground speed |
| Distance | distance between current posture and the previous posture. |

## d. POSITION INFORMATION

The position information 3322 is obtained from the VPS 1000 and is, for example, 71 bytes of data. The structure of the information used to track the desired path 3312 is a subset of the 71 byte VPS output and is given by the VPS short definition shown below.

## e. VPS SHORT DEFINITION

| Time | gps time |
|---|---|
| North | wgs 84_northing |
| East | wgs 84_easting |
| Heading | compass direction vehicle is moving |
| Curvature | calculated from other variable |
| N_velocity | north velocity |
| E_velocity | east velocity |
| Yaw rate | rate of change of the heading |
| G_speed | ground speed distance travelled |

## f. STEERING METHOD

The steering planner calculates the steer angle needed to follow the desired path. If the vehicle 102 was on the desired path 3312, the steer angle is:

$$\text{ON PATH } \Phi\text{steer} = f(\text{Cdesired}) = \tan^{-1} LC$$

If the vehicle 102 is off the desired path 3312, then the steer angle is:

$$\text{OFF PATH } \Phi\text{steer} = f(\text{Cdesired} + \text{Cerror}).$$

The method of the present invention used to calculate Cerror is a quintic method. The quintic is a fifth degree polynomial in an error space that defines a smooth path back to the desired path 3312. The degree of the polynomial is defined by the needed data, that is, Cerror and the known end constraints.

Polynomial in error space:

**error**

$$\text{error}(s) = a_0 + a_1 s + a_2 s^2 + a_3^3 + a_4 s^4 + a_5 s^5 \Big|_0^L$$

$$\text{error}'(s) = a_1 + 2a_2 s + 3a_3 s^2 + 4a_4 s^3 + 5a_5 s^4 \Big|_0^L$$

$$\text{error}''(s) = 2a_2 + 6a_3 s + 12a_4 s^2 + 20a_5 s^3 \Big|_0^L$$

```
0              s=speed*dt_plan        L        s
```

at s=O:

    error (O) position = current desired position - current actual position
    error' (O) heading = current desired heading - current actual heading
    error"(O) curvature = current desired curvature - current actual curvature

at s=L (L = lookahead distance):

    error (L) position = O
    error (L) heading = O
    error (L) curvature = O

The coefficients of the polynomial error(s) are functions of L, the distance at which the errors go to zero:

error $(O) = a_0$
error'$(O) = a_1$
error"$(O) = 2a_2$
error $(L) = a_0 + a_1 L + a_2 L^2 + a_3 L^3 + a_4 L^4 + a_5 L^5$
error' $(L) = a_1 + 2a_2 L + 3a_3 L^2 + 4a_4 L^3 + 5a_5 L^4$
error"$(L) = 2a_2 + 6a_3 L + 12a_4 L^2 + 20a_5 L^3$

These five equations are solved symbolically for the coefficients $a_0$, $a_1 \cdots a_5$. Then, each coefficient can be easily determined for any reasonable set of boundary conditions.

Once the coefficients of the polynomial are obtained, the error''(s) can be evaluated for some picked_s, which corresponds to a distance along desired path from s=O and is presently defined as:

$$s_{picked} = \text{ground speed * planning interval}$$

to obtain the correction term:

$$\text{Cerror} = \text{error''}(s_{picked})_{curvature}$$

to calculate the new steer angle:

$$\Phi \text{steer} = \tan^{-1} [(\text{Cdesired} + \text{Cerror}_{@spicked}) \text{ L}]$$

This calculation is done at each planning interval which is presently .25 sec. (dt_plan).

5. <u>MONITOR/AUXILIARY</u>

Referring now to Figure 25, the monitor/auxiliary functional block (s) 4308 and 4310 take care of some miscellaneous functions not performed by the other blocks of the vehicle control system. For instance, start or kill the engine 4616, honk the horn, raise or lower the bed, setting the parking brake on or off, turning the lights on or off, are some of its functions.

The monitor block 4310 also checks the commands that are being sent by or to the other functional blocks on the bus 4314 to see if they are valid. If error is detected, it will signal the shutdown circuits block 4312 and the system will shutdown as discussed below.

6. <u>SAFETY SYSTEM (SHUTDOWN)</u>

a. <u>INTRODUCTION</u>

The safety system, includipg shutdown circuits 4312, (see Figures 25 and 34) operates to stop the vehicle 102 on detection of a variety of error conditions by setting the parking brake on. This results in the vehicle 102 coming to a safe stop in the shortest distance possible.

Since the parking brake is designed to be normally "set" or "on," and the electronic circuits operate to release it, upon a failure of the electronic controlling system(s) the power 5216 is turned off to the actuators 5006, so that there is no power to actuate valves, and the parking brake returns to its normal position, called "set."

Whenever several erroneous commands are received, or whenever the speed and/or steering simulation models disagree beyond an acceptable tolerance with vehicle sensor outputs 4622 and 4624, are examples of conditions which could result in shutdown of the system. The shutdown system 4312 is an independent and separate subsystem from the other autonomous control subsystems

b. <u>SHUTDOWN CONTROL</u>

The safety system shutdown circuits 4312 shown in Figure 25 connected to receive the outputs of the other vehicle control system functional blocks is shown in more detail in Figure 34.

It is a fail-safe type design. It contains no microprocessor at all. It is all hard-wired, discrete logic.

A feature of the vehicle control system 4312 design is that all functional blocks are capable of detecting errors in the output of the others on the serial bus 4314. So if one of them senses that another is not functioning correctly, it can send a signal to the shutdown circuits 4312 to shut the system down.

For example, the speed and steering blocks each look at their received commands (received via the vehicle manager 4302) to make sure they are valid. They also make sure that what they are told to execute, that is, what they are requested to command, is within predetermined bounds. If not, they will act to shut the system down.

The safety system may also be monitoring oil, hydraulic and pneumatic pressures, and temperatures, for instance, making sure they are sufficient to safely operate and control the vehicle.

The safety system includes switches for manual override, including a panic stop 5208, switches on the brake pedal 5202 and steering wheel 5206.

7. <u>BUS ARCHITECTURE</u>

The bus 4314 that inter-connects the vehicle control system functional units 4302, 4304, 4306, 4308, and 4310 is a serial data type common bus implemented in a ring structure using a data packet collision detection scheme.

**Claims**

1. A method of navigation (406) adapted for use with a surface based vehicle (102) of the type having an instantaneous center to which all motions can be referenced, for example, conventionally steered, articulated, omni-directional, or skid-steered, exhibiting either oversteer or understeer characteristics, to follow a predetermined path (3312), which method (406) comprises the steps of:

   retrieving (3622) from a table (3010) a given posture comprising a reference path curvature, a desired heading, and desired vehicle position coordinates of the predetermined path (3312);
   determining (5306) a reference steering angle from the reference path curvature;
   determining (5306) a posture error; **characterised by** the steps of:

   retrieving a maximum velocity from the table;
   determining (5306) a desired steering angle from the reference steering angle and the posture error ;
   using (5306) the desired steering angle to direct the vehicle (102) toward the predetermined path (3312);
   determining (5306) a commanded speed less than the maximum velocity independently of the preceding steps;
   using (5306) the commanded speed to control the speed of the vehicle (102), including stopping the vehicle (102) if necessary; and
   safely controlling lateral acceleration during turning by modifying the maximum velocity by referring to the reciprocal of the desired steering angle.

2. A method (406) according to claim 1, further comprising the steps of:

   determining a vehicle stopping distance from an actual vehicle speed and a specified maximum vehicle deceleration value;
   performing (4150) detection of an object (4002) using range data at a distance greater than the vehicle stopping distance; and
   modifying (4150) the commanded speed in accordance with distance to the object (4002), thereby enabling the vehicle (102) to stop before contacting the object (4002).

3. A method (406) according to claim 1, wherein the step of determining a commanded speed comprises:

   monitoring speed setpoints commanded by a host computer (402) or a vehicle obstacle detection system (4150); and
   choosing the smallest of the setpoints.

4. A navigation method (406) according to claim 1, the method (406) further comprising the preliminary steps of:

   manually driving the vehicle (102) over the route (3312) to collect driven data;
   smoothing out the driven data to produce smoothed data comprising a consistent path; and
   using (5306) the smoothed data comprising a consistent path to define the predetermined vehicle (102) path.

5. A navigation method (406) according to claim 4, wherein the step of smoothing out the driven data further comprises the step of performing an integration function on the driven data, thereby smoothing the driven data so that measured vehicle position, heading and curvature are consistent along the route (3312).

6. A navigation system (406) adapted for a surface based vehicle (102) of the type having an instantaneous center to which all motions can be referenced, that is, conventionally steered, articulated, omni-directional, or skid-steered, exhibiting either oversteer or understeer characteristics, to follow a predetermined path (3312), which system (406) comprises:

means (5306) for retrieving from a table (3010) a given posture comprising reference path curvature, desired heading, and desired vehicle position coordinates of the predetermined path (3312);
means (5306) for determining a reference steering angle from the reference path curvature;
means (5306) for determining a posture error; **characterised by**:

means for retrieving from a table a maximum velocity;
means (5306) for determining a desired steering angle from the reference steering angle and the posture error;
means (5306) for using the desired steering angle to direct the vehicle (102) toward the predetermined path (3312) ;
means (5306) for independently determining a commanded speed less than the maximum velocity; and
means (5306) for using the commanded speed to control the speed of the vehicle (102), including stopping the vehicle (102) if necessary; and means for safely controlling lateral acceleration during turning by modifying the maximum velocity by referring to the reciprocal of the desired steering angle.

7. A system (406) according to claim 6, further comprising:

means for determining a vehicle stopping distance from an actual vehicle speed and a specified maximum vehicle deceleration value;
means (4150) for performing detection of an object (4002) using range data at a distance greater than the vehicle stopping distance; and
means for modifying the commanded speed in accordance with distance to the object (4002), thereby enabling the vehicle (102) to stop before contacting the object (4002).

8. A system (406) according to claim 6, wherein the means for determining a commanded speed comprises:

means for monitoring speed setpoints commanded by a host computer (402) or a vehicle obstacle detection system (4150); and
means for choosing the smallest of the setpoints.

9. A navigation system (406) according to claim 6, the system (406) further comprising:

means for manually driving the vehicle over the route to collect driven data;
means for smoothing out the driven data to produce smoothed data comprising a consistent path; and
means (5306) for using the smoothed data comprising a consistent path to define the vehicle's predetermined path.

10. A navigation system (406) according to claim 9, wherein the means for smoothing out the driven data further comprises means for performing an integration function on the driven data, thereby smoothing the driven data so that measured vehicle position, heading and curvature are consistent along the route.

**Patentansprüche**

1. Navigationsverfahren (406) geeignet zur Verwendung mit einem oberflächenbasierten Fahrzeug (102) vom Typ mit einem momentanen Mittelpunkt, auf welchen alle Bewegung bezogen werden können, beispielsweise herkömmlich gelenkt, gelenkig, omnidirektional bzw. ungerichtete, oder bremsschlupfgesteuert, und zwar entweder Übersteuerungs- oder Untersteuerungscharakteristika aufweisend, zum Folgen eines vorbestimmten Weges (3312), wobei das Verfahren (406) folgende Schritte aufweist:

Herausziehen (3622) aus einer Tabelle (3010) einer Anordnung bzw. einer Positionierung, die eine Referenzwegkrümmung, eine Sollziel- bzw. fahrtrichtung und Sollfahrzeugpositionskoordinaten des vorbestimmten Weges (3312) aufweist;
Bestimmen (5306) eines Referenzlenkwinkels aus der Referenzwegkrümmung; Bestimmen (5306) eines Anordnungs- bzw. Positionierungsfehlers; **gekennzeichnet durch** die weiteren Schritte:

Herausziehen einer Maximalgeschwindigkeit aus der Tabelle;
Bestimmen (5306) eines Solllenkwinkels aus dem Referenzlenkwinkel und dem Positionierungsfehler;
Verwenden (5306) des Solllenkwinkels zum Ausrichten bzw. Lenken des Fahrzeugs (102) in Richtung auf den vorbestimmten Weg (3312);
Bestimmen (5306) einer befohlenen Geschwindigkeit kleiner als die Maximalgeschwindigkeit abhängig von den vorausgegangenen Schritten;
Verwenden (5306) der befohlenen Geschwindigkeit zur Steuerung der Geschwindigkeit des Fahrzeugs (102), und zwar einschließlich des Anhaltens des Fahrzeugs (102) sofern nötig; und
sicheres Steuern einer Seitenbeschleunigung während eines Lenkvorgangs **durch** Modifizieren der Maximalgeschwindigkeit, in dem auf den Umkehrwert bzw. das Reziproke des Solllenkwinkels Bezug genommen wird.

2. Verfahren (406) gemäß Anspruch 1, das weiter die folgenden Schritte aufweist:

Bestimmen eines Fahrzeuganhalteweges aus einer Ist-Fahrzeuggeschwindigkeit und einem spezifizierten maximalen Fahrzeugverzögerungswertes;
Durchführen (4150) einer Detektion eines Objekts (4002) unter Verwendung von Bereichsdaten bei einem Abstand, der größer ist als der Fahrzeuganhalteweg; und
Modifizieren (4150) der befohlenen Geschwindigkeit gemäß dem Abstand zum Objekt (4002), wodurch dem Fahrzeug (102) gestattet wird, vor einem Kontakt mit dem Objekt (4002) anzuhalten.

3. Verfahren (406) gemäß Anspruch 1, wobei der Schritt des Bestimmens einer befohlenen Geschwindigkeit folgendes aufweist:

Überwachen von Geschwindigkeitseinstellpunkten, die durch einen Host-Computer (402) oder ein Fahrzeughindernisdetektionssystem (4150) befohlen bzw. vorgegeben werden; und
Auswahl des kleinsten der Einstellpunkte.

4. Navigationsverfahren (406) gemäß Anspruch 1, wobei das Verfahren (406) weiter die folgenden vorausgehenden Schritte aufweist: manuelles Fahren des
Fahrzeugs (102) entlang der Route(3312) zum Sammeln von gefahrenen bzw. Fahrdaten;
Glätten der Fahrdaten zur Erzeugung von geglätteten Daten, die einen konsistenten Weg aufweisen; und
Verwenden (5306) der einen konsistenten Weg aufweisenden, geglätteten Daten zur Definition des vorbestimmten Weges des Fahrzeugs (102).

5. Navigationsverfahren (406) gemäß Anspruch 4, wobei der Schritt des Glättens der Fahrdaten weiter den Schritt des Durchführens einer Integrationsfunktion an den Fahrdaten aufweist, wodurch die Fahrdaten geglättet werden, so dass eine gemessene Fahrzeugposition, Fahrtrichtung und Krümmung bzw. Kurvenfahrt entlang der Route (3312) konsistent sind.

6. Navigationssystem (406) geeignet für ein oberflächenbasiertes Fahrzeug (102) vom Typ mit einem momentanen Mittelpunkt, auf den alle Bewegungen bezogen werden können, d.h. herkömmlich gelenkten, gelenkigen, omnidirektionalen bzw. ungerichteten oder bremsschlupfgelenkten, entweder Übersteuerungs- oder Untersteuerungscharakteristika aufweisend, um einen vorbestimmten Weg (3312) zu folgen, wobei das System (406) folgendes aufweist:

Mittel (5306) für das Herausziehen aus einer Tabelle (3010) einer gegebenen Positionierung bzw. Anordnung, die eine Referenzwegkrümmung, eine Sollfahrtrichtung und Sollfahrzeugpositionskoordinaten des vorbestimmten Wegs (3312) aufweist;
Mittel (5306) zum Bestimmen eines Referenzlenkwinkels aus der Referenzwegkrümmung;
Mittel (5306) zum Bestimmen eines Anordnungs- bzw. Positionierungsfehlers; **gekennzeichnet durch**:

Mittel für das Herausziehen einer Maximalgeschwindigkeit aus einer Tabelle; Mittel (5306) zum Bestimmen eines Solllenkwinkels aus dem Referenzlenkwinkel und dem Positionierungsfehler;
Mittel (5306) zur Verwendung des Solllenkwinkels für das Ausrichten bzw. Lenken des Fahrzeugs (102) in Richtung auf den vorbestimmten Weg (3312);
Mittel (5306) für das unabhängige Bestimmen einer befohlenen Geschwindigkeit kleiner als die Maximalgeschwindigkeit; und

Mittel (5306) zur Verwendung der befohlenen Geschwindigkeit für die Steuerung der Geschwindigkeit des Fahrzeugs (102), und zwar einschließlich des Anhaltens des Fahrzeugs (102) sofern nötig; und

Mittel für das sichere Steuern einer Seitenbeschleunigung während eines Lenkvorgangs **durch** Modifizieren der Maximalgeschwindigkeit, in dem auf das Reziproke des Solllenkwinkels Bezug genommen wird.

**7.** System (406) gemäß Anspruch 6, das weiter folgendes aufweist:

Mittel zum Bestimmen eines Fahrzeuganhalteweges aus einer Ist-Fahrzeuggeschwindigkeit und einem spezifizierten, maximalen Fahrzeugverzögerungswert;

Mittel (4150) zum Durchführen einer Detektion eines Objekts (4002) unter Verwendung von Bereichsdaten bei einem Abstand, der größer ist als der Fahrzeuganhalteweg; und

Mittel für das Modifizieren der befohlenen Geschwindigkeit gemäß dem Abstand zum Objekt (4002), wodurch dem Fahrzeug (102) ermöglicht wird, dass es vor einem Kontakt mit dem Objekt (4002) anhält.

**8.** System (406) gemäß Anspruch 6, wobei die Mittel für das Bestimmen einer befohlenen Geschwindigkeit folgendes aufweisen:

Mittel für das Überwachen von Geschwindigkeitseinstellpunkten, die durch einen Host-Computer (402) oder ein Fahrzeughindernisdetektionssystem (4150) befohlen bzw. vorgegeben werden; und

Mittel für die Auswahl des kleinsten der Einstellpunkte.

**9.** Navigationssystem (406) gemäß Anspruch 6, wobei das System (406) weiter folgendes aufweist:

Mittel für das manuelle Fahren des Fahrzeugs entlang der Route zum Sammeln von Fahrdaten;

Mittel für das Glätten der Fahrdaten zur Erzeugung von geglätteten Daten, die einen konsistenten Weg aufweisen; und

Mittel (5306) zur Verwendung der geglätteten Daten, die einen konsistenten Weg aufweisen, zur Definition des vorbestimmten Weges des Fahrzeugs.

**10.** Navigationssystem (406) gemäß Anspruch 9, wobei die Mittel für das Glätten der Fahrdaten weiter Mittel aufweisen für das Durchführen einer Integrationsfunktion an den Fahrdaten, wodurch die Fahrdaten geglättet werden, so dass die gemessene Fahrzeugposition, Fahrtrichtung und Kurvenfahrt bzw. Krümmung entlang der Route konsistent sind.

## Revendications

**1.** Procédé de navigation (406) adapté à être utilisé avec un véhicule de surface (102) du type ayant un centre instantané par rapport auquel tous les mouvements peuvent être référencés, par exemple, dirigé de façon classique, articulé, omnidirectionnel, ou dirigé par dérapage, présentant des caractéristiques de survirage et de sousvirage, pour suivre une trajectoire prédéterminée (3312), ce procédé (406) comprenant les étapes suivantes :

rechercher (3622) dans une table (3010) une posture donnée comprenant une courbure de trajectoire de référence, un cap désiré, et des coordonnées de position de véhicule désirées de la trajectoire prédéterminée (3312) ;

déterminer (5306) un angle de direction de référence à partir de la courbure de trajectoire de référence ;

déterminer (5306) une erreur de posture ;

**caractérisée par** les étapes suivantes :

rechercher une vitesse maximum dans la table ;

déterminer (5306) un angle de direction désiré à partir de l'angle de direction de référence et de l'erreur de posture ;

utiliser (5306) l'angle de direction désiré pour diriger le véhicule (102) vers la trajectoire prédéterminée (3312) ;

déterminer (5306) une vitesse commandée inférieure à la vitesse maximum indépendamment des étapes précédentes ;

utiliser (5306) la vitesse commandée pour commander la vitesse du véhicule (102), incluant l'arrêt du véhicule (102) si nécessaire ; et

commander en sécurité une accélération latérale pendant un tournant en modifiant la vitesse maximum en relation avec l'inverse de l'angle de direction désiré.

2. Procédé (406) selon la revendication 1, comprenant en outre les étapes suivantes :

déterminer une distance d'arrêt de véhicule à partir de la vitesse réelle du véhicule et d'une valeur maximum spécifiée de décélération du véhicule ;
réaliser (4150) une détection d'objet en utilisant des données de distance à une distance supérieure à la distance d'arrêt du véhicule ; et
modifier (4150) la vitesse commandée en fonction de la distance à l'objet (4002), permettant ainsi au véhicule (102) de s'arrêter avant d'entrer en contact avec l'objet (4002).

3. Procédé (406) selon la revendication 1, dans lequel l'étape de détermination de la vitesse commandée comprend :

vérifier des points de réglage de vitesse commandés par un ordinateur central (402) ou un système de détection du véhicule (4150) ; et
choisir le plus petit des points de réglage.

4. Procédé de navigation (406) selon la revendication 1, ce procédé (406) comprenant en outre les étapes préliminaires suivantes :

conduire à la main le véhicule (102) sur la route (3312) pour recueillir les données de conduite ;
lisser les données de conduite pour produire des données lissées constituant une trajectoire cohérente ; et
utiliser (5306) les données lissées constituant une trajectoire cohérente pour définir la trajectoire prédéterminée du véhicule (102) ;

5. Procédé de navigation (406) selon la revendication 4, dans lequel l'étape de lissage des données de conduite comprend en outre l'étape consistant à réaliser une fonction d'intégration des données de conduite, lissant ainsi les données de conduite de sorte que la position, le cap et la courbure mesurée du véhicule sont cohérents le long de la route (3312).

6. Système de navigation (406) adapté à un véhicule de surface (102) du type ayant un centre instantané par rapport auquel tous les mouvements peuvent être référencés, par exemple, dirigé de façon classique, articulé, omnidirectionnel, ou dirigé par dérapage, présentant des caractéristiques de survirage et de sous-virage, pour suivre une trajectoire prédéterminée (3312), ce système (406) comprenant :

des moyens (5306) pour rechercher dans une table (3010) une posture donnée comprenant une courbure de trajectoire de référence, un cap désiré, et des coordonnées de position de véhicule désirées de la trajectoire prédéterminée (3312) ;
des moyens (5306) pour déterminer un angle de direction de référence à partir de la courbure de trajectoire de référence ;
des moyens (5306) pour déterminer une erreur de posture ;

**caractérisé par** :

des moyens pour rechercher une vitesse maximum dans une table ;
des moyens (5306) pour déterminer un angle de direction désiré à partir de l'angle de direction de référence et de l'erreur de posture ;
des moyens (5306) pour utiliser l'angle de direction désiré pour diriger le véhicule (102) vers la trajectoire prédéterminée (3312) ;
des moyens (5306) pour déterminer indépendamment une vitesse commandée inférieure à la vitesse maximum ; et
des moyens (5306) pour utiliser la vitesse commandée pour commander la vitesse du véhicule (102), incluant l'arrêt du véhicule (102) si nécessaire ; et
des moyens pour commander en sécurité une accélération latérale pendant un tournant en modifiant la vitesse maximum en relation avec l'inverse de l'angle de direction désiré.

7. Système (406) selon la revendication 6, comprenant en outre :

des moyens pour déterminer une distance d'arrêt de véhicule à partir de la vitesse réelle du véhicule et d'une valeur maximum spécifiée de décélération du véhicule ;

des moyens (4150) pour réaliser une détection d'objet en utilisant des données de distance à une distance supérieure à la distance d'arrêt du véhicule ; et

des moyens pour modifier la vitesse commandée en fonction de la distance à l'objet (4002), permettant ainsi au véhicule (102) de s'arrêter avant d'entrer en contact avec l'objet (4002).

8. Système (406) selon la revendication 6, dans lequel les moyens de détermination d'une vitesse commandée comprennent :

des moyens pour vérifier des points de réglage de vitesse commandés par un ordinateur central (402) ou un système de détection du véhicule (4150) ; et

des moyens pour choisir le plus petit des points de réglage.

9. Système de navigation (406) selon la revendication 6, ce système (406) comprenant en outre :

des moyens pour conduire à la main le véhicule (102) sur la route (3312) pour recueillir les données de conduite ;

des moyens pour lisser les données de conduite pour produire des données lissées constituant une trajectoire cohérente ; et

des moyens (5306) pour utiliser les données lissées constituant une trajectoire cohérente pour définir la trajectoire prédéterminée du véhicule (102).

10. Système de navigation (406) selon la revendication 9, dans lequel les moyens de lissage des données de conduite comprennent en outre des moyens pour réaliser une fonction d'intégration des données de conduite, lissant ainsi les données de conduite de sorte que la position, le cap et la courbure mesurée du véhicule sont cohérents le long de la route (3312).

105 —

**PSEUDOLITE(S)**     **GPS SATELLITES**

—104

192     107     110

VEHICLE

VEHICLE POSITIONING SYSTEM (VPS)

MOTION POSITIONING SYSTEM (MPS)

**GPS PROCESSING SYSTEM**

**VEHICLE ODOMETER** —902

904 —

**INERTIAL REFERENCE UNIT (IRU)**

—700

**MPS INTER COMMUNICATIONS PROCESSOR**

**GYROS** —106

108 —

906

**ACCELEROMETERS**

—900

190

112

114

194

**VPS PROCESSING SYSTEM**     116

1000

118

**HOST PROCESSING SYSTEM**

—186

196

**NAVIGATION SYSTEM**

—1022

—102

**BASE STATION**     188

**100**

FIG I

100A

Fig IA

202
$(X_2, Y_2, Z_2)$

204

208
Time is...
My Position is...

$(X_0, Y_0, Z_0)$
200

$(X_4, Y_4, Z_4)$

206
$(X_6, Y_6, Z_6)$

Ro

Uz

Vehicle 102
$(U_x, U_y, U_z)$

$\overline{U}$

θ

Uy

β

Ux

Greenwich Prime Meridian

Equator

172

**FIG 2**

X

EARTH

$$(X_0 - U_x)^2 + (Y_0 - U_y)^2 + (Z_0 - U_z)^2 = (R_0 - C_b)^2$$

$$(X_2 - U_x)^2 + (Y_2 - U_y)^2 + (Z_2 - U_z)^2 = (R_2 - C_b)^2$$

$$(X_4 - U_x)^2 + (Y_4 - U_y)^2 + (Z_4 - U_z)^2 = (R_4 - C_b)^2$$

$$(X_6 - U_x)^2 + (Y_6 - U_y)^2 + (Z_6 - U_z)^2 = (R_6 - C_b)^2$$

**Vehicle 102 Latitude** $= \theta = COS^{-1} \dfrac{\sqrt{(U_x^2 + U_y^2)}}{|\bar{u}|}$

**Vehicle 102 Longitude** $= \beta = TAN^{-1} \ U_x/U_y$

212

**FIG 3**

# Autonomous Work Site

200 202 204 206

SERVICE SHOP

316 314 312

BASE STATION

324 PARTS / REPAIR SHOP

300

322

326

320

318

102

326

320

EP 0 679 974 B1

**FIG 4**

186 — Host Processing System

500

524 — On-board Operator

autonomy directives

502

status to host

504

300 — Mine Site Environment

on-board displays

522

extern. warnings

506

road profiles

508

on-board inputs

520

Control Autonomous Truck

tele displays

418

410 Tele-operator

tele inputs

GPS Corrections

512

510 — Stationary GPS Receiver

420

GPS signals

514

200-206 — GPS Satellites

vehicle actuation

vehicle states

518

Vehicle

102 —

inertial pos'n est.

516 —

Inertial Pos'n System

5

**200** **202** **204** **206**

**105**

**600**

**316** **618** **312**

**620** **622** **102**

**188** Vehicle

**Base Station**

FIG 6

GPS Antenna

702

Pre Amp — 704

700

GPS Receiver — 706

GPS Inter Communications Processor — 708

GPS Console 1 — 712

GPS Processor — 710

GPS Console 2 — 722

716

GPS Communications Interface Processor — 720

Data Radio — 714

GPS Data Collection Device — 718

FIG 7

714 — Data Radio

GPS Receiver

GPS Data
Collection Device
718

800

706

720 — GPS Communications
Interface Processor

IPROTO Function

ICC Function

804

812

Communications
Manager
Function

Raw GPS
Data Output
Function

808

814

Request &
Decode GPS
Data

Decode Radio
Link Data

806

810

708

Control
File
(Priori)

GPS Kalman
Filter

802

820

710

Console
Function

VPS
Communications
Function

816

818

716

GPS Console 2

VPS System

722

1000

FIG 8

58

_900_

| Odometer | 902 | | IRU | 904 |

MPS Inter
Communications
Processor
906

908

910

Odometer
Signal

IRU
Signal

**To Vps
Main Processor
1002**

## Fig 9

GPS
Processing
System
⌐700

MPS
Processing
System
⌐900

1018

716

908

910

VPS Main
Processor
⌐1002

Velocity
Data and
Position
Data

1008

VPS I/O
Processor
⌐1004

1016

1000

VPS
Communications
Interface Processor
⌐1020

To Navigation
Sytem 1022

VPS Data
Collector
⌐1014

VPS
Console
⌐1012

FIG 10

**700**

GPS Processing System

**900** MPS

Antenna 702

Pre-amp 704

GPS Receiver 706

GPS Console 1 712

GPS Inter Communications Processor 708

GPS Console 2 722

GPS Processor 710

716

Data Radio 714

720

GPS Data Collection Device 718

Odometer 902

IRU 904

MPS Inter Communications Processor 906

VPS Main Processor 1002

1008

1100

VPS I/O Processor 1004

1016

VPS Communications Interface Processor 1020

To Navigation System 1022

VPS Data Collection Device 1014

VPS Console 1012

FIG 11

_2200_

Segment5 = END OF ROUTE
— 2218

node6 2222          2210          node4          node5

2220          2212          segment3
                            2214          2216

segment2
2224

2208

Sequence 1 = segment5, node 1, segment1, node2,
                segment4, node6, segment5

node2  2206

Sequence 2 = segment5, node 1, segment1, node2,
                segment2, node4, segment3, node 5, segment5

Route 1 = sequence 1, start at node6, traverse in
                the positive direction

Route 2 = sequence 1, start at node6, traverse in
                the negative direction

segment1
2224

Route 3 = sequence 2, start at node1, traverse in
                the positive direction

ROUTE DEFINITIONS

FIG  12

2202

node1

$(K_{m+1},\ S_{m+1})$       $(K_{m+2},\ S_{m+2})$       $(K_{m+3},\ S_{m+3})$

$P_m$

$P_{desired}$

$P_{m+1}$

2806

$P_{m+2}$

2808

$P_{m+3}$

2810

2802

2804

2814

2816

$(K^*_{m+2},\ S^*_{m+2})$

2812

$P_{actual}$   $(U^*_{m+1},\ S^*_{m+1})$

2800

FIG. 13

EP 0 679 974 B1

Current Posture Pointer

3002

Direction of
Pointer
Movement
(Vehicle Movement)

Specified Postures
(Used Postures)

3004

Open Buffer Space
(Used Postures)

3008.

Safety Margin Postures

3006

Where Newly
Generated
Postures are
Placed

3010

3000

3000

FIG. 14

$$\boxed{\text{F I G}} \quad 15$$

**FIG** 16

$3200$

$P_{g,l}$ : reference postures at every unit distance

$P_{d,k}$ : desired postures at the end of every planning time interval

$P_{a,k}$ : sensed vehicle posture

$\widetilde{P}_{a,k+1}$ : expected vehicle postures

$\phi_{k+1}$ : planned steering angle between $\widetilde{P}_{a,k}$ and $P_{a,k+1}$

$$X_a = \text{Easting}$$
$$Y_a = \text{Northing}$$
$$P_a = [X_a, Y_a] \underline{\qquad} 3322$$
$$\text{Posture} = [X_a, Y_a, \theta_a, C_0, V_a, S]$$

3314

$$X_a = \text{Easting}$$

actual heading

3320  3302  $b_a$ 3322

3300  3318

$P_a$  desired heading = $\theta_a$

$P_d$ 3306

3308

$e_o$ 3320  $P_L$

3304

S  $P_o$

L

given path  3310

3312

$\overline{R}$

$C_a = \frac{1}{R} = \text{curvature}$

3316

FIG 17

EP 0 679 974 B1

$$\eth = \frac{1}{r_p} - \frac{1}{r_a}$$

$\eth$ = Curvature Error
3404

FIG 18

FIG. 19

FIG 20

# Navigator Data Flow Summary

The purpose of this summary is to list all of the data flows defined in the Navigator Architecture. Where the flow is defined, whether it is control or data, how it is used and what it is made up of is listed in this summary. A list of abreviations used in this list is included at the end of the list.

| Data Flow | Title (DFD diagram) | Ctrl/ Data | Flow Direction |
|---|---|---|---|
| 502 | Host Cmds and Queries (NI(2)) = {follow path n I set scan speed I set speed limit I start tracking I restart tracking I shutdown} | C | Host - > NI |
| 504 | Replies to Host (NI(2)) = {navigator status summary I VPS Packet I Exception Condition n I ACK I Nack I Invalid command/query } | D | NI - > Host |
| 3604 | Supervisor Instr. (NI(2)) = {FOLLOW_PATH n I SPEED_LIMIT I START_TRACKING I RESTART_TRACKING ISHUTDOWN} | C | NI - >TC |
| 3658 | Navigator Status (NI(2)) = {21 + 37 + 69 + 71 + 84} | D | /Nav Status/ - > NI |
| 432 | Position Data (Context (0)) = {VPS packet} | D | VPS - > PE |
| 3702 | CK Status (OD(2)) = {RUNNING I WAINTING I SLOW I STOP} | C | CC - >/NavStatus/ |
| 3704 | Obs. det. Instr. (ALL(1)) = {38 + 39 + 42} | C | SUPER - > OD |
| 416 | Scanner Data (CONTEXT(0)) | D | Scanner - > SIO |
| 3638 | Safe_Dis (OD(2)) | D | CC - > /Safe_Dis/ - > SP |
| 3636 | Min (MaxSpeeds) (VC (2)) = min { 18 & 25 & 29 } (not implemented) | D | /MaxSpeed/ - > SP |
| 3628 | Path Man Inst. (PM (2)) { INIT_TASK I START_TASK I STOP -TASK } | C | TC - > PM |

FIG .21A

| Data Flow | Title (DFD diagram) | Ctrl/ Data | Flow Direction |
|---|---|---|---|
| 3614 | Vehicle Control (VC(2)) = ( ACK I NACK ) | C | SP - > TC |
| 3612 | Veh. Ctrl. Instr. (VC(2)) = ( INIT_TASK I START_TASK I stop _TASK I STOP_VEH ) | C | TC - > SP |
| 3650 | Position Est. Instr. (PE(2)) = (INIT-TASK I START_TASK I STOP_TASK ) | C | TC - > PE |
| 3560 | Vehicle Path (PM(2)) = ( n Path Postures ) | D | PM - >/Path Buf/ |
| 3612 | Exception Veh. Cmd (VC(2)) = ( STOP_VEH ) | C | EC - > SP |
| 3644 | Speed Limit (Path Manager) (PM(2)) | D | PM - >/MaxSpeed/ |
| 432 | VPS Control (PE(2)) (not implemented) | C | PE - > VPS |
| 416 | Scanner Ctrl (OD(2)) = (Scanner Motor Amp instructions) (not implemented) | C | SC - > Scanner |
| 4102 | Obs det Status (ALL(1)) = (6+85+86) | D | OD - >/NavStatus/ |
| 420 | Vehicle Commands (VC(2)) | C | SP - > Vehicle |
| 3622 | Path Data (PM(2)) = ( n Path Postures) | D | /Path Store/ - > PM |
| 3642 | Valid VPS Packet (PE(2)) = (VPS data) | D | PE - > /Pos Buff/ |
| 3654 | Speed Limit (Task Ctrl) (TC(2)) | D | TC - > /MaxSpeed/ |

FIG 21B

EP 0 679 974 B1

| Data Flow | Title (DFD diagram) | Ctrl/ Data | Flow Direction |
|---|---|---|---|
| 3612 | Supervisor Resp. (ALL(1)) = (87 + 61) | C | SUPER -> NI |
| 3626 | Path Manager Resp. (PM(2)) = { ACK I NACK } | C | PM -> TC |
| 4104 | Speed Limit (Obs. Det.) (OD(2)) | D | CC ->/MaxSpeed/ |
| 3648 | PE Response (PE(2)) = { ACK I NACK } | C | PE -> TC |
| 3606 | Obs. Det. Resp. (ALL(1)) = { 40 + 41 + 43 } | C | OD -> SUPER |
| 3706 | Scan Done (OD(2)) = { SDAT_AVAILABLE } | C | SIO-> CC |
| 3616 | Veh. Ctrl. Status (VC(2)) = { WAITING I RUNNING } | D | SP->/NavStatus/ |
| 3616 | Veh. Ctrl. Status (VC(2)) = { WAITING I RUNNING } | D | SP->/NavStatus/ |
| 3708 | Clear Chk Instr. (OD(2)) = { START_TASK I INIT_TASK I STOP_TASK } | C | TC-> CC |
| 3710 | Scan Ctrl Instr. (OD(2)) = { START_TASK I INIT_TASK I STOP_TASK } | C | TC -> SC |
| 3712 | Scan Ctrl Resp. (OD(2)) = { ACK I NACK } (not implemented) | C | SC -> TC |
| 3714 | Clearance Chk. Resp. (OD(2)) | C | CC -> TC |
| 2716 | Scan I/O Instr. (OD(2)) (not implemented yet) | C | TC -> SIO |
| 3718 | Scan I/O Resp. (OD(2)) = { ACK I NACK } | | |
| 3720 | Tagged Scans (OD(2)) = { 8 + Scan Number } | D | SIO -> /Scan Buf/ |

FIG 21C

73

| Data Flow | Title (DFD diagram) | Ctrl/ Data | Flow Direction |
|---|---|---|---|
| 3614 | Tracking Exception (VC(2)) = {VEH_OFF_PATH I PARAM_OO_BOUNDS I PDAT_NEXIST I SDAT_NEXIST I PBUF_EMPTY I PBUFF_INSUFFICIENT I VEH_TOO_FAST I TRACK_HEAD_ERR I VEH_NOT_CONN I VPS_NOT_READY I VPS_NOT_REC I SKIPPED_SCAN I PBUF_EMPTY} | C | SP -> EC |
| 3722 | Collision Avoid. Except. (OD(2)) = {BAD_ANGLE I PDAT_NEXIST I SDAT_NEXIST I PBUFF_INSUFFICIENT I VEH_OFF_PATH I VEH_TOO_FAST I TRACK_HEAD_ERR} | C | CC -> EC |
| 3724 | Obstacle Det Except (ALL(1)) = {52+56+57} | C | OD -> SUPER |
| 3726 | Scan Ctrl Except (OD(2)) = {LASER_FAULT} (not implemented) | C | SC -> EC |
| 3728 | Scan I/O Exception (OD(2)) = {LASER_FAULT} | C | SIO -> EC |
| 3730 | Exceptions (EC(2)) = {51+52+53+57+127+130} | C | EC -> NI |
| 3732 | PE Status (PE(2)) = {WAITING I RUNNING} | D | PE ->/NavStatus/ |
| 3618 | PM Status (PM(2)) = {WAITING I RUNNING} | D | PM ->/NavStatus/ |
| 3662 | Supervisor Status (TC(2)) = {WAITING I RUNNING} | D | TC ->/NavStatus/ |
| 3734 | Scan I/O Status (OD(2)) = {WAITING I RUNNING} | D | SIO ->/NavStatus/ |
| 3736 | Scan Ctrl Status (OD(2)) = {WAITING I RUNNING} | D | SC ->/NavStatus/ |
| 3732 | Supervisor Status (TC(2)) = {ACK I NACK} | C | TC ->NI |
| 3636 | PM Exception (PM(2)) | C | PM ->EC |

FIG 21D

404

:0-30 degrees

3810

3800A

102

# Fig 38A

3804

Total Vertical Field of View

102

3810

4002

Stopping
Distance

Dist Trav. In 1
Scan Interval

38B

3800B

Boundary Edges, or
Road edges projected
onto the image plane
⟍ 3902

3910 ⟍
—Column—

first scanline after
Stopping Distance
⟍ 3904

ROW

3908

part of the scanline
converted into height
⟍ 3906

Image Plane

⟍ 3901

3900

FIG 22

4000

102
4008
4006
4002
4006
4002
4002
4006
4006
4010
4004
4012

Fig 23

4100

Navigator Status 3608

Path Store 3620

3618

3622

Path Manage-ment

3624

3644

3660

3626

3626

Supervision 3810

3654

3682

Maxspeed 3632

Safe Distance 3634

Path Buffer 3630

3628

Supervision

3646

3642

Navigator Status 3608

3606

3804

3658

Position Buffer 3640

3648

3648

3650

Navigator Interface 3602

4102

4104

Obstacle Detection

410

3642

Position Estimation 3652

3656

504

Host 186

186

Scanner 404

Navigator Status 3608

434

434

VPS 1000

Fig. 24

4300

Commands From Navigator  → 4316

4318 ← Commands From Remote Control Panel

Vehicle Manager
4302

4314

| Speed Control | Steering Control | Auxiliary Control | Monitor |
| 4304 | 4306 | 4308 | 4310 |

Shutdown Circuits
4312

To Vehicle 102

To Vehicle 102

To Vehicle 102

25

start

"panic" buttons, or
severe fault, or
manual steering, or
manual brakes, or
controller disabled

_____

stop vehicle &
disable controller

"panic" buttons, or
severe fault, or
manual steering, or
manual brakes, or
controller disabled

_____

stop vehicle &
disable controller

```
                    Manual
                              ⌐4402
```

4400

"panic" buttons, or
severe fault, or
manual steering, or
manual brakes, or
controller disabled

_____

stop vehicle &
disable controller

park brake on, and
cane in neutral, and
controller enable

_____

stop vehicle &
disable AUTO

```
                    Ready
                              ⌐4404
```

park brake off, or
cane in gear, or
poor data link or
TELE release

_____

stop vehicle

vehicle stopped, and
cane in neutral, and
park brake on, and
TELE request

_____

tele-operation

park brake off, or
cane in gear, or
AUTO disabled, or
TELE request, or
"stop" directive, or
last directive
completed

_____

vehicle stopped, and
cane in neutral, and
park brake on, and
AUTO enabled

```
        Tele
              ⌐4406
```

autonomous operation

stop vehicle &
disable AUTO

```
                    Auto
                              ⌐4408
```

Key:

```
        state 1
```
condition
_____
action

```
        state 2
```

FIG 26

80

4500

ANTENNA

4504

310

TELE-RADIO

4502

4504

4502

HORN

BED

TRUCK
ID

READY TELE AUTO

THROTTLE

STEERING

410

CONTROL PANEL

Fig 27

**FIG. 28**

4600

4618

4622 engine speed

actual gear

vehicle speed 4624

4608

4606

Wheels

4604

4612 Torque Conv.

Trans.

Final Drive

Brakes

Engine

Speed Control ← desired speed

4614

4610

Ground

4304

Engine Governor

Production Transmission Control

4626

4616

throttle pneumatic pressure

maximum transmission gear

brake system pneumatic pressure

4620

EP 0 679 974 B1

FIG 29

SUPPLY

from Control

VENT

from Control

4808

4810

4812

4814

4800

4816

4806

to Control

4802

4804

to Engine Governor

F I G 30

4900

4902

4906

4904

4908

4910

4918

HMU - with
switch to
detect
off-center
position

4920

4914

4916

FIG 31

Supply          5014

5000

5012

To
Shutdown        Circuits

Vent

Manual
Park
Brake
Release

5010

from
Control

5016

5006

5008

to
Vehicle
Manager

5002

5004

to Park Brake Release
(Air Pressure Releases
Brake)

FIG 32

$$\text{ø} = \tan^{-1}(Z/r)$$

FIG 33

5100

5200

5202 Brake Press

5204 Emerg Press

5206 Steer Panic

5208 Panic Button

+ 24V

5210

"Enable" Button

5220 — Shutdown Control

Shutdown Signals from AMT Controllers

Logic

Driver

+ 24V

Shutdown Relay

5212

Status to AMT Vehicle Manager

4312

To Actuator Power on All AMT Controls

XMSN Cane Relay

Beacon

5216

5214

FIG 34

# Fig 35

**5300**

**186** Host

5330

get_directives
ID: 8 PR:10

EXEC QUEUE
new route,
change speed

5320

messages

Msg_Queue

msg_to_host
ID: 2 PR:10

5318

report stat,
message to host,
invalid direc

Msg_to_
Host_Queue

Messages

MAC II 5304

EXEC QUEUE
off course,
end of route,
stopped

tracker
ID: 4 PR:10

5308

Tracker_Queue

new speed factor,
norm/emerg stop,
(dis) engage,
end of route

102

VEH

5326

monitor_veh_status
ID: 3 PR: 10

5308

EXEC QUEUE
vehicle (not) responding
vehicle checksum err
mode (A, M, T, R)

Target
5302

RS232.9.5

ICPU

5332

VPS_Position_Queue

vps_position
ID: 9 PR: 9

5322

align

main (exec)
ID: 0 PR:10

5316

scan (dis)engage

VPS
1000

RS422.38.4

ICC2.1

EXEC QUEUE
position ready
timeout err,
checksum err

Exec_Queue

5328

change speed, new
route, position align

EXEC QUEUE
end of route,
posture ready

VPS_Position_Queue

5334

(dis)engage

console_parser
ID: 10 PR:11

5314

scan (dis)engage

EXEC QUEUE
scan ready
scan all clear

404

vps_posture
ID: 6 PR: 10

5324

Display_Queue

console
ID: 11 PR:11

5312

scanner
ID: 7 PR: 10

5310

Scanner

5300

CPU STD16
User Terminal

5302

LEGEND Queue Task External Device

EP 0 679 974 B1

**LEGEND:**

| | |
|---|---|
| ▭ | Unprotected Memory |
| ▭ | Semaphore Protected Memory |
| ▱ | Task |
| Write | |
| Read | |

Fig 36